# EUROPEAN PATENT SPECIFICATION

(11) **EP 3 804 021 B1**
(45) Date of publication and mention of the grant of the patent: **21.10.2026**
(21) Application number: 19737601.5
(22) Date of filing: 06.06.2019
(51) Int. Cl.: H01M 10/0562, H01M 10/052, H01M 10/0585, H01M 4/62, H01M 4/38

(54) **SOLID-STATE BATTERY**
FESTKÖRPERBATTERIE
BATTERIE À L'ÉTAT SOLIDE

(30) Priority: 06.06.2018 US 201862681576 P
(43) Date of publication of application: 14.04.2021
(73) Proprietor: QuantumScape Battery, Inc., San Jose, CA 95110 (US)
(72) Inventor: CHAO, Cheng-Chieh, San Jose, California 95110 (US); DEKMEZIAN, Christopher, San Jose, California 95110 (US); LI, Shuang, San Jose, California 95110 (US)
(74) Representative: Petty, Catrin Helen
(86) International application number: PCT/US2019/035867
(87) International publication number: WO 2019/236904

(56) References cited:
- EP-A1- 2 037 527
- EP-A1- 2 555 308
- EP-A1- 3 439 096
- WO-A1-2017/171187
- WO-A1-2018/075972
- JP-A- 2016 134 302
- S. SUZUKI ET AL: "Development of complex hydride-based all-solid-state lithium ion battery applying low melting point electrolyte", JOURNAL OF POWER SOURCES, vol. 359, 24 May 2017 (2017-05-24), pages 97 - 103, XP085069994, ISSN: 0378-7753, DOI: 10.1016/J.JPOWSOUR.2017.05.019

## Description

### FIELD

The present disclosure concerns solid-state rechargeable batteries, which are also known as secondary batteries.

### BACKGROUND

Batteries are referred to as solid-state batteries when they include a solid-state electrolyte separator between the positive and negative electrodes of the battery cell. The solid-state electrolyte lacks flammable organic solvents and is therefore attractive for safety reasons.

Solid-state batteries operate within comparatively wider temperature, voltage, and pressure ranges than liquid electrolyte-based batteries do. Solid-state batteries may also include solid-state positive and negative electrodes. Solid-state batteries may include, for example, a metallic lithium (Li) negative electrode. Li metal negative electrodes maximize the energy density in a Li⁺ion battery because they maximize the positive and negative electrode voltage differential. Solid-state rechargeable batteries are predicted to be safer (*e.g.,* less flammable) and have higher energy and power densities than liquid electrolyte-based batteries currently commercially available. However, a series of unmet challenges remain, which has prevented the realization of commercially viable solid-state batteries.

Some solid-state battery researchers have employed a single, monolithic single ion conductor to act as the electrolyte separator between the positive and negative electrodes. There are many problems associated with this approach. For example, to date no single ion conducting solid-state electrolyte has both sufficiently high ionic conductivity and also sufficiently high mechanical strength, while further being commercially affordable to process, light enough for certain applications, and also stable in the voltage range of 0-5 V vs. Li. Solid-state batteries to date inevitably encounter design tradeoffs in order to address each of these problems.

Some researchers have attempted to include more than one type of solid-state electrolyte in solid-state electrochemical cells. For example, some researchers prepared an oxide-sulfide composite of a lithium superionic conductor. *See* J. Mater. Chem. A, 2014,2, 4111-4116 DOI: 10.1039/C3TA15223E, which reports an oxide-sulfide composite that included a mixture of lithium-stuffed garnet powder with lithium phosphorous sulfide (LPS) powder. *See* also http://ma.ecsdl.org/content/MA2016-01/2/264.abstract, which sets forth results of an electrochemical cell having a metallic Li anode, a solid oxide electrolyte (LLZO), and a composite cathode consisting of an 75Li₂S:25P₂S₅ sulfide electrolyte and TiS₂. *See* also Y. Kato, et al. DOI: 10.1038/NENERGY.2016.30, which reports cycling data for an electrochemical cell having LiNbO₃-coated LiCoO₂ positive electrode active materials and certain sulfide solid-state electrolytes (Li_{9.6}P₃S₁₂, Li₁₀GeP₂Si₂, Li_{9.54}Si_{1.74}P_{1.44}Si_{1.7}Cl_{0.3}). *See* also Suzuki, et al., Journal of Power Sources 359 (2017) 97-103, which sets forth a solid-state cell. These reported results suffer from a variety of deficiencies, including low capacity and capacity fade over time.

JP2016 134302 A describes an all-solid-state lithium secondary battery with a positive electrode layer comprising lithium cobalt oxide (LiCoO₂) particles which are coated by a buffer film of lithium niobate (LiNbO₃), and a sulfide electrolyte.

EP 2 555 308 A1 refers to an all-solid lithium battery comprising a cathode layer composed of a mixture of a lithium-intercalation compound and a sulfide-based solid electrolyte, wherein a buffer layer made of an electron-insulating material is formed on the surface of said compound.

WO 2017/171187 A1 discloses a composite solid-state electrolyte for lithium secondary battery, having a multi-layer structure, said composite electrolyte comprising a first electrolyte layer positioned toward a cathode part, and a second electrolyte layer positioned toward an anode part, wherein each of the first electrolyte layer and the second electrolyte layer comprises a polymer base and ceramic particles, and the first electrolyte layer and the second electrolyte layer are formed of different materials.

EP 2 037 527 A1 describes a lithium battery including a substrate, a positive electrode layer, a negative electrode layer, and a sulfide solid electrolyte layer disposed between the positive electrode layer and the negative electrode layer, the positive electrode layer, the negative electrode layer, and the sulfide solid electrolyte layer being provided on the substrate, wherein a buffer layer made of a lithium-ion conductive oxide is provided between the positive electrode layer and the sulfide solid electrolyte layer.

Because a series of unmet challenges remain, solutions to the aforementioned problems as well as others in the relevant filed are needed. The instant disclosure provides compositions, processes, and methods for overcoming these and other challenges and problems.

### SUMMARY

The subject-matter of the present invention is defined in the appended claims.

In one embodiment, set forth herein is a solid-state electrochemical cell (SSEC), which includes (a) a positive electrode layer comprising an active material and a sulfide catholyte; (b) a single ion conducting, solid-state buffer; (c) a borohydride bonding layer; and (d) a lithium-stuffed garnet layer. The buffer is present as a layer in contact with the positive electrode layer, or buffer is mixed within the positive electrode layer and the buffer is present as a layer in contact with the positive electrode layer. The borohydride bonding layer is between and in contact with the lithium-stuffed garnet layer and the buffer layer in contact with the positive electrode.

In a second embodiment, set forth herein is a method of making an electrochemical cell, in which the method includes the following steps: (a) providing a slurry comprising an active material, a catholyte, and a solvent; (b) depositing the slurry onto a current collector; (c) drying the slurry; (e) providing a second slurry comprising a single ion conducting, solid-state buffer; (f) depositing the second slurry onto a substrate; (g) drying the deposited second slurry to form a buffer layer; (h) transferring the buffer layer onto the first slurry, once dried, to form a stack; (i) applying pressure and heat to the stack; (j) providing a solid-state separator; (k) depositing a borohydride layer onto the solid-state separator; (l) combining the stack with the solid-state separator having a borohydride layer thereupon to form an electrochemical cell stack; and (m) applying pressure and heat to the electrochemical cell stack.

In one aspect, provided herein is a solid-state electrochemical stack including: (a) a positive electrode layer including a positive electrode active material, a binder, and a sulfide catholyte, wherein the positive electrode layer has a porosity less than 15% by volume (v/v); (b) a buffer layer including a sulfide electrolyte in contact with the positive electrode layer, wherein the buffer layer has a porosity less than 15% v/v; and (c) a separator layer including a member selected from the group consisting of lithium-stuffed garnet and LPSX, wherein the separator layer has a porosity less than 10% v/v; and wherein the buffer layer is between the positive electrode layer and the separator layer.

In another aspect, provided is a process for producing a solid-state electrochemical stack including: (a) casting a first slurry including a sulfide solid electrolyte powder onto a first substrate to form a first layer; (b) casting a second slurry including a sulfide solid electrolyte powder and a positive electrode active powder onto a second substrate to form a second layer; and (c) calendering the first layer and the second layer, wherein the first layer and second layer are in direct contact with each other. In another aspect, provided herein is a dual layer stack comprising: (a) a positive electrode layer comprising an active material and a sulfide catholyte; and (b) a single ion conducting, solid-state buffer; wherein the buffer is mixed within the positive electrode layer, or is a layer in contact with the positive electrode layer, or both.

### BRIEF DESCRIPTIONS OF THE DRAWINGS

**FIG.** 1 shows a schematic illustration of an example electrochemical cell.
**FIG.** 2 shows a cross-section scanning electron microscopy image (cross-section prepare by focused ion beam) of the solid-state cathode (SSC), buffer layer, bonding layer, garnet film in an electrochemical cell made in Example 1. The scale bar in FIG. 2 is 50 µm. The imaging conditions were WD 4.4 mm, HV 5.00kV, HFW, 207 µm, mag 2000 x, det TLD, tilt 52 °, BSE mode.
**FIG.** 3 is a plot of voltage as a function of active mass-specific capacity (mAh/g) over 50 cycles, as described in Example 2.
**FIG.** 4 is a plot of active mass-specific discharge capacity (mAh/g) as a function of cycle index as described in Example 2.
**FIG.** 5 shows a plot of ASR as a function of rest voltage, as described in Example 2.
**FIG.** 6 shows a schematic illustration of an example electrochemical cell comprising a separator, a buffer layer, and a positive electrode layer.
**FIG.** 7 shows a schematic illustration of an example electrochemical cell comprising a separator, a bonding layer, and a positive electrode layer.

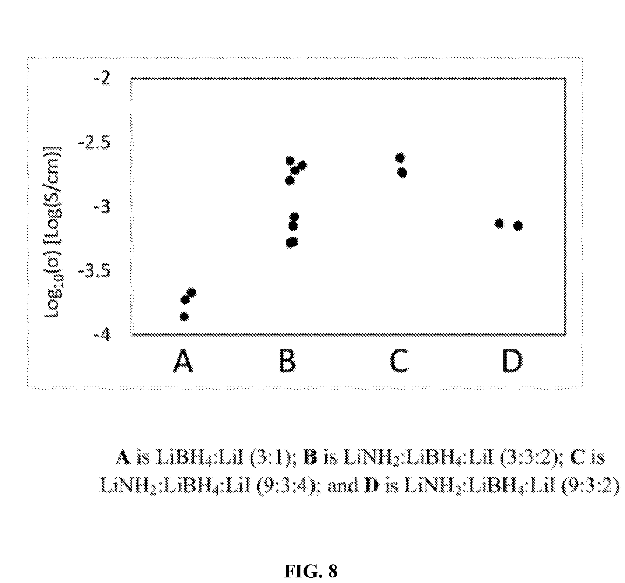

**FIG.** 8 shows a plot of lithium ion conductivity (Log(S/cm)) at 60 °C for a series of LBHI compositions and LBHI compositions doped with amide: (A) LiBH₄:LiI (3:1), (B) LiNH₂:LiBH₄:LiI (3:3:2), (C) LiNH₂:LiBH₄:LiI (9:3:4), and (D) LiNH₂:LiBH₄:LiI (9:3:2) are shown.
**FIG.** 9 shows cycling data for solid-state electrochemical cells which included lithium-stuffed garnet electrolyte film bonded to a solid-state cathode film with LPSI according to Example 13.

### DETAILED DESCRIPTION

### • General

In some examples, the instant disclosure sets forth electrochemical cells that are observed to demonstrate an ASR that is less than 50 Ω-cm² at room temperature. The electrochemical cells disclosed herein include an oxide electrolyte separator and a sulfide electrolyte separator. The electrochemical cells herein include a sulfide-oxide solid-state electrolyte interface. A bonding layer comprising a borohydride, is used to bond an oxide electrolyte separator and a sulfide electrolyte separator. The oxide electrolyte separator is kinetically stable against metallic Li and has a suitable mechanical strength for conducting a high current density of Li⁺ ions. The sulfide catholyte in the solid-state cathode and/or the sulfide buffer layer adjacent to the solid-state cathode provides a conductive pathway for lithium ions, which is suitable for use with a high active material mass loading in the positive electrode. In some examples the sulfide catholyte is kinetically stable to the coated active material (e.g. LZO coated NCA or LZO coated NMC). In some examples the sulfide catholyte is kinetically stable to the coated active material (e.g., LZO coated NCA) in the voltage window 2.7-4.2V vs. Li. The borohydride bonding layer bonds the oxide electrolyte separator and the sulfide (buffer) electrolyte separator and also provides an ion conduction pathway between the two electrolyte separators.

The electrochemical cells disclosed herein, in certain examples, include an oxide solid-state separator in contact with the negative electrode side of an electrochemical cell and a sulfide solid-state separator in contact with the positive electrode side of the electrochemical cell. In some examples, both the sulfide and oxide solid-state separator have high lithium ion conductivity, e.g., greater than 1*10⁻³ S/cm². In between the oxide solid-state separator and the sulfide solid-state separator, in some examples, is a bonding layer made of a borohydride. On the side of the oxide solid-state separator opposite the borohydride bonding layer, in some examples, is a lithium negative metal electrode. On the side of the sulfide solid-state separator opposite the borohydride bonding layer, in some examples, is a positive electrode.

### • Definitions

As used herein, the term "about" when qualifying a number, e.g., about 15 % w/w, refers to the number qualified and optionally the numbers included in a range about that qualified number that includes ± 10% of the number. For example, about 15 % w/w includes 15 % w/w as well as 13.5 % w/w, 14 % w/w, 14.5 % w/w, 15.5 % w/w, 16 % w/w, or 16.5 % w/w. For example, "about 75 °C," includes 75 °C as well 68 °C, 69 °C, 70 °C, 71 °C, 72 °C, 73°C, 74 °C, 75°C, 76 °C, 77 °C, 78 °C, 79 °C, 80°C, 81 °C, 82 °C, or 83 °C.

As used herein, the phrase "active material," refers to a material that intercalates, or converts with, lithium in a reversible reaction such that the active material is suitable for use in a rechargeable battery. Active materials may include intercalation materials such as NCA or NMC. Active materials may include conversion chemistry materials such as FeF₃. For example, active materials may include, but are not limited to, any active material set forth in US20160211517A1, which published July 21, 2016, and is titled LITHIUM RICH NICKEL MANGANESE COBALT OXIDE.

As used herein, the term "amorphous," refers to a material that is not crystalline or that does not contain a majority crystalline phase. Amorphous refers to a material that does not evidence a crystalline property, for example, well-defined x-ray diffraction peaks as measured by x-ray diffraction. An amorphous material is at least primarily amorphous and characterized as having more amorphous components than crystalline components. Substantially amorphous refers to a material that does not include well defined x-ray diffraction peaks or that is characterized by an x-ray diffraction pattern that includes broad reflections that are recognized by a person having ordinary skill in the art as having the majority constituent component phase as an amorphous phase. A material that is substantially amorphous may have nano-sized domains of crystallinity, but which are still characterized by an x-ray diffraction pattern to be primarily in an amorphous phase. In a substantially amorphous material, transmission electron microscopy (TEM) selected area diffraction pattern (SADP) may evidence regions of crystallinity, but would also evidence a majority of the volume of the material as amorphous.

As used herein, the term "semiamorphous" or "semi-crystalline" refers to a composition having both crystalline and amorphous domains. A semi-crystalline material includes both nanocrystalline and/or microcrystalline components in addition to amorphous components. A semi-crystalline material is a material that is partially crystallized or is a material that includes some crystalline bulk and some amorphous bulk. For example, a material heated to its crystallization temperature, but subsequently cooled before the entirety of the material is able to crystallize, completely, is referred to herein as semi-crystalline material. As used herein, a semi-crystalline material can be characterized by an XRD powder pattern in which the primary peak of highest intensity has a full width at half maximum of at least 1° (2Θ), or at least 2° (2Θ), or at least 3° (2Θ).

As used herein, the term "anolyte," refers to an ionically conductive material that is mixed with, or layered upon, or laminated to, an anode material or anode current collector.

As used herein the phrase "applying a pressure," refers to a process whereby an external device, e.g., a calender, induces a pressure in another material.

As used herein, the phrase "at least one member selected from the group," includes a single member from the group, more than one member from the group, or a combination of members from the group. At least one member selected from the group consisting of A, B, and C includes, for example, A, only, B, only, or C, only, as well as A and B as well as A and C as well as B and C as well as A, B, and C or any other all combinations of A, B, and C.

As used herein "ASR" refers to area-specific resistance. ASR is measured using electrochemical impedance spectroscopy (EIS). EIS can be performed on a Biologic VMP3 instrument or an equivalent thereof. In an ASR measurement, lithium contacts are deposited on two sides of a sample. An AC voltage of 25mV rms is applied across a frequency of 300kHz-0.1mHz while the current is measured. EIS partitions the ASR into the bulk contribution and the interfacial ASR contribution, by resolving two semicircles in a Nyquist plot.

As used herein the phrase "borohydride bonding layer" refers to a layer which includes a borohydride compound and which adheres a lithium-stuffed garnet layer to a sulfide electrolyte layer or sulfide including buffer. Non-limiting examples of the borohydride include, but are not limited to, 3LiBH₄·2LiI·3LiNH₂ or 3LiBH₄·4LiI·9LiNH₂. The borohydride may be any compound set forth in WO 2018/075972, which published April 26, 2018, and was filed as International PCT Patent Application No. PCT/US2017/057735, and is entitled ELECTROLYTE SEPARATORS INCLUDING LITHIUM BOROHYDRIDE AND COMPOSITE ELECTROLYTE SEPARATORS OF LITHIUM-STUFFED GARNET AND LITHIUM BOROHYDRIDE. The borohydride may be any compound set forth in WO2019078897A1, which published April 25, 2019, and was filed as International PCT Patent Application No. PCT/US2017/057739, filed October 20, 2017, and is entitled BOROHYDRIDE-SULFIDE INTERFACIAL LAYER IN ALL SOLID STATE BATTERY.

As used herein, "binder" refers to a polymer with the capability to increase the adhesion and/or cohesion of an electrode. Suitable binders may include, but are not limited to, PVDF, PVDF-HFP, SBR, and ethylene alpha-olefin copolymer.

As used herein, the term "buffer" refers to a single ion conducting, solid-state electrolyte that is finely mixed within or combined with the positive electrode components or is a layer which is in direct contact with the positive electrode, e.g., an electrolyte layer laminated to the positive electrode layer. Single ion conducting means that the material only conducts one type of ion, *e.g.,* a Li⁺ ion with a transference number of greater than 0.9. Solid-state means that the buffer exists in the solid phase at ambient temperatures and pressures.

As used herein, the phrase "buffer is mixed within the positive electrode layer," means that the buffer material is ground up, *e.g.,* milled, and then mixed with the other positive electrode layer compounds, e.g., active material and conductive carbon, when the positive electrode layer is formed.

As used herein the phrase "casting a film," refers to the process of delivering or transferring a liquid or a slurry into a mold, or onto a substrate, such that the liquid or the slurry forms, or is formed into, a film. Casting may be done via doctor blade, meyer rod, comma coater, gravure coater, microgravure, reverse comma coater, slot die, slip and/or tape casting, and other methods.

As used herein, the phrase "characterized by the formula" refers to a description of a chemical compound by its chemical formula.

As used herein, the phrase "current collector" refers to a component or layer in a secondary battery through which electrons conduct, to or from an electrode in order to complete an external circuit, and which are in direct contact with the electrode to or from which the electrons conduct. In some examples, the current collector is a metal (e.g., Al, Cu, or Ni, steel, alloys thereof, or combinations thereof) layer which is laminated to a positive or negative electrode. In some examples, the current collector is Al. In some examples, the current collector is Cu. In some examples, the current collector is Ni. In some examples, the current collector is steel. In some examples, the current collector is an alloy of Al. In some examples, the current collector is an alloy of Cu. In some examples, the current collector is an alloy of steel. In some examples, the current collector is Al. In some examples, the current collector is coated with carbon. In some examples, the current collector comprises a combination of the above metals. During charging and discharging, electrons move in the opposite direction to the flow of Li ions and pass through the current collector when entering or exiting an electrode.

As used herein, the term "diameter (d₉₀)" refers to the size, in a distribution of sizes, measured by microscopy techniques or other particle size analysis techniques, including, but not limited to, scanning electron microscopy or dynamic light scattering. D₉₀ includes the characteristic dimension, *i.e.,* particle size, at which 90% of the total particle area (for a 2D sampling method like microscopy) or volume (for a 3D sampling method like light scattering) is representative of particles smaller than the recited size. In other words, in a collection of particle sizes, d₉₀ indicates the size at which 90% of the particles in the collection have a size smaller than the recited size. Similarly, the term "diameter (d₅₀)" includes the characteristic dimension at which 50% of the total particle area (or volume) is representative of particles smaller than the recited size. Similarly, the term "diameter (d₁₀)" includes the characteristic dimension at which 10% of the total particle area (or volume) is representative of particles smaller than the recited size. These figures may be calculated on a per-volume or per-area basis. Per-volume basis is assumed if neither is explicitly recited.

As used herein, a "binder" refers to a material that assists in the adhesion of another material. For example, as used herein, polyvinyl butyral is a binder because it is useful for adhering garnet materials. Other binders may include polycarbonates. Other binders may include polyacrylates and polymethacrylates. These examples of binders are not limiting as to the entire scope of binders contemplated here but merely serve as examples. Binders useful in the present disclosure include, but are not limited to, polypropylene (PP), polyethylene, atactic polypropylene (aPP), isotactic polypropylene (iPP), ethylene propylene rubber (EPR), ethylene pentene copolymer (EPC), polyisobutylene (PIB), styrene butadiene rubber (SBR), polyolefins, polyethylene-co-poly-1-octene (PE-co-PO), polyethylene-co-poly(methylene cyclopentane) (PE-co-PMCP), poly(methyl methacrylate) (and other acrylics), acrylic, polyvinylacetacetal resin, polyvinyl butyral resin, PVB, polyvinyl acetal resin, stereoblock polypropylenes, polypropylene polymethylpentene copolymer, polyethylene oxide (PEO), PEO block copolymers, silicone, and the like. In some examples, including any of the foregoing, the binder is a polymer is selected from the group consisting of polyacrylonitrile (PAN), polypropylene, polyethylene, polyethylene oxide (PEO), polymethyl methacrylate (PMMA), polyvinyl chloride (PVC), polyvinyl pyrrolidone (PVP), polyethylene oxide poly(allyl glycidyl ether) PEO-AGE, polyethylene oxide 2-methoxyethoxyethyl glycidyl ether (PEO-MEEGE), polyethylene oxide 2-methoxyethoxyethyl glycidyl poly(allyl glycidyl ether) (PEO-MEEGE-AGE), polysiloxane, polyvinylidene fluoride (PVDF), polyvinylidene fluoride hexafluoropropylene (PVDF-HFP), ethylene propylene (EPR), nitrile rubber (NPR), styrene-butadiene-rubber (SBR), polybutadiene polymer, polybutadiene rubber (PB), polyisobutadiene rubber (PIB), polyolefin, alpha-polyolefin, ethylene alpha-polyolefin, polyisoprene rubber (PI), polychloroprene rubber (CR), acrylonitrile-butadiene rubber (NBR), and polyethyl acrylate (PEA).As used herein, "selected from the group consisting of" refers to a single member from the group, more than one member from the group, or a combination of members from the group. A member selected from the group consisting of A, B, and C includes, for example, A only, B only, or C only, as well as A and B, A and C, B and C, as well as A, B, and C.

As used herein, the term "contact" means direct contact unless specified otherwise. For electrically conductive materials, contact means contact sufficient for electrical conduction to occur between the contacting materials. For ionically conductive materials, contact means contact sufficient for ionic conduction to occur between the contacting materials. Two materials which are in direct contact are positioned without an interleaving layer between the two materials. As used herein, the phrase "electrical contact," refers to contact sufficient for electrical conduction to occur between the contacting materials.

As used herein, the phrase "direct contact," means that two materials are in sufficient physical contact to conduct an electronic or ionic current therebetween, if the materials are electrically or ionically conductive. Direct contact between two materials, one of which is electrically or ionically insulating, means that the two materials share an interface that transmits an applied force or pressure.

As used herein, the phrase "electrical contact" means that two materials are in direct contact and can conduct an electrical current through the point(s) of direct contact.

As used herein, the terms "cathode" and "anode" refer to the electrodes of a battery. During a charge cycle in a Li-secondary battery, Li ions leave the cathode and move through an electrolyte and to the anode. During a charge cycle, electrons leave the cathode and move through an external circuit to the anode. During a discharge cycle in a Li-secondary battery, Li ions migrate towards the cathode through an electrolyte and from the anode. During a discharge cycle, electrons leave the anode and move through an external circuit to the cathode.

As used herein, the phrase "green film" or "green tape" refers to an unsintered tape or film that includes lithium-stuffed garnet or precursors to lithium-stuffed garnet and at least one of a binder, plasticizer, carbon, dispersant, solvent or combinations thereof. As used herein, "green film tape" refers to a roll, continuous layer, or cut portion thereof of casted tape, either dry or not dry, of green film.

As used herein, the phrases "electrochemical cell" or "battery cell" shall mean a single cell including a positive electrode and a negative electrode, which have ionic communication between the two using an electrolyte. In some embodiments, the same battery cell includes multiple positive electrodes and/or multiple negative electrodes enclosed in one container.

As used herein, the phrase "electrochemical device" refers to an energy storage device, such as, but not limited to a Li-secondary battery that operates or produces electricity or an electrical current by an electrochemical reaction, e.g., a conversion chemistry reaction such as 3Li + FeF₃ ↔ 3LiF + Fe.

As used herein, the term "electrolyte," refers to a material that allows ions, *e.g.,* Li⁺, to migrate therethrough, but which does not allow electrons to conduct therethrough. The ionic conductivity is greater than the electronic conductivity by a factor of at least 1000. Electrolytes are useful for electrically insulating the cathode and anode of a secondary battery while allowing ions, *e.g.,* Li⁺, to transmit through the electrolyte. Solid electrolytes, in some examples, rely on ion hopping and/or diffusion through rigid structures. Solid electrolytes may be also referred to as fast ion conductors or super-ionic conductors. In this case, a solid electrolyte layer may be also referred to as a solid electrolyte separator or a solid-state electrolyte separator.

As used herein the phrase "energy storage electrode," refers to, for example, an electrode that is suitable for use in an energy storage device, *e.g.,* a lithium rechargeable battery or Li-secondary battery. As used herein, such an electrode is capable of conducting electrons and Li ions as necessary for the charging and discharging of a rechargeable battery.

As used herein, the phrase "film thickness" refers to the distance, or median measured distance, between the top and bottom faces of a film. As used herein, the term "thickness" when referring to a layer refers to the distance, or median measured distance, between the top and bottom faces of the layer. As used herein, the top and bottom faces refer to the sides of the film having the largest surface area. Scanning electron microscopy is used to measure thickness unless specified otherwise explicitly.

As used herein, "flatness" of a surface refers to the greatest normal distance between the lowest point on a surface and a plane containing the three highest points on the surface, or alternately, the greatest normal distance between the highest point on a surface and a plane containing the three lowest points on the surface. It may be measured with an atomic force microscope (AFM), a high precision optical microscope, or laser interferometry height mapping of a surface.

As used herein, the term "thin film" refers to a film having the components, compositions, or materials described herein where the film has an average thickness dimension of about 10 nm to about 100 µm. In some examples, thin refers to a film that is less than about 1 µm, 10 µm, or 50 µm in thickness.

As used herein, the phrase "lithium interfacial resistance," refers to the interfacial resistance of a material towards the incorporation of Li⁺ ions. A lithium interfacial ASR (ASR_{interface}) is calculated from the interfacial resistance (R_{interface}), by the equation ASR_{interface}=R_{interface}*A/2, where A is the area of the electrodes in contact with the separator and the factor of 2 accounts for 2 interfaces when measured in a symmetric cell and R_{interface}=Rₜₒₜₐₗ-R_{bulk}, wherein Rₜₒₜₐₗ is total resistance and R_{bulk} is bulk resistance.

As used herein, the phrase "lithium-stuffed garnet" refers to oxides that are characterized by a crystal structure related to a garnet crystal structure. Some examples of lithium-stuffed garnets are set forth in U.S. Patent Application Publication No. 2015/0099190, which published April 9, 2015, and was filed October 7, 2014 as 14/509,029. This application describes Li-stuffed garnet solid-state electrolytes used in solid-state lithium rechargeable batteries. These Li-stuffed garnets generally having a composition according to Li_{A}La_{B}M'_{C}M"_{D}Zr_{E}O_{F}, Li_{A}La_{B}M'_{C}M"_{D}Ta_{E}O_{F}, or Li_{A}La_{B}M'_{C}M"_{O}Nb_{E}O_{F}, wherein 4<A<8.5, 1.5<B<4, 0≤C≤2, 0≤D≤2; 0≤E<3, 10<F<13, and M' and M" are each, independently in each instance selected from Ga, Al, Mo, W, Nb, Sb, Ca, Ba, Sr, Ce, Hf, Rb, and Ta, or LiₐLa_{b}Zr_{c}Al_{d}Me"ₑO_{f}, wherein 5<a<8.5; 2<b<4; 0<c≤2.5; 0≤d<2; 0≤e<2, and 10<f<13 and Me" is a metal selected from Ga, Nb, Ta, V, W, Mo, and Sb and as otherwise described in U.S. Patent Application Publication No. 2015/0099190. As used herein, lithium-stuffed garnets, and garnets, generally, include, but are not limited to, Li_{7.0±δ}La₃(Zrₜ₁ + Nbₜ₂ + Taₜ₃)O₁₂ + 0.35Al₂O₃; wherein δ is from 0 to 3 and (t1+t2+t3 = 2) so that the La:(Zr/Nb/Ta) ratio is 3:2. For example, δ is 0, 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, or 3.0. In some examples, the Li-stuffed garnet herein has a composition of Li_{7±δ}Li₃Zr₂O₁₂·xAl₂O₃. In yet another embodiment, the Li-stuffed garnet herein has a composition of Li_{7±δ}Li₃Zr₂O₁₂·0.22Al₂O₃. In yet other examples, the Li-stuffed garnet herein has a composition of Li_{7±δ}Li₃Zr₂O₁₂·0.35Al₂O₃. In certain other examples, the Li-stuffed garnet herein has a composition of Li_{7±δ}Li₃Zr₂O₁₂·0.5Al₂O₃. In another example, the Li-stuffed garnet herein has a composition of Li_{7±δ}Li₃Zr₂O₁₂·0.75Al₂O₃. Also, L-stuffed garnets used herein include, but are not limited to, LiₓLa₃Zr₂O_{F} + yAl₂O₃, wherein x ranges from 5.5 to 9; and y ranges from 0.05 to 1. In these examples, subscripts x, y, and F are selected so that the Li-stuffed garnet is charge neutral. In some examples x is 7 and y is 1.0. In some examples, x is 5 and y is 1.0. In some examples, x is 6 and y is 1.0. In some examples, x is 8 and y is 1.0. In some examples, x is 9 and y is 1.0. In some examples x is 7 and y is 0.35. In some examples, x is 5 and y is 0.35. In some examples, x is 6 and y is 0.35. In some examples, x is 8 and y is 0.35. In some examples, x is 9 and y is 0.35. In some examples x is 7 and y is 0.7. In some examples, x is 5 and y is 0.7. In some examples, x is 6 and y is 0.7. In some examples, x is 8 and y is 0.7. In some examples, x is 9 and y is 0.7. In some examples x is 7 and y is 0.75. In some examples, x is 5 and y is 0.75. In some examples, x is 6 and y is 0.75. In some examples, x is 8 and y is 0.75. In some examples, x is 9 and y is 0.75. In some examples x is 7 and y is 0.8. In some examples, x is 5 and y is 0.8. In some examples, x is 6 and y is 0.8. In some examples, x is 8 and y is 0.8. In some examples, x is 9 and y is 0.8. In some examples x is 7 and y is 0.5. In some examples, x is 5 and y is 0.5. In some examples, x is 6 and y is 0.5. In some examples, x is 8 and y is 0.5. In some examples, x is 9 and y is 0.5. In some examples x is 7 and y is 0.4. In some examples, x is 5 and y is 0.4. In some examples, x is 6 and y is 0.4. In some examples, x is 8 and y is 0.4. In some examples, x is 9 and y is 0.4. In some examples x is 7 and y is 0.3. In some examples, x is 5 and y is 0.3. In some examples, x is 6 and y is 0.3. In some examples, x is 8 and y is 0.3. In some examples, x is 9 and y is 0.3. In some examples x is 7 and y is 0.22. In some examples, x is 5 and y is 0.22. In some examples, x is 6 and y is 0.22. In some examples, x is 8 and y is 0.22. In some examples, x is 9 and y is 0.22. Also, Li-stuffed garnets as used herein include, but are not limited to, LiₓLa₃Zr₂O₁₂ + yAl₂O₃, wherein y is from 0 to 1 and includes 0 and 1. In one embodiment, the Li-stuffed garnet herein has a composition of Li₇Li₃Zr₂O₁₂.

As used herein, garnet or Li-stuffed garnet does not include Y AG-garnets *(i.e.,* yttrium aluminum garnets or, e.g., Y₃Al₅O₁₂). As used herein, garnet does not include silicate-based garnets such as pyrope, almandine, spessartine grossular, hessonite, or cinnamon-stone, tsavorite, uvarovite and andradite and the solid solutions pyrope-almandine-spessarite and uvarovite-grossular-andradite. Garnets herein do not include nesosilicates having the general formula X₃Y₂(SiO₄)₃ wherein X is Ca, Mg, Fe, and, or, Mn; and Y is Al, Fe, and, or, Cr.

As used herein, the phrases "garnet precursor chemicals," "chemical precursor to a gamet-type electrolyte," "precursors to garnet" and "garnet precursor materials" refer to chemicals which react to form a lithium-stuffed garnet material described herein. These chemical precursors include, but are not limited to lithium hydroxide (e.g., LiOH), lithium oxide (*e.g.*₂O), lithium carbonate (*e.g.,* LiCO₃), zirconium oxide(e.g., ZrO₂), lanthanum oxide *(e.g.,* La₂O₃), lanthanum hydroxide (*e.g.,* La(OH)₃), aluminum oxide (*e.g.,* Al₂O₃), aluminum hydroxide (e.g., Al(OH)₃), AlOOH, aluminum (e.g., Al), Boehmite, gibbsite, corundum, aluminum nitrate (*e.g.,* Al(NO₃)₃), aluminum nitrate nonahydrate, niobium oxide (*e.g.,* Nb₂O₅), gallium oxide (Ga₂O₃), and tantalum oxide (e.g., Ta₂O₅). Other precursors to garnet materials may be suitable for use with the methods set forth herein.

As used herein the phrase "garnet-type electrolyte," refers to an electrolyte that includes a lithium-stuffed garnet material described herein as a Li⁺ ion conductor. The advantages of Li-stuffed garnet solid-state electrolytes are many, including as a substitution for liquid, flammable electrolytes commonly used in lithium rechargeable batteries.

As used herein, the term "LIRAP" refers to a lithium rich antiperovskite and is used synonymously with "LOC" or "Li₃OCl". The composition of LIRAP is aLi₂O+bLiX+cLiOH+dAl₂O₃ where X=Cl, Br, and/or I, a/b=.7-9, c/a=0.01-1, d/a=0.001-0.1.

As used herein, the term "LXPS" or "LPS+X" refers to a lithium conducting electrolyte comprising Li, P, S, and X, where X = Cl, Br, and/or I. For example, "LSPI" refers to a lithium conducting electrolyte comprising Li, P, S, and I. More generally, it is understood to include aLi₂S+bP₂S_{y}+cLiX where X = Cl, Br, and/or I and where y=3-5 and where alb=2.5-4.5 and where (a+b)/c=0.5-15.

As used herein, the term "LBHPS" refers to a lithium conducting electrolyte having, Li, B, H, P, and S, for example, A(LiBH₄)(1-A)(P₂S₅) wherein 0.05≤A≤0.95.

As used herein, "LSS" refers to lithium silicon sulfide which can be described as Li₂S-SiS₂, Li-SiS₂, Li-S-Si, and/or a catholyte consisting essentially of Li, S, and Si. LSS refers to an electrolyte material characterized by the formula LiₓSi_{y}S_{z} where 0.33≤x≤0.5, 0.1≤y≤0.2, 0.4≤z≤0.55, and it may include up to 10 atomic % oxygen. LSS also refers to an electrolyte material comprising Li, Si, and S. In some examples, LSS is a mixture of Li₂S and SiS₂. In some examples, the molar ratio of Li₂S:SiS₂ is 90:10, 85:15, 80:20, 75:25, 70:30, 2:1, 65:35, 60:40, 55:45, or 50:50. LSS may be doped with compounds such as LiₓPO_{y}, LiₓBO_{y}, Li₄SiO₄, Li₃MO₄, Li₃MO₃, PSₓ, and/or lithium halides such as, but not limited to, LiI, LiCl, LiF, or LiBr, wherein 0<x≤5 and 0<y≤5.

As used herein, the term "SLOPS" refers to unless otherwise specified, a 60:40 molar ratio of Li₂S:SiS₂ with 0.1-10 mol. % Li₃PO₄. In some examples, "SLOPS" includes Li₁₀Si₄S₁₃ (50:50 Li₂S:SiS₂) with 0.1-10 mol. % Li₃PO₄. In some examples, "SLOPS" includes Li₂₆Si₇S₂₇ (65:35 Li₂S:SiS₂) with 0.1-10 mol. % Li₃PO₄MO, wherein M is a metal. In some examples, "SLOPS" includes Li₄SiS₄ (67:33 Li₂S:SiS₂) with 0.1-5 mol. % Li₃PO₄, wherein 0<x≤5 and 0<y≤5. In some examples, "SLOPS" includes Li₁₄Si₃S₁₃ (70:30 Li₂S:SiS₂) with 0.1-5 mol. % Li₃PO₄. In some examples, "SLOPS" is characterized by the formula (1-x)(60:40 Li₂S:SiS₂)*(x)(Li₃PO₄), wherein x is from 0.01 to 0.99. As used herein, "LBS-POX" refers to an electrolyte composition of Li₂S:B₂S₃:Li₃PO₄:LiX where X is a halogen (X=F, Cl, Br, I). The composition can include Li₃BS₃ or Li₅B₇S₁₃ doped with 0-30% lithium halide such as LiI and/or 0-10% Li₃PO₄.

As used herein, the term "LSTPS" refers to an electrolyte material having Li, Si, P, Sn, and S chemical constituents. As used herein, "LSPSO," refers to LSPS that is doped with, or has, O present. In some examples, "LSPSO," is a LSPS material with an oxygen content between 0.01 and 10 atomic %. As used herein, "LATP," refers to an electrolyte material having Li, As, Sn, and P chemical constituents. As used herein "LAGP," refers to an electrolyte material having Li, As, Ge, and P chemical constituents. As used herein, "LXPSO" refers to a catholyte material characterized by the formula LiₐMP_{b}S_{c}O_{d}, where M is Si, Ge, Sn, and/or Al, and where 2 ≤ a ≤ 8, 0.5 ≤ b ≤ 2.5, 4 ≤ c ≤ 12, and d < 3. LXPSO refers to LXPS, as defined above, and having oxygen doping at from 0.1 to about 10 atomic %. LPSO refers to LPS, as defined above, and having oxygen doping at from 0.1 to about 10 atomic %.₁₃ (50:50 Li₂S:SiS₂) with 0.1-10 mol. % Li₃PO₄. In some examples, "SLOPS" includes Li₂₆Si₇S₂₇ (65:35 Li₂S:SiS₂) with 0.1-10 mol. % Li₃PO₄. In some examples, "SLOPS" includes Li₄SiS₄ (67:33 Li₂S:SiS₂) with 0.1-5 mol. % Li₃PO₄. In some examples, "SLOPS" includes Li₁₄Si₃S₁₃ (70:30 Li₂S:SiS₂) with 0.1-5 mol. % Li₃PO₄. In some examples, "SLOPS" is characterized by the formula (1-x)(60:40 Li₂S:SiS₂)*(x)(Li₃PO₄), wherein x is from 0.01 to 0.99. As used herein, "LBS-POX" refers to an electrolyte composition of Li₂S:B₂S₃:Li₃PO₄:LiX where X is a halogen (X=F, Cl, Br, I). The composition can include Li₃BS₃ or Li₅B₇S₁₃ doped with 0-30% lithium halide such as LiI and/or 0-10% Li₃PO₄.

As used herein, the term "LPSCl" refers to an electrolyte material having Li, P, S, and Cl chemical constituents. As used herein, the term "LPSBr" refers to an electrolyte material having Li, P, S, and Br chemical constituents. As used herein, the term "LPSI" refers to an electrolyte material having Li, P, S, and I chemical constituents. LXPSO refers to LXPS, as defined above, and having oxygen doping at from 0.1 to about 10 atomic %. LPSO refers to LPS, as defined above, and having oxygen doping at from 0.1 to about 10 atomic %.

As used herein, the term "LAPS" refers to an electrolyte material having Li, As, P, and S, chemical constituents. " refers to an electrolyte material having Li, P, S, and Cl chemical constituents. As used herein, the term "LTPS" refers to an electrolyte material having Li, P, Sn, and S, chemical constituents. As used herein, the term "LSPS" refers to an electrolyte material having Li, P, Si, and S, chemical constituents. As used herein, the term "LGPS" refers to an electrolyte material having Li, P, Ge, and S, chemical constituents. As used herein, the term "LPS" refers to an electrolyte material having Li, P, and S, chemical constituents. As used herein, the term "LSTPSCl" refers to an electrolyte material having Li, Si, P, Sn, S, and Cl chemical constituents. As used herein, the term "LSPSCl" refers to an electrolyte material having Li, Si, P, S, and Cl chemical constituents. As used herein, the term "LSPSBr" refers to an electrolyte material having Li, Si, P, S, and Br chemical constituents. As used herein, "LTS" refers to a lithium tin sulfide compound which can be described as Li₂S:SnS₂:As₂S₅, Li₂S-SnS₂, Li₂S-SnS, Li-S-Sn, and/or a catholyte consisting essentially of Li, S, and Sn. The composition may be LiₓSn_{y}S_{z} where 0.25≤x≤0.65, 0.05≤y≤0.2, and 0.25≤z≤0.65. In some examples, LTS is a mixture of Li₂S and SnS₂ in the ratio of 80:20, 75:25, 70:30, 2:1, or 1:1 molar ratio. LTS may include up to 10 atomic % oxygen. LTS may be doped with Bi, Sb, As, P, B, Al, Ge, Ga, and/or In and/or lithium halides such as, but not limited to, LiI, LiCl, LiF, or LiBr.

As used herein, the term "LATS" refers to an LTS further including Arsenic (As).:As₂S₅, Li₂S-SnS₂, Li₂S-SnS, Li-S-Sn, and/or a catholyte consisting essentially of Li, S, and Sn. The composition may be LiₓSn_{y}S_{z} where 0.25≤x≤0.65, 0.05≤y≤0.2, and 0.25≤z≤0.65. In some examples, LTS is a mixture of Li₂S and SnS₂ in the ratio of 80:20, 75:25, 70:30, 2:1, or 1:1 molar ratio. LTS may include up to 10 atomic % oxygen. LTS may be doped with Bi, Sb, As, P, B, Al, Ge, Ga, and/or In and/or lithium halides such as, but not limited to, LiI, LiCl, LiF, or LiBr.

As used herein, the term "LBHI" or "LiBHI" refers to a lithium conducting electrolyte having Li, B, H, and I. More generally, it is understood to include aLiBH₄+bLiX where X = Cl, Br, and/or I and where a:b=7:1, 6:1, 5:1, 4:1, 3:1, 2:1, or within the range a/b = 2-4. LBHI may further include nitrogen in the form of aLiBH₄+bLiX+cLiNH₂ where (a+c)/b = 2-4 and c/a = 0-10.

As used herein, the term "LBHXN" refers to a composition characterized as A·(LiBH₄)·B·(LiX)·C·(LiNH₂) wherein X is fluorine (F), bromine (Br), chloride (Cl), iodine (I), or a combination thereof, and wherein 3≤A≤6, 2≤B≤5, and 0≤C≤9. As used herein, the term "LBHFN" refers to a composition characterized as A·(LiBH₄)·B·(LiF)·C·(LiNH₂) and wherein 3≤A≤6, 2≤B≤5, and 0≤C≤9. As used herein, the term "LBHBrN" refers to a composition characterized as A·(LiBH₄)·B·(LiBr)·C·(LiNH₂) and wherein 3≤A≤6, 2≤B≤5, and 0≤C≤9. As used herein, the term "LBHClN" refers to a composition characterized as A·(LiBH₄)·B·(LiCl)·C·(LiNH₂) and wherein 3≤A≤6, 2≤B≤5, and 0≤C≤9. As used herein, the term "LBHIN" refers to a composition characterized as A·(LiBH₄)·B·(LiI)·C·(LiNH₂) and wherein 3≤A≤6, 2≤B≤5, and 0≤C≤9.

As used herein, "SLOBS" includes, unless otherwise specified, a 60:40 molar ratio of Li₂S:SiS₂ with 0.1-10 mol. % LiBH₄. In some examples, "SLOBS" includes Li₁₀Si₄S₁₃ (50:50 Li₂S:SiS₂) with 0.1-10 mol. % LiBH₄. In some examples, "SLOBS" includes Li₂₆Si₇S₂₇ (65:35 Li₂S:SiS₂) with 0.1-10 mol. % LiBH₄. In some examples, "SLOBS" includes Li₄SiS₄ (67:33 Li₂S:SiS₂) with 0.1-5 mol. % LiBH₄. In some examples, "SLOBS" includes Li₁₄Si₃S₁₃ (70:30 Li₂S:SiS₂) with 0.1-5 mol. % LiBH₄. In some examples, "SLOBS" is characterized by the formula (1-x)(60:40 Li₂S:SiS₂)*(x)(Li₃BO₄), wherein x is from 0.01 to 0.99. As used herein, "LBS-BOX" refers to an electrolyte composition of Li₂S:B₂S₃:LiBH₄:LiX where X is a halogen (X=F, Cl, Br, I). The composition can include Li₃BS₃ or Li₅B₇S₁₃ doped with 0-30% lithium halide such as LiI and/or 0-10% Li₃PO₄.

As used herein, the phrase "made of the same type of material," refers to two or more different physical forms of a material but which includes same composition. For example, lithium-stuffed garnet powder and a lithium-stuffed garnet thin film are made of the same type of material. For example, LSTPS powder and an LSTPS thin film are made of the same type of material.

As used herein the term "making," refers to the process or method of forming or causing to form the object that is made. For example, making an energy storage electrode includes the process, process steps, or method of causing the electrode of an energy storage device to be formed. The end result of the steps constituting the making of the energy storage electrode is the production of a material that is functional as an electrode

As used here, the phrase "positive electrode," refers to the electrode in a secondary battery towards which positive ions, *e.g.,* Li⁺, conduct, flow, or move during discharge of the battery. As used herein, the phrase "negative electrode" refers to the electrode in a secondary battery from where positive ions, *e.g.,* Li⁺, flow, or move during discharge of the battery. In a battery comprised of a Li-metal electrode and a conversion chemistry, intercalation chemistry, or combination conversion/intercalation chemistry-including electrode (*i.e.,* cathode active material; *e.g.,* NiFₓ, NCA, LiNiₓMn_{y}Co_{z}O₂ [NMC] or LiNiₓAl_{y}Co_{z}O₂ [NCA], wherein x+y+z = 1), the electrode having the conversion chemistry, intercalation chemistry, or combination conversion/intercalation chemistry material is referred to as the positive electrode. In some common usages, cathode is used in place of positive electrode, and anode is used in place of negative electrode. When a Li-secondary battery is charged, Li ions move from the positive electrode (e.g., NiFₓ, NMC, NCA) towards the negative electrode (e.g., Li-metal). When a Li-secondary battery is discharged, Li ions move towards the positive electrode and from the negative electrode.

As used herein, the phrase "organic component (at 10%)" refers to the weight percent amount of an organic species in a host. For example, if the buffer layer includes LSTPS and a polymer but wherein the organic component (at 10%), this means that the total amount of polymer in the combination of LSTPS and polymer is 10 weight %, with the remaining 90% being non-organic, *e.g*., LSTPS.

As used herein, the phrase "porosity as determined by SEM" refers to measurement of density by using image analysis software to analyze a scanning electron micrograph. For example, first, a user or software assigns pixels and/or regions of an image as porosity. Second, the area fraction of those regions is summed. Finally, the porosity fraction determined by SEM is equal to the area fraction of the porous region of the image.

As used herein, the phrase "providing" refers to the provision of, generation or, presentation of, or delivery of that which is provided.

As used herein, the terms "separator," and "Li⁺ ion-conducting separator," are used interchangeably with separator being a short-hand reference for Li⁺ ion-conducting separator, unless specified otherwise explicitly. A separator refers to a solid electrolyte which conducts Li⁺ ions, is substantially insulating to electrons, and which is suitable for use as a physical barrier or spacer between the positive and negative electrodes in an electrochemical cell or a rechargeable battery. A separator, as used herein, is substantially insulating when the separator's lithium ion conductivity is at least 10³, and typically 10⁶ times, greater than the separator's electron conductivity. A separator can be a film, monolith, or pellet. Unless explicitly specified to the contrary, a separator as used herein is stable when in contact with lithium metal.

As used herein, a "sintered lithium-stuffed garnet thin film" refers to a green film comprising a lithium-stuffed garnet which is sintered and densified to form a thin film.

As used herein, the phrase "solid-state cathode" or "solid-state positive electrode" refers to a type of "positive electrode" defined herein. In certain examples, all components in this solid-state cathode film are in solid form. The solid-state cathode includes active cathode materials as defined herein, solid-state catholyte as defined herein, optionally a conductive additive, and optionally binders. The solid-state cathode are in some examples densified films.

As used here, the phrase "solid-state electrolyte," is used interchangeably with the phrase "solid separator" refers to a material which does not include carbon and which conducts atomic ions (*e.g.,* Li⁺) but does not conduct electrons. An inorganic solid-state electrolyte is a solid material suitable for electrically isolating the positive and negative electrodes of a lithium secondary battery while also providing a conduction pathway for lithium ions. Example inorganic solid-state electrolytes include oxide electrolytes and sulfide electrolytes, which are further defined below. Non-limiting example sulfide electrolytes are found, for example, in US Patent No. 9,172,114, which issued October 27, 2015, and also in US Patent Application Publication No. 2017-0162901 A1, which published June 8, 2017, and was filed as US Patent Application No. 15/367,103 on December 1, 2016. Non-limiting example oxide electrolytes are found, for example, in US Patent Application Publication No. 2015-0200420 A1, which published July 16, 2015. In some examples, the inorganic solid-state electrolyte also includes a polymer.

As used herein, the phrase "subscripts and molar coefficients in the empirical formulas are based on the quantities of raw materials initially batched to make the described examples" means the subscripts, (e.g., 7, 3, 2, 12 in Li₇La₃Zr₂O₁₂ and the coefficient 0.35 in 0.35Al₂O₃) refer to the respective elemental ratios in the chemical precursors (e.g., LiOH, La₂O₃, ZrO₂, Al₂O₃) used to prepare a given material, (e.g., Li₇La₃Zr₂O₁₂·0.35Al₂O₃), unless specified otherwise.

As used herein, the phrase "slot casting," or "slot die coating" refers to a deposition process whereby a substrate is coated, or deposited, with a solution, liquid, slurry, or the like by flowing the solution, liquid, slurry, or the like, through a slot or mold of fixed dimensions that is placed adjacent to, in contact with, or onto the substrate onto which the deposition or coating occurs. In some examples, slot casting includes a slot opening of about 1 to 100 µm.

As used herein, the term "oxide" refers to a chemical compound that includes at least one oxygen atom and one other element in the chemical formula for the chemical compound. For example, an "oxide" is interchangeable with "oxide electrolytes." Non-limiting examples of oxide electrolytes are found, for example, in US Patent Application Publication No. 2015/0200420, published July 16, 2015.

As used herein, the term "sulfide" refers to refers to a chemical compound that includes at least one sulfur atom and one other element in the chemical formula for the chemical compound. For example, a "sulfide" is interchangeable with "sulfide electrolytes." Non-limiting examples of sulfide electrolytes are found, for example, in US Patent No. 9,172,114, issued October 27, 2015, and also in US Patent Application Publication No. 2017-0162901 A1, which published June 8, 2017, and was filed as US Patent Application No. 15/367,103 on December 1, 2016. As used herein, a sulfide catholyte is a catholyte that comprises or consists essentially of a sulfide.

As used here, the phrase "sulfide electrolyte," or "lithium sulfide" includes, but is not limited to, electrolytes referred to herein as LSS, LTS, LXPS, or LXPSO, where X is Si, Ge, Sn, As, Al, or Li-Sn-Si-P-S, or Li-As-Sn-S. In these acronyms (LSS, LTS, LXPS, or LXPSO), S refers to the element S, Si, or combinations thereof, and T refers to the element Sn. "Sulfide electrolyte" may also include LiₐP_{b}S_{c}X_{d}, LiₐB_{b}S_{c}X_{d}, LiₐSn_{b}S_{c}X_{d} or LiₐSi_{b}S_{c}X_{d} where X=F, Cl, Br, I, and 10%≤a≤50%, 10%≤b≤44%, 24%≤c≤70%, 0≤d≤18%; % are atomic %. Up to 10 at% oxygen may be present in the sulfide electrolytes, either by design or as a contaminant species.

As used herein, the term "sulfide-halide" refers to a chemical compound that includes at least one sulfur atom, at least one halogen atom, and one other element in the chemical formula for the chemical compound.

As used herein, voltage is set forth with respect to lithium (i.e., V vs. Li) metal unless stated otherwise.

### • Electrochemical cells

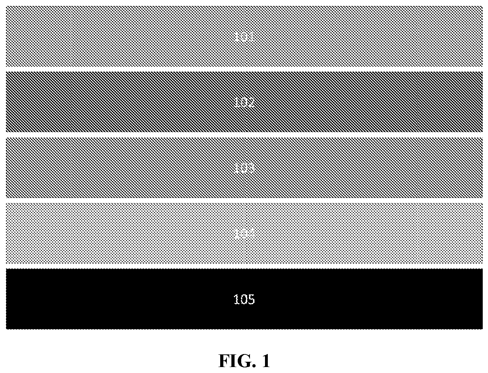

One example electrochemical cell is schematically illustrated in **FIG. 1****.** In **FIG. 1****,** layer **101** represents an evaporated lithium metal anode. Layer **102** represents a lithium-stuffed garnet layer. Layer **103** represents a bonding layer. Layer **104** represents a buffer layer. Layer **105** represents a positive electrode layer. In some examples, layer **102** is approximately 100 µm thick. In some examples, layer **101** is approximately 15, 16, 17, 18, 19, 20, 21, 22, 23, 24, 25, 26, 27, 28, 29, 30, 31, 32, 33, 34, 35, 36, 37, 38, 39, or 40 µm thick. In some examples, layer **102** is approximately 75, 76, 77, 78, 79, 80, 81, 82, 83, 84, 85, 86, 87, 88, 89, 90, 91, 92, 93, 94, 95, 96, 97, 98, 99, 100, 101, 102, 103, 104, 105, 106, 107, 108, 109, 110, 111, 112, 113, 114, 115, 116, 117, 118, 119, 120, 121, 122, 123, 124, or 125 µm thick. In some examples, layer **103** is approximately 1, 2, 3, 4, 5, 6, 7, 8, 9, 10, 11, 12, 13, 14, or 15 µm thick. In some examples, layer **104** is approximately 1, 2, 3, 4, 5, 6, 7, 8, 9, 10, 11, 12, 13, 14, or 15 µm thick. In some examples, layer **105** is approximately 75, 76, 77, 78, 79, 80, 81, 82, 83, 84, 85, 86, 87, 88, 89, 90, 91, 92, 93, 94, 95, 96, 97, 98, 99, 100, 101, 102, 103, 104, 105, 106, 107, 108, 109, 110, 111, 112, 113, 114, 115, 116, 117, 118, 119, 120, 121, 122, 123, 124, 125, 126, 127, 128, 129, 130, 131, 132, 133, 134, 135, 136, 137, 138, 139, 140, 141, 142, 143, 144, 145, 146, 147, 148, 149, 150, 151, 152, 153, 154, 155, 156, 157, 158, 159, 160, 161, 162, 163, 164, 165, 166, 167, 168, 169, or 170 µm thick.

In some examples, set forth herein is a solid-state electrochemical cell (SSEC), which includes (a) a positive electrode layer comprising an active material and a sulfide catholyte; (b) a single ion conducting, solid-state buffer; (c) a borohydride bonding layer; and (d) a lithium-stuffed gamet layer. The buffer is mixed within the positive electrode layer, or the buffer is present as a layer in contact with the positive electrode layer, or, in some examples, the buffer is both mixed within the positive electrode layer and the buffer is present as a layer in contact with the positive electrode layer. The borohydride bonding layer is between and in contact with the lithium-stuffed garnet layer and either (i) the positive electrode layer with a buffer mixed therein or (ii) a buffer layer in contact with the positive electrode. In some examples, the borohydride bonding layer is between and in contact with the lithium-stuffed garnet layer and the positive electrode layer with a buffer mixed therein. In some examples, the buffer is mixed within the positive electrode layer. In some examples, the buffer is present as a layer in contact with the positive electrode layer. In some examples, both the buffer is mixed within the positive electrode layer and the buffer is present as a layer in contact with the positive electrode layer. In some examples, the borohydride bonding layer is between and in contact with the lithium-stuffed garnet layer and buffer layer in contact with the positive electrode.

In some examples, including any of the foregoing, the active material includes a coating. In some examples, the active material includes a coating of a material selected from LLZO.

In these examples, the Li ion conducts through inorganic single ion conductor, not through polymer or organic component (at 10%).

In some examples, set forth herein is a solid-state electrochemical cell (SSEC), including: (a) a positive electrode layer comprising an active material and a sulfide catholyte; (b) a single ion conducting, solid-state buffer; (c) a borohydride bonding layer; and (d) a lithium-stuffed garnet layer; wherein the buffer is mixed within the positive electrode layer, or is a layer in contact with the positive electrode layer, or both; wherein the borohydride bonding layer is between and in contact with the lithium-stuffed garnet layer and either (i) the positive electrode layer with a buffer mixed therein or (ii) a buffer layer in contact with the positive electrode.

In some examples, including any of the foregoing, the single ion conducting, solid-state buffer is mixed within the positive electrode layer. In some embodiments, the buffer is mixed within the positive electrode layer in such a way such that a gradient of active material and buffer material is achieved.

In some examples, including any of the foregoing, the single ion conducting, solid-state buffer is a layer in contact with the positive electrode layer.

In some examples, including any of the foregoing, the single ion conducting, solid-state buffer is mixed within the positive electrode layer and is present as a layer in contact with the positive electrode layer.

In some examples, including any of the foregoing, the single ion conducting, solid-state buffer layer prevents the borohydride bonding layer from contacting the positive electrode layer. In some examples, the borohydride bonding layer adheres the lithium-stuffed garnet layer to the buffer layer. In some examples, the borohydride bonding layer adheres the lithium-stuffed garnet layer to the component of the positive electrode layer which is a buffer.

In some examples, including any of the foregoing, the negative electrode layer is between and in contact with the lithium-stuffed garnet layer and the negative electrode current collector layer. In some examples, including any of the foregoing, the buffer layer potential is shielded from the Li metal negative electrode potential. In some examples, including any of the foregoing, the borohydride bonding layer potential is shielded from the positive electrode potential. In some examples, including any of the foregoing, the SSEC has an ASR of 50 Ωcm² or less.

In some examples, set forth herein is a solid-state electrochemical cell (SSEC), including (a) a positive electrode layer, which includes an active material and a sulfide catholyte; (b) a buffer, which includes a single ion conducting, solid-state electrolyte, and in which the buffer is mixed within or is in direct contact with the positive electrode layer; (c) a bonding layer including a borohydride; and (d) a layer including a lithium-stuffed garnet. In this embodiment, the borohydride bonding layer is between and in contact with the layer including a lithium-stuffed garnet and either the positive electrode layer or the buffer in direct contact with the positive electrode.

In some examples, including any of the foregoing, a solid-state electrochemical stack further includes (d) a negative electrode current collector in direct contact with the separator layer. In another instance, any solid-state electrochemical stack described above further includes (e) a positive electrode current collector in direct contact with the positive electrode layer. In a further instance, any solid-state electrochemical stack described above further includes (d) a negative electrode current collector and (e) a negative electrode, wherein the (e) negative electrode is between and in direct contact with the separator layer and the negative electrode current collector.

In certain embodiments, provided herein is a composite having a lithium-stuffed garnet and an LBHI, where the LBHI fills at least 90% of the through-pores and/or surface pores of the lithium-stuffed garnet, and where the LBHI may be a composition having A·(LiBH₄)·B·(LiX)·C·(LiNH₂) wherein X is a halide wherein 3≤A≤6, 2≤B≤5, and 0≤C≤9.

In some examples, herein, the borohydride bonding layer is a LBHI (Lithium borohydride with lithium iodide). The buffer layer is LSTPS. The buffer layer blocks, *i.e.,* shields, the high voltage positive electrode.

### • Buffer composition

The sulfide in the buffer layer in some examples may be any sulfide set forth in US Patent Application Publication No. 2017-0005367 A1, entitled COMPOSITE ELECTROLYTES, which published January 5, 2017.

The sulfide in the buffer layer in some examples may be any sulfide set forth in WO2017096088A1, which published June 8, 2017, and was filed as International PCT Patent Application NO. PCT/US2016/064492, filed December 1, 2016, and entitled LITHIUM, PHOSPHORUS, SULFUR, AND IODINE CONTAINING ELECTROLYTE AND CATHOLYTE COMPOSITIONS, ELECTROLYTE MEMBRANES FOR ELECTROCHEMICAL DEVICES, AND ANNEALING METHODS OF MAKING THESE ELECTROLYTES AND CATHOLYTES, and which published as WO 2017/096088 on June 8, 2017.

In some examples, including any of the foregoing, the buffer layer, the sulfide catholyte or the single ion conducting, the solid-state buffer, or all, can be characterized by one of the following formula: LiₐSi_{b}Sn_{c}P_{d}SₑO_{f}, wherein 2≤a≤8, 0≤b≤1, 0≤c≤1, b+c=1, 0.5≤d≤2.5, 4≤e≤12, and 0 ≤ f ≤ 10; LiₐSi_{b}P_{c}S_{d}Xₑ, wherein 8<a<12, 1<b<3, 1<c<3, 8<d<14, and 0<e<1, wherein X is F, Cl, Br, or I; Li_{g}AsₕSnⱼSₖOₗ, wherein 2≤g≤6, 0≤h≤1, 0≤j≤1, 2≤k≤6, and 0≤l≤10; LiₘPₙSₚI_{q}, wherein 2≤m≤6, 0≤n≤1, 0≤p≤ 1, 2≤q≤ 6; a mixture of (Li₂S):(P₂S₅) having a molar ratio of Li₂S:P₂S₅ from about 10:1 to about 6:4 and LiI, wherein the ratio of [(Li₂S):(P₂S₅)]:LiI is from 95:5 to 50:50; LPS+X, wherein X is selected from Cl, I, or Br; vLi₂S+wP₂S₅+ yLiX; or vLi₂S+wSiS₂+ yLiX. In some examples, including any of the foregoing, the sulfide catholyte comprises LSTPS.₂S+wB₂S₃+ yLiX.

In some examples, the buffer comprises LiₐSi_{b}Sn_{c}P_{d}Sₑ, wherein 2≤a≤8, 0≤b≤1, 0≤c≤1, 0.5≤d≤2.5, and 4≤e≤12. In some examples, the buffer comprises LiₐSi_{b}Sn_{c}P_{d}Sₑ, wherein 2≤a≤8, 0≤b≤1, 0≤c≤1, b+c=1, 0.5≤d≤2.5, and 4≤e≤12. In some examples, the buffer comprises LiₐSi_{b}Sn_{c}P_{d}Sₑ, wherein 3≤a≤7, 0≤b≤1, 0≤c≤1, b+c=1, 0.5≤d≤1.5, and 8≤e≤12. In some examples, the buffer comprises LiₐSi_{b}Sn_{c}P_{d}Sₑ, wherein 3≤a≤5, 0≤b≤1, 0≤c≤1, b+c=1, 0.5≤d≤1, and 5≤e≤9. In some examples, the buffer comprises LiₐSi_{b}Sn_{c}P_{d}Sₑ, wherein 3≤a≤5, 0≤b≤1, 0≤c≤1, b+c=1, 0.5≤d≤1, and 5≤e≤9. In some examples, the buffer comprises LiₐSi_{b}Sn_{c}P_{d}Sₑ, wherein 2≤a≤8, 0≤b≤1, 0≤c≤1, b+c=1, 0.5≤d≤2.5, and 4≤e≤12. In some examples, the buffer comprises LiₐSi_{b}Sn_{c}P_{d}Sₑ, wherein 3≤a≤5, 0≤b≤0.5, 0≤c≤0.5, 0≤d≤2, and 2≤e≤10. In some examples, the buffer comprises LiₐSi_{b}Sn_{c}P_{d}Sₑ, wherein 3≤a≤5, 0≤b≤0.25, 0≤c≤1, 0≤d≤1, and 2≤e≤14. In some examples, the buffer comprises LiₐSi_{b}Sn_{c}P_{d}Sₑ, wherein 3≤a≤5, 0≤b≤0.25, 0≤c≤1, 0≤d≤1, and 2≤e≤8.

In some examples, including any of the foregoing, the single ion conducting, solid-state buffer comprises LSTPS.

The buffer layer does not conduct electrons and thereby shields the positive electrode potential from the potential experienced by the borohydride bonding layer.

The buffer layer does not conduct electrons and thereby shields the positive electrode potential from the potential experienced by the negative electrode.

In some examples, the buffer layer is easy to deform.

In some examples, the buffer layer is chemically stable when in contact with the sulfide catholyte disclosed herein and/or the and coated active materials, disclosed herein.

In some examples, the buffer layer comprises LSTPS.

In some examples, the buffer layer comprises particles with D₅₀ of about 10 nm to 1000 nm, about 100 nm to 500 nm, or about 150 nm to 300 nm. In some examples, the buffer layer comprises particles with D₅₀ of about 100 nm, about 200 nm, or about 300 nm. In some examples, the buffer layer comprises particles with D₉₀ of about 500 nm to 2000 nm, 750 nm to 1000 nm, or about 1000 nm. In some examples, the buffer layer comprises particles with D₉₀ of about 800 nm, 900 nm, 1000 nm, or 1100 nm. In some examples, the buffer layer comprises particles with D₉₀ of at least about 750 nm. In some examples, the buffer layer comprises particles with D₉₀ of at least about 900 nm.

In some examples, the buffer layer is made of particles 1/10 of the thickness the buffer layer. For example, if the buffer layer is 5 µm thick, then it, in some examples, includes buffer particles that are 0.5 µm. In some examples, if the buffer layer is 5 µm thick, then the buffer layer includes LSTPS particles that have a d₅₀ particle size diameter of 0.5 µm.

In some examples, the buffer layer has negligible interfacial resistance to the positive electrode.

In some examples, the buffer layer is non-polymeric, which means it includes less than 5 wt. % polymer.

In some examples, the buffer layer is adhered to the positive electrode through a lamination and densification process. This results in a buffered positive electrode which blocks electron access and shields the other electrolyte layer from the positive electrode potential.

In some examples, the buffer layer is adhered to the positive electrode through a lamination and densification process. This results in a buffered positive electrode which blocks electron access and shields the other electrolyte layer from the positive electrode potential.

In some examples, the buffer layer has a porosity less than about 20 % v/v, 15 % v/v, 12.5 % v/v, 10 % v/v, 5 % v/v, 1 % v/v, or less. In some examples, the buffer layer has a porosity of about 5 % v/v to 20 % v/v, or about 10 % v/v to 15 % v/v.

### • Bonding layer composition

In certain embodiments, a bonding layer may include a composition having A·(LiBH₄)·B·(LiX)·C·(LiNH₂) wherein X may be fluorine, bromine, chloride, iodine, or a combination thereof, and wherein 3≤A≤6, 2≤B≤5, and 0≤C≤9. In some examples, a bonding layer comprises A·(LiBH₄)·B·(LiX)·C·(LiNH₂), wherein 3≤A≤6, 2≤B≤5, and 3≤C≤6. In some examples, a bonding layer comprises A·(LiBH₄)·B·(LiX)·C·(LiNH₂), wherein 3≤A≤5, 2≤B≤5, and 3≤C≤5. In some examples, a bonding layer comprises A·(LiBH₄)·B·(LiX)·C·(LiNH₂), wherein 3≤A≤4, 2≤B≤4, and 3≤C≤4. In some examples, a bonding layer comprises A·(LiBH₄)·B·(LiX)·C·(LiNH₂), wherein 4≤A≤5, 2≤B≤4, and 4≤C≤5. In some examples, a bonding layer comprises A·(LiBH₄)·B·(LiX)·C·(LiNH₂), wherein 4≤A≤5, 3≤B<4, and 4≤C≤5.

In certain embodiments, a bonding layer may include a composition having A·(LiBH₄)·B·(LiX)·C·(LiNH₂) wherein X may be fluorine, bromine, chloride, iodine, or a combination thereof, and wherein 0.1≤A≤3, 0.1≤B<4.5, and 0≤C≤9.

In one embodiment, X may be bromine, chlorine, iodine, or a combination thereof. In another embodiment, X may be iodine. In some embodiments, A is 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, or 3.0. In some embodiments, B is 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4, or 4.5. In some embodiments, C is 0.0, 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9, 5.0, 5.1, 5.2, 5.3, 5.4, 5.5, 5.6, 5.7, 5.8, 5.9, 6.0, 6.1, 6.2, 6.3, 6.4, 6.5, 6.6, 6.7, 6.8, 6.9, 7.0, 7.1, 7.2, 7.3, 7.4, 7.5, 7.6, 7.7, 7.8, 7.9. 8.0, 8.1, 8.2, 8.3, 8.4, 8.5, 8.6, 8.7, 8.8, 8.9, or 9.0.

In some examples, the bonding layer comprises a borohydride composition comprising A·(LiBH₄)·B·(LiX)·C·(LiNH₂), wherein 2.5<A<4.5, 2.5<B<5.5, and 4<C<9. In some examples, including any of the foregoing, the borohydride bonding layer comprises a borohydride composition including A·(LiBH₄)·B·(LiX)·C·(LiNH₂). In some examples, 2.5<A<3.5, 3.5<B<4.5, and 5<C<9.

In some examples, including any of the foregoing, the borohydride bonding layer comprises a borohydride composition, wherein the composition is 3LiBH₄·2LiCl·3LiNH₂ or 3LiBH₄·4LiCl·9LiNH₂. In one embodiment, the composition may be 3LiBH₄·2LiI·3LiNH₂. In another embodiment, the composition may be 3LiBH₄·4LiI·9LiNH₂. In another embodiment, the composition may be 3LiBH₄·2LiCl·3LiNH₂. In another embodiment, the composition may be 3LiBH₄·4LiCl·9LiNH₂. In another embodiment, the composition may be 3LiBH₄·2LiBr·3LiNH₂. In another embodiment, the composition may be 3LiBH₄·4LiBr·9LiNH₂.

In some examples, including any of the foregoing, the borohydride bonding layer comprises a borohydride composition, wherein the composition is 3LiBH₄·2LiCl·3LiNH₂ or 3LiBH₄·4LiCl·5LiNH₂. In one embodiment, the composition may be 4LiBH₄·2LiI·4LiNH₂. In another embodiment, the composition may be 4LiBH₄·3LiI·4LiNH₂. In another embodiment, the composition may be 4LiBH₄·5LiCl·4LiNH₂. In another embodiment, the composition may be 4LiBH₄·6LiCl·4LiNH₂. In some examples, including any of the foregoing, the borohydride bonding layer comprises a borohydride composition, wherein the composition is 3LiBH₄·3LiCl·4LiNH₂ or 3LiBH₄·3LiCl·5LiNH₂. In one embodiment, the composition may be 3LiBH₄·3LiI·6LiNH₂. In another embodiment, the composition may be 3LiBH₄·3LiI·7LiNH₂.

In some examples, including any of the foregoing, the borohydride bonding layer comprises a borohydride composition selected from LBHIN and LBHN. In some examples, including any of the foregoing, the borohydride bonding layer comprises KBH₄ and LiNH₂.

In some embodiments, the composition may exist in different physical states. For example, in one embodiment, the composition may be amorphous. By way of further example, in one embodiment, the composition may be semi-crystalline. The composition can be made amorphous or semi-crystalline by controlling the sintering profile, *e.g.,* by adjusting the cooling rate after sintering.

In certain embodiments, the LBHI composition may exist as a film, a single entity, or a pellet. For example, in one embodiment, the composition is a thin film. By way of further example, in one embodiment, the composition is a monolith. By way of further example, in one embodiment, the composition is a pressed pellet.

In some embodiments, the LBHI composition may further include an oxide, a sulfide, a sulfide-halide, or an electrolyte. For example, in one embodiment, the oxide may be selected from a lithium-stuffed garnet characterized by the formula LiₓLa_{y}Zr_{z}Oₜ·qAl₂O₃, wherein 4<x<10, 1<y<4, 1<z<3, 6<t<14, 0≤q≤1. By way of further example, in one embodiment, the composition includes an oxide with a coating of LBHI, where the oxide may be selected from a lithium-stuffed garnet characterized by the formula LiₓLa_{y}Zr_{Z}Oₜ·qAl₂O₃, wherein 4<x<10, 1<y<4, 1<z<3, 6<t<14, 0≤q≤1. By way of further example, in one embodiment, the oxide may be selected from a lithium-stuffed garnet characterized by the formula LiₐLa_{b}Zr_{c}Al_{d}Me"ₑO_{f}, wherein 5<a<8.5; 2<b<4; 0<c≤2.5; 0≤d<2; 0≤e<2, and 10<f<13 and Me" is a metal selected from Nb, Ga, Ta, or combinations thereof. By way of further example, in one embodiment, the composition includes an oxide with a coating of LBHI, where the oxide may be selected from a lithium-stuffed garnet characterized by the formula LiₐLa_{b}Zr_{c}Al_{d}Me"ₑO_{f}, wherein 5<a<8.5; 2<b<4; 0<c≤2.5; 0≤d<2; 0≤e<2, and 10<f<13 and Me" is a metal selected from Nb, Ga, Ta, or combinations thereof. By way of further example, in one LiₐLa_{b}Zr_{c}Al_{d}Me"ₑO_{f} embodiment as above, Me" is Nb. By way of further example, in one LiₐLa_{b}Zr_{c}Al_{d}Me"ₑO_{f} embodiment as above, Me" is Ga. By way of further example, in one LiₐLa_{b}Zr_{c}Al_{d}Me"ₑOf embodiment as above, Me" is Ta. By way of further example, in one LiₐLa_{b}Zr_{c}Al_{d}Me"ₑO_{f} embodiment as above, Me" is Nb and Ga. By way of further example, in one LiₐLa_{b}Zr_{c}Al_{d}Me"ₑO_{f} embodiment as above, Me" is Nb and Ta. By way of further example, in one LiₐLa_{b}Zr_{c}Al_{d}Me"ₑO_{f} embodiment as above, Me" is Ga and Ta.

The borohydride bonding layer is in some examples made of a borohydride compound. The borohydride compound may be any compound set forth in WO 2018/075972, which published April 26, 2018, and was filed as International PCT Patent Application No. PCT/US2017/057735, and is entitled ELECTROLYTE SEPARATORS INCLUDING LITHIUM BOROHYDRIDE AND COMPOSITE ELECTROLYTE SEPARATORS OF LITHIUM-STUFFED GARNET AND LITHIUM BOROHYDRIDE. The borohydride may be any compound set forth in WO 2019/078897, which published April 25, 2019, and was filed as International PCT Patent Application No. PCT/US2017/057739, filed October 20, 2017, and is entitled BOROHYDRIDE-SULFIDE INTERFACIAL LAYER IN ALL SOLID STATE BATTERY.

In some examples, including any of the foregoing, the lithium salt is chosen from LiTFSI, LiFSI, LiPF₆, LiClO₄, LiAsF₆, LiBOB, LiBETI, LiBF₄, and LiI and combinations thereof. In certain examples, the lithium salt is selected from LiPF₆, Lithium bis(oxalato)borate (LiBOB), Lithium bis(perfluoroethanesulfonyl)imide (LIBETI), LiTFSi, LiBF₄, LiClO₄, LiAsF₆, LiFSI, or LiI. In certain examples, the lithium salt is LiPF₆. In certain examples, the lithium salt is LiBOB. In certain examples, the lithium salt is LiTFSi. In certain examples, the lithium salt is LiBF₄. In certain examples, the lithium salt is LiClO₄. In certain examples, the lithium salt is LiAsF₆. In certain examples, the lithium salt is LiI. In certain examples, the lithium salt is LiBF₄ In certain examples, several lithium salts may be present simultaneously in different concentrations. In some examples, the concentration is about 0.5, about 0.6, about 0.7, about 0.8, about 0.9, about 1.0, about 1.1, about 1.2, about 1.3, about 1.4, about 1.5, about 1.6, about 1.7, about 1.8, about 1.9 or about 2.0M. In certain examples, the bonding layer may contain two salts selected from LiPF₆, LiBOB, LiTFSi, LiBF₄, LiClO₄, LiAsF₆, LiFSI, or LiI. In certain examples, the bonding layer may contain three salts selected from LiPF₆, LiBOB, LiTFSi, LiBF₄, LiClO₄, LiAsF₆, LiFSI, or LiI. In certain examples, the lithium salt is a lithium salt is selected from LiPF₆, LiBOB, and LFTSi. In certain examples, the lithium salt is LiPF₆ at a concentration of 0.5 M to 2M. In some examples, the concentration is 0.5, 0.6, 0.7, 0.8, 0.9, 1.0, 1.1, 1.2, 1.3, 1.4, 1.5, 1.6, 1.7, 1.8, 1.9 or 2.0M. In certain examples, the lithium salt is LiTFSI at a concentration of 0.5 M to 2M. In some examples, the concentration is 0.5, 0.6, 0.7, 0.8, 0.9, 1.0, 1.1, 1.2, 1.3, 1.4, 1.5, 1.6, 1.7, 1.8, 1.9 or 2.0M.

In certain examples, the lithium salt is present at a concentration from 0.01 M to 10 M. In some examples, the concentration is 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.3, 3.2, 3.3, 3.4, 3.5, 3.6, 3.7, 3.8, 3.9, 2.0, 0.3, 0.2, 0.3, 0.4, 0.5, 0.6, 0.7, 0.8, 0.9, 3.0, 3.1, 3.2, 3.3, 3.4, 3.5, 3.6, 3.7, 3.8, 3.9, 4.0, 5.1, 5.2, 5.3, 5.4, 5.5, 5.6, 5.7, 5.8, 5.9, 6.0, 6.1, 6.2, 6.3, 6.4, 6.5, 6.6, 6.7, 6.8, 6.9, 7.0, 7.1, 7.2, 7.3, 7.4, 7.5, 7.6, 7.7, 7.8, 7.9, 8.0, 8.1, 8.2, 8.8, 8.4, 8.5, 8.6, 8.7, 8.8, 8.9, 9.9, 9.1, 9.2, 9.3, 9.4, 9.5, 9.6, 9.7, 9.8, 9.9, 10.0 M.

### • Other compositions

In some examples, including any of the foregoing, the buffer layer comprises a binder at 0.01 to 10 % by weight. Binders may include, in some examples, polyolefins. Binders may include ethylene alpha-olefin copolymer, ethylene-octene copolymer, polyolefin plastomers, polyolefin elastomers, styrene-butadiene rubber, polyvinylidene fluoride, poly(vinylidene fluoride-co-hexafluoropropylene), and the like.

In some examples, including any of the foregoing, the buffer layer comprises an organic polymer at 10% by volume or less.

In some examples, including any of the foregoing, the polymer is selected from the group consisting of polyacrylonitrile (PAN), polypropylene, polyethylene oxide (PEO), polymethyl methacrylate (PMMA), polyvinyl chloride (PVC), polyvinyl pyrrolidone (PVP),
polyethylene oxide poly(allyl glycidyl ether) PEO-AGE,
polyethylene oxide 2-methoxyethoxy)ethyl glycidyl ether (PEO-MEEGE),
polyethylene oxide 2-methoxyethoxy)ethyl glycidyl poly(allyl glycidyl ether) (PEO-MEEGE-AGE), polysiloxane, polyvinylidene fluoride (PVDF),
polyvinylidene fluoride hexafluoropropylene (PVDF-HFP), ethylene propylene (EPR), nitrile rubber (NPR), styrene-butadiene-rubber (SBR), polybutadiene polymer, polybutadiene rubber (PB), polyisobutadiene rubber (PIB), polyisoprene rubber (PI), polychloroprene rubber (CR), acrylonitrile-butadiene rubber (NBR), polyethyl acrylate (PEA), polyvinylidene fluoride (PVDF), and polyethylene.

In some examples, including any of the foregoing, the buffer layer or buffer component does not include an organic polymer.

In some examples, including any of the foregoing, the positive electrode potential is shielded from the lithium-stuffed garnet layer potential.

In some examples, including any of the foregoing, the active material potential in the positive electrode is shielded from the lithium-stuffed garnet layer potential.

In some examples, the cathode comprises active material, wherein the active material is selected from LiNiₓMn_{y}Co_{z}O₂ (NMC) and LiNiₓAl_{y}Co_{z}O₂ (NCA), wherein x+y+z = 1).

In some examples, including any of the foregoing, the active material is coated.

In some examples, including any of the foregoing, the active material is coated or partially coated with a coating selected from the group consisting of lithium niobium oxide, lithium zirconium oxide, lithium aluminum oxide, lithium phosphate, lithium tantalum oxide, lithium hafnium oxide, niobium oxide, zirconium oxide, aluminum oxide, tantalum oxide, and hafnium oxide.

In some examples, including any of the foregoing, the active material is uncoated.

In some examples, including any of the foregoing, the positive electrode comprises a lithium intercalation material, a lithium conversion material, or both a lithium intercalation material and a lithium conversion material.

In some examples, the positive electrode has a porosity less than about 20 % v/v, 15% v/v, 12.5 % v/v, 10 % v/v, 5 % v/v, 1 % v/v, or less. In some examples, the positive electrode has a porosity of about 5 % v/v to 20 % v/v, or about 10 % v/v to 15 % v/v.

In some examples, including any of the foregoing, the intercalation material is selected from the group consisting of a nickel manganese cobalt oxide (NMC), a nickel cobalt aluminum oxide (NCA), Li(NiCoAl)O₂, a lithium cobalt oxide (LCO), a lithium manganese cobalt oxide (LMCO), a lithium nickel manganese cobalt oxide (LMNCO), a lithium nickel manganese oxide (LNMO), Li(NiCoMn)O₂, LiMn₂O₄, LiCoO₂, and LiMn₂₋ₐNiaO₄, wherein a is from 0 to 2, or LiMPO₄, wherein M is Fe, Ni, Co, or Mn.

In some examples, including any of the foregoing, the lithium conversion material is selected from the group consisting of FeF₂, NiF₂, FeOxF₃₋₂ₓ, FeF₃, MnF₃, CoF₃, CuF₂ materials, alloys thereof, and combinations thereof₂₋ₐNiaO₄, wherein a is from 0 to 2, or LiMPO₄, wherein M is Fe, Ni, Co, or Mn.

In some examples, including any of the foregoing, the sulfide catholyte and the single ion conducting, solid-state buffer are made of the same type of material.

In some examples, including any of the foregoing, the sulfide catholyte or the single ion conducting, solid-state buffer, or both, are selected from the group consisting of LSS, SLOPS, LSTPS, LSTPSCl, SLOBS, LATS, and LPS+X, wherein X is selected from the group consisting of Cl, I, Br, and combinations thereof. In some examples, X is Cl. In some examples, X is I. In some examples, X is Br.

In some examples, including any of the foregoing, the sulfide catholyte or the single ion conducting, solid-state buffer, or both, are selected from the group consisting of LSS, SLOPS, LSTPS, LSTPSCl, LSPSCl, SLOBS, LATS, and LPS+X, wherein X is selected from the group consisting of Cl, I, Br, and combinations thereof. In some examples, X is Cl. In some examples, X is I. In some examples, X is Br.

In some examples, including any of the foregoing, the sulfide catholyte or the single ion conducting, solid-state buffer, or both, are selected from the group consisting of LPSI, LXPS, LSTPS, LSPSCl, LPSCl, LSPSBr, and LPSBr.

In some examples, including any of the foregoing, the sulfide catholyte or the single ion conducting, solid-state buffer, or both, are selected from x·Li₂S:y·SiS₂, wherein x and y are each independently a number from 0 to 1, and wherein x+y= 1.

In some examples, including any of the foregoing, the sulfide catholyte or the single ion conducting, solid-state buffer, or both, are selected from the group consisting of LSS, LGPS, LSTPS, and LSPS.₂S:y·SiS₂, wherein x and y are each independently a number from 0 to 1, and wherein x+y= 1.

In some examples, including any of the foregoing, the borohydride bonding layer comprises a lithium borohydride, a sodium borohydride, or a potassium borohydride.

In some examples, including any of the foregoing, the lithium borohydride, sodium borohydride, or potassium borohydride is doped with LiNH₂.

In some examples, including any of the foregoing, any one or more of the lithium borohydride, sodium borohydride, or potassium borohydride is doped with LiI.

In some examples, including any of the foregoing, any one or more of the lithium borohydride, sodium borohydride, or potassium borohydride is doped with LiNH₂ and LiI.

In some examples, including any of the foregoing, the borohydride bonding layer comprises a borohydride composition comprising A(LiBH₄)(1-A)(P₂S₅), wherein 0.05≤A≤0.95. In some examples, 0.5<A<0.95. In some examples, A is 0.85, 0.9, or 9.95.

In some examples, including any of the foregoing, the borohydride bonding layer comprises 0.9(LiBH₄)0.1(P₂S₅).

In some examples, including any of the foregoing, the borohydride bonding layer is amorphous. In some examples, including any of the foregoing, the borohydride bonding layer is semi-crystalline. In some examples, including any of the foregoing, the borohydride bonding layer is polycrystalline.

In some examples, including any of the foregoing, the lithium-stuffed garnet layer comprises a lithium-stuffed garnet selected from LiₓLa_{y}Zr_{z}Oₜ·qAl₂O₃, wherein 4<x<10, 1<y<4, 1<z<3, 6<t<14, and 0≤q≤1.

In some examples, including any of the foregoing, the lithium-stuffed garnet layer comprises a lithium-stuffed garnet selected from Li₇La₃Zr₂O₁₂·Al₂O₂O₃ and Li₇La₃Zr₂O₁₂·0.35Al₂O₃.

In some examples, including any of the foregoing, the lithium-stuffed garnet is doped with Nb, Ga, and/or Ta.₇La₃Zr₂O₁₂·Al₂O₃ and Li₇La₃Zr₂O₁₂·0.35Al₂o₃.

In some examples, including any of the foregoing, the lithium-stuffed garnet layer comprises a lithium-stuffed garnet characterized by the formula LiₐLa_{b}Zr_{c}Al_{d}Me"ₑO_{f}, wherein 5<a<8.5; 2<b<4; 0≤c≤2.5; 0≤d<2; 0≤e<2, and 10<f<13 and Me" is a metal selected from the group consisting of Nb, Ga, Ta, and combinations thereof.

In some examples, including any of the foregoing, the lithium-stuffed garnet layer comprises a lithium-stuffed garnet oxide characterized by the formula LiᵤLaᵥZrₓO_{y}·zAl₂O₃, wherein u is a rational number from 4 to 8; v is a rational number from 2 to 4; x is a rational number from 1 to 3; y is a rational number from 10 to 14; and z is a rational number from 0.05 to 1; wherein u, v, x, y, and z are selected so that the lithium-stuffed garnet oxide is charge neutral.

In some examples, including any of the foregoing, the lithium-stuffed garnet layer comprises a lithium-stuffed garnet oxide characterized by the formula LiᵤLaᵥZrₓO_{y}·zTa₂O₅, wherein u is a rational number from 4 to 10; v is a rational number from 2 to 4; x is a rational number from 1 to 3; y is a rational number from 10 to 14; and z is a rational number from 0 to 1; wherein u, v, x, y, and z are selected so that the lithium-stuffed garnet oxide is charge neutral.

In some examples, including any of the foregoing, the lithium-stuffed garnet layer comprises a lithium-stuffed garnet oxide characterized by the formula LiᵤLaᵥZrₓO_{y} ·zNb₂O₅, wherein u is a rational number from 4 to 10; v is a rational number from 2 to 4; x is a rational number from 1 to 3; y is a rational number from 10 to 14; and z is a rational number from 0 to 1; wherein u, v, x, y, and z are selected so that the lithium-stuffed garnet oxide is charge neutral.

In some examples, including any of the foregoing, the lithium-stuffed garnet layer comprises a lithium-stuffed garnet oxide characterized by the formula LiᵤLaᵥZrₓO_{y}·zGa₂O₃, wherein u is a rational number from 4 to 10; v is a rational number from 2 to 4; x is a rational number from 1 to 3; y is a rational number from 10 to 14; and z is a rational number from 0 to 1; wherein u, v, x, y, and z are selected so that the lithium-stuffed garnet oxide is charge neutral.

In some examples, including any of the foregoing, the lithium-stuffed garnet layer comprises a lithium-stuffed garnet oxide characterized by the formula LiᵤLaᵥZrₓO_{y} zTa₂O₅·bAl₂O₃, wherein u is a rational number from 4 to 10; v is a rational number from 2 to 4; x is a rational number from 1 to 3; y is a rational number from 10 to 14; z is a rational number from 0 to 1; b is a rational number from 0 to 1; wherein z + b ≤ 1; and u, v, x, y, and z are selected so that the lithium-stuffed garnet oxide is charge neutral.

In some examples, including any of the foregoing, the lithium-stuffed garnet layer comprises a lithium-stuffed garnet oxide characterized by the formula LiᵤLaᵥZrₓO_{y}·zNb₂O₅**·**bAl₂O₃, wherein u is a rational number from 4 to 10; v is a rational number from 2 to 4; x is a rational number from 1 to 3; y is a rational number from 10 to 14; z is a rational number from 0 to 1; b is a rational number from 0 to 1; wherein z + b ≤ 1; and u, v, x, y, and z are selected so that the lithium-stuffed garnet oxide is charge neutral.

In some examples, including any of the foregoing, the lithium-stuffed garnet layer comprises a lithium-stuffed garnet oxide characterized by the formula LiᵤLaᵥZrₓO_{y} ·zGa₂O₃**·**bAl₂O₃, wherein u is a rational number from 4 to 10; v is a rational number from 2 to 4; x is a rational number from 1 to 3; y is a rational number from 10 to 14; and is a rational number from 0 to 1; b is a rational number from 0 to 1; wherein z + b ≤ 1; and u, v, x, y, and z are selected so that the lithium-stuffed garnet oxide is charge neutral.

In some examples, including any of the foregoing, the lithium-stuffed garnet layer comprises a lithium-stuffed garnet characterized by the formula Li_{6.4}Ga_{0.2}La₃Zr₂O_{12.3}·bAl₂O₃, wherein u is a rational number from 4 to 10; v is a rational number from 2 to 4; x is a rational number from 1 to 3; y is a rational number from 10 to 14; and is a rational number from 0 to 1; b is a rational number from 0 to 1; wherein z + b ≤ 1; and u, v, x, y, and z are selected so that the lithium-stuffed garnet oxide is charge neutral.

In some examples, including any of the foregoing, the SSEC further includes a positive electrode current collector layer.

In some examples, including any of the foregoing, the SSEC further includes a negative electrode current collector layer. In some examples, the negative electrode current collector layer is a sintered metal. In some examples, the sintered metal is selected from the group consisting of Al, Cu, Ni, Ag, Au, Pt, Pd, or Sn. In some examples, the metal is Ni.

In some examples, including any of the foregoing, the positive electrode layer further comprises a binder, carbon, or both binder and carbon.

In some examples, including any of the foregoing, the lithium-stuffed garnet layer is between and in contact with the negative current collector layer and the borohydride bonding layer.

In some examples, including any of the foregoing, the borohydride bonding layer is between and in contact with the lithium-stuffed garnet layer and the buffer layer.

In some examples, including any of the foregoing, the buffer layer is between and in contact with the borohydride bonding layer and the positive electrode layer.

In some examples, including any of the foregoing, the positive electrode layer is between and in contact with the buffer layer and the positive electrode current collector layer

In some examples, including any of the foregoing, the active material includes a coating or the active material is coated. In some examples, the active material has a coating. In some examples, the active material is coated. In some examples, the active material includes a coating of a material selected from lithium-lanthanum-zirconium oxide (LLZO).

The lithium-stuffed garnet layer may comprise any lithium-stuffed garnet set forth in US Patent Nos. 9,806,372 B2, which issued October 31, 2017, and is titled Garnet MATERIALS FOR LI SECONDARY BATTERIES AND METHODS OF MAKING and USING GARNET MATERIALS, and 9,970,711, which issued May 15, 2018, and is titled LITHIUM STUFFED GARNET SETTER PLATES FOR SOLID ELECTROLYTE FABRICATION. The lithium-stuffed garnet layer made by forming a layer or film of the lithium-stuffed garnet layer described herein, for example by uses the methods in US Patent Nos. 9,806,372 B2. The lithium-stuffed garnet layer may comprise any lithium-stuffed garnet set forth in US Patent No. 9,966,630, which issued May 8, 2018, and is titled ANNEALED GARNET ELECTROLYTE SEPARATORS. **The** lithium-stuffed garnet layer made by forming a layer or film of the lithium-stuffed garnet layer described herein, for example by uses the methods in US Patent Nos. 9,966,630 B2. The lithium-stuffed garnet layer may comprise any lithium-stuffed garnet set forth in US Patent Application Publicaiton No. US20180375149A1, which was filed as US Patent Application No. 15/631,884, filed June 23, 2017, and titled LITHIUM-STUFFED GARNET ELECTROLYTES WITH SECONDARY PHASE INCLUSIONS. The lithium-stuffed garnet layer made by forming a layer or film of the lithium-stuffed garnet layer described herein, for example by uses the methods in US Patent Application No. 15/631,884. The lithium-stuffed garnet layer may comprise any lithium-stuffed garnet set forth in set forth in International PCT Patent Application No. PCT/US2017/039069, filed June 23, 2017, and titled LITHIUM-STUFFED GARNET ELECTROLYTES WITH SECONDARY PHASE INCLUSIONS. The lithium-stuffed garnet layer made by forming a layer or film of the lithium-stuffed garnet layer described herein, for example by uses the methods in PCT/US2017/039069.

In some examples, the lithium-stuffed garnet layer is chemically stable when in contact with Li metal. In some examples, the lithium-stuffed garnet layer is kinetically stable when in contact with Li metal.

In some examples, the lithium-stuffed garnet comprises lithium lanthanum zirconium oxide (LLZO) and has good electrochemical stability and high mechanical strength, e.g. greater than 500 MPa. In some examples, the LLZO is suitable for use with a Li metal anode.

In any examples herein, the lithium-stuffed garnet layer or LLZO may be paired with a bonding agent set forth in WO2017197406A1, which published November 16, 2017, and was filed as International PCT Patent Application No. PCT/US2017/032749, filed 15 May 2017, and entitled SOLID ELECTROLYTE SEPARATOR BONDING AGENT. In any examples herein, the lithium-stuffed garnet are made according to the methods in International PCT Patent Application No. PCT/US2016/027886, which was filed April 15, 2016, and is titled LITHIUM STUFFED GARNET SETTER PLATES FOR SOLID ELECTROLYTE FABRICATION. In any examples herein, the lithium-stuffed garnet are made according to the methods in International PCT Patent Application No. PCT/US2016/027922, which was filed April 15, 2016, and is titled SETTER PLATES FOR SOLID ELECTROLYTE FABRICATION AND METHODS OF USING THE SAME TO PREPARE DENSE SOLID ELECTROLYTES. In any examples herein, the lithium-stuffed garnet are made according to the methods in International PCT Patent Application No. PCT/US2016/043428, which was filed July 21, 2016, and is titled PROCESSES AND MATERIALS FOR CASTING AND SINTERING GREEN GARNET THIN FILMS. In any examples herein, the lithium-stuffed garnet are made according to the methods in US Patent No. 9,970,711, which issued May 15, 2018, and is titled LITHIUM STUFFED GARNET SETTER PLATES FOR SOLID ELECTROLYTE FABRICATION. In any examples herein, the lithium-stuffed garnet are made according to the methods in US Patent No. 9,970,711, which issued May 15, 2018, and is titled LITHIUM STUFFED GARNET SETTER PLATES FOR SOLID ELECTROLYTE FABRICATION. The sulfide in the sulfide catholyte in some examples may be any sulfide set forth in US Patent Nos. 9,172,114, which issued October 27, 2015, and is titled SOLID STATE CATHOLYTES AND ELECTROLYTES FOR ENERGY STORAGE DEVICES. The sulfide in the sulfide catholyte in some examples may be any sulfide set forth in International PCT Patent Application No. PCT/US2016/015982, filed February 1, 2016, and titled METAL SULFIDE ANOLYTE FOR ELECTROCHEMICAL CELLS, and which published as WO 2016/126610 on August 11, 2016. The sulfide in the sulfide catholyte in some examples may be any sulfide set forth in International PCT Patent Application No. PCT/US2016/039424, filed June 24, 2016, and titled COMPOSITE ELECTROLYTES, and which published as WO 2016/210371, on December 29, 2016. The sulfide in the sulfide catholyte in some examples may be any sulfide set forth in US Patent Application Publication No. 2017-0005367 A1, entitled COMPOSITE ELECTROLYTES, which published January 5, 2017. The sulfide in the sulfide catholyte in some examples may be any sulfide set forth in International PCT Patent Application NO. PCT/US2016/064492, filed December 1, 2016, and entitled LITHIUM, PHOSPHORUS, SULFUR, AND IODINE CONTAINING ELECTROLYTE AND CATHOLYTE COMPOSITIONS, ELECTROLYTE MEMBRANES FOR ELECTROCHEMICAL DEVICES, AND ANNEALING METHODS OF MAKING THESE ELECTROLYTES AND CATHOLYTES, and which published as WO 2017/096088 on June 8, 2017.

The sulfide in the buffer layer in some examples may be any sulfide set forth in US Patent Nos. 9,172,114, which issued October 27, 2015, and is titled SOLID STATE CATHOLYTES AND ELECTROLYTES FOR ENERGY STORAGE DEVICES. The sulfide in the buffer layer in some examples may be any sulfide set forth in International PCT Patent Application No. PCT/US2016/015982, filed February 1, 2016, and titled METAL SULFIDE ANOLYTE FOR ELECTROCHEMICAL CELLS, and which published as WO 2016/126610 on August 11, 2016. The sulfide in the buffer layer in some examples may be any sulfide set forth in International PCT Patent Application No. PCT/US2016/039424, filed June 24, 2016, and titled COMPOSITE ELECTROLYTES, and which published as WO 2016/210371, on December 29, 2016.

In some examples, a positive electrode includes about 85 wt% LZO coated NCA, about 13 wt% LSTPS and about 2 wt% binder.

In some examples, including any of the foregoing, the negative electrode is a lithium (Li) metal electrode layer. In some examples, including any of the foregoing, the at least one current collector includes a material selected from the group consisting of carbon (C)-coated nickel (Ni), nickel (Ni), copper (Cu), aluminum (Al), and stainless steel. In some examples, including any of the foregoing, the e negative electrode current collector includes a material selected from the group consisting of carbon (C)-coated nickel (Ni), nickel (Ni), and copper (Cu). In some examples, including any of the foregoing, the positive electrode current collector layer includes a material selected from the group consisting of carbon (C)-coated aluminum and aluminum. In some examples, including any of the foregoing, the negative electrode current collector layer is C-coated Ni. In some examples, including any of the foregoing, the positive electrode current collector layer is C-coated Al.

### • Buffer layer dimensions

In some examples, including any of the foregoing, the thickness of the buffer layer is from about 1 µm to about 50 µm. In some examples, the thickness of the buffer layer is 1 µm. In some examples, the thickness of the buffer layer is 2 µm. In some examples, the thickness of the buffer layer is 3 µm. In some examples, the thickness of the buffer layer is 4 µm. In some examples, the thickness of the buffer layer is 5 µm. In some examples, the thickness of the buffer layer is 6 µm. In some examples, the thickness of the buffer layer is 7 µm. In some examples, the thickness of the buffer layer is 8 µm. In some examples, the thickness of the buffer layer is 9 µm. In some examples, the thickness of the buffer layer is 10 µm.

In some examples, including any of the foregoing, the single ion conducting, solid-state buffer is mixed within the positive electrode layer to a depth of penetration within the positive electrode layer from about 1 µm to about 50 µm. This depth of penetration is measured from the edge where the positive electrode layer interfaces with either the buffer layer or the borohydride bonding layer. In some examples, if the positive electrode layer is 200 µm thick, and the depth of penetration within the positive electrode layer from about 1 µm to about 50 µm, this means that the buffer is present in the positive electrode on the side closest to the buffer layer, if present, or borohydride bonding layer, if no buffer layer present. In some examples, if the positive electrode layer is 200 µm thick, and the depth of penetration within the positive electrode layer from about 1 µm to about 50 µm, this also means that the side of the positive electrode which is contact with the positive current collector has no buffer component.

In some examples, including any of the foregoing, the single ion conducting, solid-state buffer is mixed within the positive electrode layer to a depth of penetration within the positive electrode layer from about 1 µm to about 50 µm. This depth of penetration is measured from the edge where the positive electrode layer interfaces with either the buffer layer or the borohydride bonding layer. In some examples, if the positive electrode layer is 150 µm thick, and the depth of penetration within the positive electrode layer from about 1 µm to about 50 µm, this means that the buffer is present in the positive electrode on the side closest to the buffer layer, if present, or borohydride bonding layer, if no buffer layer present. In some examples, if the positive electrode layer is 150 µm thick, and the depth of penetration within the positive electrode layer from about 1 µm to about 50 µm, this also means that the side of the positive electrode which is contact with the positive current collector has no buffer component.

In some examples, including any of the foregoing, the buffer layer is between and in direct contact with the positive electrode layer and the separator layer. In some instances, the buffer layer has a thickness ranging from about 1 µm to about 15 µm. In some instances, the buffer layer has a thickness of 1 µm. In some instances, the buffer layer has a thickness of 1 µm. In some instances, the buffer layer has a thickness of 2 µm. In some instances, the buffer layer has a thickness of 3 µm. In some instances, the buffer layer has a thickness of 4 µm. In some instances, the buffer layer has a thickness of 5 µm. In some instances, the buffer layer has a thickness of 6 µm. In some instances, the buffer layer has a thickness of 7 µm. In some instances, the buffer layer has a thickness of 8 µm. In some instances, the buffer layer has a thickness of 9 µm. In some instances, the buffer layer has a thickness of 10 µm. In some instances, the buffer layer has a thickness of 11 µm. In some instances, the buffer layer has a thickness of 12 µm. In some instances, the buffer layer has a thickness of 13 µm. In some instances, the buffer layer has a thickness of 14 µm. In some instances, the buffer layer has a thickness of 15 µm.

### • Buffer layer dimensions

In some examples, the bonding layer comprises a lithium borohydride. In some examples, the bonding layer comprises lithium borohydride particles that are at least about 1 µm in average diameter. In some examples, the bonding layer comprises lithium borohydride particles that are about 1 µm to about 50 µm, about 2 µm to about 20 µm, or about 1 µm to about 10 µm in average diameter.

In some examples, prior to assembly of the battery cell, the bonding layer comprises particles that are at least about 1 µm in average diameter. In some examples, the bonding layer particles that are about 1 µm to about 50 µm, about 2 µm to about 20 µm, or about 1 µm to about 10 µm in average diameter.

In some examples, including any of the foregoing, the thickness of the borohydride bonding layer is from about 1 µm to about 50 µm. In some examples, including any of the foregoing, the thickness of the borohydride bonding layer is from about 1 µm to about 50 µm. In some examples, the thickness of the borohydride bonding layer is 1 µm. In some examples, the thickness of the borohydride bonding layer is 2 µm. In some examples, the thickness of the borohydride bonding layer is 3 µm. In some examples, the thickness of the borohydride bonding layer is 4 µm. In some examples, the thickness of the borohydride bonding layer is 5 µm. In some examples, the thickness of the borohydride bonding layer is 6 µm. In some examples, the thickness of the borohydride bonding layer is 7 µm. In some examples, the thickness of the borohydride bonding layer is 8 µm. In some examples, the thickness of the borohydride bonding layer is 9 µm. In some examples, the thickness of the borohydride bonding layer is 10 µm. In some examples, the thickness of the borohydride bonding layer is 11 µm. In some examples, the thickness of the borohydride bonding layer is 12 µm. In some examples, the thickness of the borohydride bonding layer is 13 µm. In some examples, the thickness of the borohydride bonding layer is 14 µm. In some examples, the thickness of the borohydride bonding layer is 15 µm. In some examples, the thickness of the borohydride bonding layer is 16 µm. In some examples, the thickness of the borohydride bonding layer is 17 µm. In some examples, the thickness of the borohydride bonding layer is 18 µm. In some examples, the thickness of the borohydride bonding layer is 19 µm. In some examples, the thickness of the borohydride bonding layer is 20 µm. In some examples, the thickness of the borohydride bonding layer is 31 µm. In some examples, the thickness of the borohydride bonding layer is 32 µm. In some examples, the thickness of the borohydride bonding layer is 33 µm. In some examples, the thickness of the borohydride bonding layer is 34 µm. In some examples, the thickness of the borohydride bonding layer is 35 µm. In some examples, the thickness of the borohydride bonding layer is 36 µm. In some examples, the thickness of the borohydride bonding layer is 37 µm. In some examples, the thickness of the borohydride bonding layer is 38 µm. In some examples, the thickness of the borohydride bonding layer is 39 µm. In some examples, the thickness of the borohydride bonding layer is 40 µm. In some examples, the thickness of the borohydride bonding layer is 41 µm. In some examples, the thickness of the borohydride bonding layer is 42 µm. In some examples, the thickness of the borohydride bonding layer is 43 µm. In some examples, the thickness of the borohydride bonding layer is 44 µm. In some examples, the thickness of the borohydride bonding layer is 45 µm. In some examples, the thickness of the borohydride bonding layer is 46 µm. In some examples, the thickness of the borohydride bonding layer is 47 µm. In some examples, the thickness of the borohydride bonding layer is 48 µm. In some examples, the thickness of the borohydride bonding layer is 49 µm. In some examples, the thickness of the borohydride bonding layer is 50 µm.

In some examples, including any of the foregoing, the borohydride bonding layer penetrates into the buffer layer.

In some examples, including any of the foregoing, the borohydride bonding layer penetrates into the lithium-stuffed garnet layer.

In some examples, including any of the foregoing, the borohydride bonding layer penetrates into the buffer layer and the lithium-stuffed garnet layer.

In some examples, including any of the foregoing, the borohydride bonding layer has a density of 90% or above of the raw material density as measured by quantitative analysis of a cross-section SEM image. Density is determined by analyzing porosity as a function of total area using an SEM image and analytical software.

In some examples, including any of the foregoing, the borohydride bonding layer has a density of 90% or above of the raw material density as measured by quantitative analysis of a cross-section SEM image.

In some examples, including any of the foregoing, the borohydride bonding layer has a melting point below 250°C. In some examples, including any of the foregoing, the borohydride bonding layer has a melting point above 250°C.

In some examples, including any of the foregoing, the SSEC further comprises a negative electrode.

In some examples, including any of the foregoing, the negative electrode is a lithium (Li) metal negative electrode.

In some examples, including any of the foregoing, the lithium-stuffed garnet layer contacts the negative electrode.

In certain embodiments, the composition may be a thin film and include a porosity as determined by SEM for the thin film. For example, in one embodiment, the compositions set forth herein may have a porosity less than 5%. By way of further example, in one embodiment, the compositions set forth herein may have a porosity less than 6%. By way of further example, in one embodiment, the compositions set forth herein may have a porosity less than 7%. By way of further example, in one embodiment, the compositions set forth herein may have a porosity less than 8%. By way of further example, in one embodiment, the compositions set forth herein may have a porosity less than 4%. By way of further example, in one embodiment, the compositions set forth herein may have a porosity less than 3%. By way of further example, in one embodiment, the compositions set forth herein may have a porosity less than 2%. By way of further example, in one embodiment, the compositions set forth herein may have a porosity less than 1%. By way of further example, in one embodiment, the compositions set forth herein may have a porosity less than 0.5%.

In some examples, the solid-state electrochemical stack described above further includes a bonding layer between and in direct contact with the buffer layer and the separator layer.

In some examples, set forth herein is a bonding layer having a thickness of about 1 nm. In some examples, set forth herein is a bonding layer having a thickness of about 5 nm to about 100 nm.

In some examples, set forth herein is a bonding layer having a thickness of about 100 nm to about 1000 nm. In some examples, the bonding layer has a thickness of about 200 nm to about 900 nm, about 300 nm to about 800 nm, or about 500 nm.

In some examples, set forth herein is a bonding layer having a thickness of about 1 µm. In some examples, set forth herein is a bonding layer having a thickness of about 2 µm. In some examples, set forth herein is a bonding layer having a thickness of about 3 µm. In some examples, set forth herein is a bonding layer having a thickness of about 4 µm. In some examples, set forth herein is a bonding layer having a thickness of about 5 µm to about 100 µm. In some examples, set forth herein is a bonding layer having a thickness of about 10 µm to about 50 µm, about 15 µm to about 40 µm, or 20 µm to about 40 µm. In some examples, set forth herein is a bonding layer having a thickness of about 1 µm. In some examples, set forth herein is a bonding layer having a thickness of about 2 µm. In some examples, set forth herein is a bonding layer having a thickness of about 3 µm. In some examples, set forth herein is a bonding layer having a thickness of about 4 µm. In some examples, set forth herein is a bonding layer having a thickness of about 5 µm. In some examples, set forth herein is a bonding layer having a thickness of about 100 µm. In some examples, set forth herein is a bonding layer having a thickness of about 1 µm to about 100 µm, of about 1 µm to about 50 µm, or of about 5 µm to about 50 µm.

In some examples, including any of the foregoing, the bonding layer is greater than 100 nm and less than 10 µm in median thickness. In some examples, including any of the foregoing, the polymer has a crosslink density greater than 0.1% and less than 30 % as measured by ASTM D2765. In some examples, including any of the foregoing, the bonding layer lowers the interfacial impedance between the electrolyte separator and the positive electrode than it otherwise would be in the absence of the bonding layer. In some examples, the bonding layer lowers the interfacial impedance between the electrolyte separator and the positive electrode than it otherwise would be in the absence of the bonding layer. In some examples, the interfacial impedance between the oxide electrolyte separator and the positive electrode is less than 50 Ω·cm² at 50°C, when the bonding layer is positioned between and in direct contact with the oxide electrolyte separator and the positive electrode. In some examples, the interfacial impedance between the oxide electrolyte separator and the positive electrode is less than 25 Ω·cm² at 50°C. In some examples, the interfacial impedance between the oxide electrolyte separator and the positive electrode is less than 10 Ω·cm² at 50°C. In some examples, the interfacial impedance between the oxide electrolyte separator and the positive electrode is less than 5 Ω·cm² at 50°C. In some examples, the interfacial impedance between the oxide electrolyte separator and the positive electrode is less than 5 Ω·cm² at 30°C. In some examples, the interfacial impedance between the oxide electrolyte separator and the positive electrode is less than 5 Ω·cm² at 20°C. In some examples, the interfacial impedance between the oxide electrolyte separator and the positive electrode is less than 5 Ω·cm² at 10°C. In some examples, the interfacial impedance between the oxide electrolyte separator and the positive electrode is less than 5 Ω·cm² at 0°C. In some examples, including any of the foregoing, the interfacial impedance between the electrolyte separator and the positive electrode is less than 50 Ω·cm² at 50°C. In some examples, including any of the foregoing, the interfacial impedance between the electrolyte separator and the positive electrode is less than 25 Ω·cm² at 50°C. In some examples, including any of the foregoing, the interfacial impedance between the electrolyte separator and the positive electrode is less than 10 Ω·cm² at 50°C. In some examples, including any of the foregoing, the interfacial impedance between the electrolyte separator and the positive electrode is less than 5 Ω·cm² at 50°C. In some examples, including any of the foregoing, the positive electrode includes a lithium intercalation material, a lithium conversion material, or a combination thereof.

In some examples, the bonding layer penetrates into the positive electrode. In other examples, bonding layer penetrates into the positive electrode at least 10% of the thickness of the positive electrode. In other examples, bonding layer penetrates into the positive electrode at least 9% of the thickness of the positive electrode. In other examples, bonding layer penetrates into the positive electrode at least 8% of the thickness of the positive electrode. In other examples, bonding layer penetrates into the positive electrode at least 7% of the thickness of the positive electrode. In other examples, bonding layer penetrates into the positive electrode at least 6% of the thickness of the positive electrode. In other examples, bonding layer penetrates into the positive electrode at least 5% of the thickness of the positive electrode. In other examples, bonding layer penetrates into the positive electrode at least 4% of the thickness of the positive electrode. In other examples, bonding layer penetrates into the positive electrode at least 3% of the thickness of the positive electrode. In other examples, bonding layer penetrates into the positive electrode at least % of the thickness of the positive electrode. In other examples, bonding layer penetrates into the positive electrode at least 1% of the thickness of the positive electrode.

In some examples, the bonding layer contacts the catholyte in the positive electrode. In some examples, the bonding layer does not creep around the electrolyte separator. In some examples, the bonding layer does not include components which volatilize and diffuse around the electrolyte separator to contact the Li metal negative electrode.

In some examples, including any of the foregoing, the bonding layer penetrates into the positive electrode at least 10% of the thickness of the positive electrode.

In some examples, including any of the foregoing, the bonding layer contacts the solid state catholyte in the positive electrode.

In some examples, including any of the foregoing, the diameter of the electrolyte separator is greater than the diameter of the positive electrode.

In some examples, including any of the foregoing, the width or diameter of the electrolyte separator is greater than the width or diameter, respectively, of the positive electrode.

In some examples, including any of the foregoing, the electrolyte separator has raised edges, which protect the bonding layer, or its constituent components, from creeping around the electrolyte separator.

In some examples, including any of the foregoing, the coated edges include a coating selected from parylene, polypropylene, polyethylene, alumina, Al₂O₃, ZrO₂, TiO₂, SiO₂, a binary oxide, La₂Zr₂O₇, a lithium carbonate species, or a glass, wherein the glass is selected from SiO₂-B₂O₃, or Al₂O₃.

In some examples, the borohydride bonding layer includes LBHI, LBHIN, [LBH-X], LBHPS, LiI, LPS, L[X]PS, or Li₃PO₄. In some examples, the borohydride bonding layer includes functionalized polymer, such as PEO-LiTFSI, poly-propylene carbonate (PPC)-LiTFSI, poly-ethylene carbonate (PEC)-LiTFSI, Li- poly(2-acrylamido-2-methyl-1-propane sulphonic acid) (PAMPS), Li-Nafion, Li-polyphenylene sulfide (PPS); or solid organic salt pair, such as ethylene carbonate (EC)-LiTFSI, Dimethyl sulfide (DMS)-LiPF₆, and succinonitrile (SCN)-LiBF₄.

### • Other component dimensions

In some examples, including any of the foregoing, the thickness of the positive electrode layer is from about 100 µm to about 1000 µm. In some examples, the thickness of the positive electrode layer is 10 µm. In some examples, the thickness of the positive electrode layer is 20 µm. In some examples, the thickness of the positive electrode layer is 30 µm. In some examples, the thickness of the positive electrode layer is 40 µm. In some examples, the thickness of the positive electrode layer is 50 µm. In some examples, the thickness of the positive electrode layer is 60 µm. In some examples, the thickness of the positive electrode layer is 70 µm. In some examples, the thickness of the positive electrode layer is 80 µm. In some examples, the thickness of the positive electrode layer is 90 µm. In some examples, the thickness of the positive electrode layer is 100 µm. In some examples, the thickness of the positive electrode layer is 110 µm. In some examples, the thickness of the positive electrode layer is 120 µm. In some examples, the thickness of the positive electrode layer is 130 µm. In some examples, the thickness of the positive electrode layer is 140 µm. In some examples, the thickness of the positive electrode layer is 150 µm. In some examples, the thickness of the positive electrode layer is 160 µm. In some examples, the thickness of the positive electrode layer is 170 µm. In some examples, the thickness of the positive electrode layer is 180 µm. In some examples, the thickness of the positive electrode layer is 190 µm. In some examples, the thickness of the positive electrode layer is 200 µm.

In some examples, including any of the foregoing, the thickness of the lithium-stuffed garnet layer is from about 1 µm to about 200 µm. In some examples, the thickness of the lithium-stuffed garnet layer is 10 µm. In some examples, the thickness of the lithium-stuffed garnet layer is 20 µm. In some examples, the thickness of the lithium-stuffed garnet layer is 30 µm. In some examples, the thickness of the lithium-stuffed garnet layer is 40 µm. In some examples, the thickness of the lithium-stuffed garnet layer is 50 µm. In some examples, the thickness of the lithium-stuffed garnet layer is 60 µm. In some examples, the thickness of the lithium-stuffed garnet layer is 70 µm. In some examples, the thickness of the lithium-stuffed garnet layer is 80 µm. In some examples, the thickness of the lithium-stuffed garnet layer is 90 µm. In some examples, the thickness of the lithium-stuffed garnet layer is 100 µm. In some examples, the thickness of the lithium-stuffed garnet layer is 110 µm. In some examples, the thickness of the lithium-stuffed garnet layer is 120 µm. In some examples, the thickness of the lithium-stuffed garnet layer is 130 µm. In some examples, the thickness of the lithium-stuffed garnet layer is 140 µm. In some examples, the thickness of the lithium-stuffed garnet layer is 150 µm. In some examples, the thickness of the lithium-stuffed garnet layer is 160 µm. In some examples, the thickness of the lithium-stuffed garnet layer is 170 µm. In some examples, the thickness of the lithium-stuffed garnet layer is 180 µm. In some examples, the thickness of the lithium-stuffed garnet layer is 190 µm. In some examples, the thickness of the lithium-stuffed garnet layer is 200 µm.

In some examples, including any of the foregoing, the separator layer in a solid-state electrochemical stack described herein is rectangular shaped. In another embodiment, the positive electrode layer in a solid-state electrochemical stack described herein is rectangular shaped. In a different embodiment, the separator layer in a solid-state electrochemical stack described herein is circular shaped. In an embodiment, the positive electrode layer in a solid-state electrochemical stack described herein is circular shaped.

In some examples, including any of the foregoing, the geometric surface area of the positive electrode layer and the geometric surface area separator layer are substantially the same.

In some examples, including any of the foregoing, one edge of the positive electrode layer is 2 cm to 30 cm in length. In some examples, one edge of the positive electrode layer is 2 cm, 3, cm, 4 cm, 5 cm, 6 cm, 7 cm, 8 cm, 9 cm, 10 cm, 11 cm, 12 cm, 13 cm, 14 cm, 15 cm, 16 cm, 17 cm, 18 cm, 19 cm, 20 cm, 21 cm, 22 cm, 23 cm, 24 cm, 25 cm, 26 cm, 27 cm, 28 cm, 29 cm, or 30 cm in length. In some examples, one edge of the separator layer is 2 cm to 30 cm in length. In some examples, one edge of the separator layer is 2 cm, 3, cm, 4 cm, 5 cm, 6 cm, 7 cm, 8 cm, 9 cm, 10 cm, 11 cm, 12 cm, 13 cm, 14 cm, 15 cm, 16 cm, 17 cm, 18 cm, 19 cm, 20 cm, 21 cm, 22 cm, 23 cm, 24 cm, 25 cm, 26 cm, 27 cm, 28 cm, 29 cm, or 30 cm in length.

In certain embodiments, provided herein is a composite having a lithium-stuffed garnet and an LBHI, where the LBHI fills at least 90% of the through-pores and/or surface pores of the lithium-stuffed garnet, and where the LBHI may be a composition having A (LiBH₄)·B·(LiX)·C·(LiNH₂) wherein X is a halide wherein 3≤A≤6, 2≤B≤5, and 0≤C≤9.

In some examples, including any of the foregoing, the electrolyte separator is characterized by the empirical formula LiₓLa_{A}Zr_{B}Oₕ + yAl₂O₃, wherein 3≤x≤8, 2<A<4, 1<B<3, 0≤y≤1, and 6≤h≤15; and wherein subscripts x and h, and coefficient y are selected so that the electrolyte separator is charge neutral.

In some examples, including any of the foregoing, the electrolyte separator is doped with Ga, Nb, or Ta.

In some examples, including any of the foregoing, the electrolyte separator has a surface roughness, on at least one surface, from about 0.01 µm to 10 µm. In some examples, including any of the foregoing, the electrolyte separator has a surface roughness, on at least one surface, from about 0.01 µm to 5 µm. In some examples, including any of the foregoing, the electrolyte separator has a surface roughness, on at least one surface, from about 0.01 µm to 2 µm. In some examples, including any of the foregoing, the electrolyte separator has a density greater than 95% of its theoretical density. In some examples, including any of the foregoing, the electrolyte separator has a density greater than 95% of its theoretical density as determined by scanning electron microscopy (SEM). In some examples, including any of the foregoing, the electrolyte separator has a density greater than 95% of its theoretical density as measured by the Archimedes method. In some examples, including any of the foregoing, the electrolyte separator has a surface flatness of 0.1 µm to about 50 µm.

In some examples, including any of the foregoing, the lithium intercalation material is selected from the group consisting of a nickel manganese cobalt oxide (NMC), a nickel cobalt aluminum oxide (NCA), Li(NiCoAl)O₂, a lithium cobalt oxide (LCO), a lithium manganese cobalt oxide (LMCO), a lithium nickel manganese cobalt oxide (LMNCO), a lithium nickel manganese oxide (LNMO), Li(NiCoMn)O₂, LiMn₂O₄, LiCoO₂, LiMn₂₋ₐNiₐO₄, wherein a is from 0 to 2, or LiMPO₄, wherein M is Fe, Ni, Co, and Mn.

In some examples, including any of the foregoing, the lithium conversion material is selected from the group consisting of FeF₂, NiF₂, FeOₓF₃₋₂ₓ, FeF₃, MnF₃, CoF₃, CuF₂ materials, alloys thereof, and combinations thereof.

In some examples, including any of the foregoing, the bonding layer penetrates into the positive electrode.

In some examples, set forth herein is an electrochemical stack, wherein the electrolyte separator has a thickness between about 10 nm and 50 µm; the bonding layer has a thickness between about 1 µm and 20 µm; and the positive electrode, exclusive of the current collector, has a thickness between about 5 µm and 150 µm.

In some examples, the electrolyte separator has a surface roughness Ra or Rt, on at least one surface, from about 0.1 µm to 10 µm. In other examples, the electrolyte separator has a surface roughness, on at least one surface, from about 0.1 µm to 5 µm. In other examples, the electrolyte separator has a surface roughness, on at least one surface, from about 0.1 µm to 2 µm. In some examples, the electrolyte has a surface roughness from about 0.1 µm to 10 µm at the surface that interfaces the electrolyte separator and the Li metal negative electrode.

In some examples, the electrolyte separator has a density greater than 95% of its theoretical density. In other examples, the electrolyte separator has a density greater than 95% of its theoretical density as determined by scanning electron microscopy (SEM). In certain examples, the electrolyte separator has a density greater than 95% of its theoretical density as measured by the Archimedes method. In some examples, the electrolyte separator has a surface flatness of 0.1 µm to about 50 µm. In some examples, the lithium salt in the bonding layer is selected from LiPF₆, LiBOB, LiTFSi, LiBF₄, LiClO₄, LiAsF₆, LiFSI, LiI, or LiBF₄. In certain examples, the lithium salt in the bonding layer is selected from LiPF₆, LiBOB, or LFTSi. In certain examples, the lithium salt in the bonding layer is LiPF₆ at a concentration of 0.5 M to 2M. In certain examples, the lithium salt in the bonding layer is LiTFSI at a concentration of 0.5 M to 2M. In certain examples, the lithium salt in the bonding layer is present at a concentration from 0.01 M to 10 M.

In some examples, the positive electrode includes a lithium intercalation material, a lithium conversion material, or both a lithium intercalation material and a lithium conversion material. In some examples, the lithium intercalation material is selected from a nickel manganese cobalt oxide Li(NiCoMn)O₂, (NMC), a nickel cobalt aluminum oxide (NCA), Li(NiCoAl)O₂, a lithium cobalt oxide (LCO), a lithium manganese cobalt oxide (LMCO), a lithium nickel manganese cobalt oxide (LMNCO), a lithium nickel manganese oxide (LNMO), LiMn₂O₄, LiCoO₂,LiMn₂-aNiₐO₄, wherein a is from 0 to 2, or LiMPO₄, wherein M is Fe, Ni, Co, or Mn. In others, the lithium conversion material is selected from the group consisting of FeF₂, NiF₂, FeOₓF₃₋₂ₓ, FeF₃, MnF₃, CoF₃, CuF₂ materials, alloys thereof, and combinations thereof. In others, the conversion material is doped with other transition metal fluorides or oxides.

In some examples, the positive electrode includes an electronically conductive source of carbon.

In some examples, the positive electrode includes a solid catholyte and a lithium intercalation material or a lithium conversion material; wherein each of the catholyte and lithium intercalation material or a lithium conversion material independently has a d₅₀ particle size from about 0.1 µm to 5 µm. In some examples, the positive electrode includes a solid catholyte and a lithium intercalation material or a lithium conversion material; wherein each of the catholyte and lithium intercalation material or a lithium conversion material independently has a d₅₀ particle size from about 0.1 µm to 15 µm. In some examples, the bonding layer is characterized by a thickness of about 1 nm to about 5 µm. In some examples, the Li negative electrode is characterized by a thickness of about 10 nm to about 50 µm. In some examples, the oxide separator is characterized by a thickness of about 0.1 µm to about 150 µm. In some examples, oxide separator is characterized by a thickness of about 10 µm to about 50 µm.

In some examples, the coated edges include a coating selected from parylene, epoxy, polypropylene, polyethylene, alumina, Al₂O₃, ZrO₂, TiO₂, SiO₂, a binary oxide, a lithium carbonate species, La₂Zr₂O₇, or a glass, wherein the glass is selected from SiO₂-B₂O₃, or Al₂O₃. In some examples, the electrolyte separator has tapered edges which protect the bonding layer from creeping around the electrolyte separator. In some examples, the edges of the separator electrolyte have been selectively treated with heat (e.g. laser beam) or chemicals (e.g. plasma, water, acid, etc).

In some examples, set forth herein is an electrochemical stack having an electrolyte separator which has a thickness between about 10 and 20 µm; a bonding layer which has a thickness between about 1µm and 5 um; and a positive electrode, exclusive of the current collector, which has a thickness between about 5 µm and 150um. In some examples, set forth herein is an electrochemical stack having an electrolyte separator which has a thickness between about 10 and 50 µm; a bonding layer which has a thickness between about 1µm and 5 um; and a positive electrode, exclusive of the current collector, which has a thickness between about 5 µm and 200 um. In some examples, set forth herein is an electrochemical stack having an electrolyte separator which has a thickness between about 10 and 100 µm; a bonding layer which has a thickness between about 1µm and 5 um; and a positive electrode, exclusive of the current collector, which has a thickness between about 5 µm and 200 um.

### • METHODS

In some examples, set forth herein is a method of making an electrochemical cell, wherein the method includes providing a slurry comprising an active material, a catholyte, and a solvent; depositing the slurry onto a current collector; drying the slurry; providing a second slurry comprising a single ion conducting, solid-state buffer; depositing the second slurry onto a substrate; drying the second slurry; transferring the dried second slurry onto the first slurry once dried to form a stack; applying pressure and heat to the stack; providing a solid-state separator; depositing a borohydride layer onto the solid-state separator; combining the stack with the solid-state separator having a borohydride layer thereupon to form an electrochemical cell stack; and applying pressure and heat to the cell stack.

In some examples, including any of the foregoing, the solid loading is at least 60 wt %.

In some examples, including any of the foregoing, the buffer is LSTPS.

In some examples, the buffer layer is made by a calendering process, wherein the amount of force is at least about 100 psi, 500 psi, 1000 psi, 2000 psi, or more. In some examples, the buffer layer is made under elevated temperatures, such as great than about 40 °C, 50°C, 75 °C, 100 °C, 120 °C, 140 °C, or more. In some examples, the buffer layer is heated to greater than about 100 °C.

In some examples, including any of the foregoing, the pressure is applied uniaxially.

In certain embodiments, disclosed herein is a method for making a thin film including the A· (LiBH₄)·B·(LiX)·C ·(LiNH₂) composition, the method including a) preparing a A· (LiBH₄)·B ·(LiX)·C ·(LiNH₂) composition material, b) providing a molten mixture, wherein the mixture includes A· (LiBH₄)·B ·(LiX)·C ·(LiNH₂), wherein X is fluorine, bromine, chlorine, iodine, or a combination thereof, and wherein 3≤A≤6, 2≤B≤5, and 0≤C≤9; c) dip-coating a substrate in the molten mixture; d) withdrawing the substrate; and e) cooling the substrate to room temperature. In some examples, the substrate is a current collector. In some examples, the substrate is a solid electrolyte. In some examples, the substrate is a lithium-stuffed garnet.

In certain embodiments, provided herein is a method for coating a lithium ion conducting separator electrolyte, the method including: a) providing the separator electrolyte; and b) pressing a composition of A·(LiBH₄)·B·(LiX)·C·(LiNH₂), where X may be fluorine, bromine, chlorine, iodine, or a combination thereof, and wherein 3≤A≤6, 2≤B≤5, and 0≤C≤9at a temperature between 100-280 °C at a pressure of 10-2000 PSI on at least one surface of the separator. For example, in one embodiment, the method for coating a lithium ion conducting separator electrolyte includes a) providing the separator electrolyte; and b) pressing a composition of A·(LiBH₄)·B·(LiX)·C·(LiNH₂), where X is fluorine, and wherein 3≤A≤6, 2≤B≤5, and 0≤C≤9at a temperature between 100-280 °C at a pressure of 10-2000 PSI on at least one surface of the separator. By way of further example, in one embodiment, the method for coating a lithium ion conducting separator electrolyte includes a) providing the separator electrolyte; and b) pressing a composition of A· (LiBH₄)·B ·(LiX)·C ·(LiNH₂), where X is bromine, and wherein 3≤A≤6, 2≤B≤5, and 0≤C≤9 at a temperature between 100-280 °C at a pressure of 10-2000 PSI on at least one surface of the separator. By way of further example, in one embodiment, the method for coating a lithium ion conducting separator electrolyte includes a) providing the separator electrolyte; and b) pressing a composition of A·(LiBH₄)·B·(LiX)·C· (LiNH₂), where X is chlorine, and wherein 3≤A≤6, 2≤B≤5, and 0≤C≤9at a temperature between 100-280 °C at a pressure of 10-2000 PSI on at least one surface of the separator. By way of further example, in one embodiment, the method for coating a lithium ion conducting separator electrolyte includes a) providing the separator electrolyte; and b) pressing a composition of A·(LiBH₄)·B ·(LiX)·C ·(LiNH₂), where X is iodine, and wherein 3≤A≤6, 2≤B≤5, and 0≤C≤9at a temperature between 100-280 °C at a pressure of 10-2000 PSI on at least one surface of the separator. By way of further example, in one embodiment, the method for coating a lithium ion conducting separator electrolyte includes a) providing the separator electrolyte; and b) pressing a composition of A·(LiBH₄)·B·(LiX)·C·(LiNH₂), where X is fluorine, bromine, and chlorine, and wherein 3≤A≤6, 2≤B≤5, and 0≤C≤9at a temperature between 100-280 °C at a pressure of 10-2000 PSI on at least one surface of the separator. By way of further example, in one embodiment, the method for coating a lithium ion conducting separator electrolyte includes a) providing the separator electrolyte; and b) pressing a composition of A· (LiBH₄)·B ·(LiX)·C ·(LiNH₂), where X is fluorine, bromine, and iodine, and wherein 3≤A≤6, 2≤B≤5, and 0≤C≤9at a temperature between 100-280 °C at a pressure of 10-2000 PSI on at least one surface of the separator. By way of further example, in one embodiment, the method for coating a lithium ion conducting separator electrolyte includes a) providing the separator electrolyte; and b) pressing a composition of A·(LiBH₄)·B·(LiX)·C·(LiNH₂), where X is fluorine, chlorine, and iodine, and wherein 3≤A≤6, 2≤B≤5, and 0≤C≤9at a temperature between 100-280 °C at a pressure of 10-2000 PSI on at least one surface of the separator. By way of further example, in one embodiment, the method for coating a lithium ion conducting separator electrolyte includes a) providing the separator electrolyte; and b) pressing a composition of A·(LiBH₄)·B·(LiX)·C·(LiNH₂), where X is bromine, chlorine, and iodine, and wherein 3≤A≤6, 2≤B≤5, and 0≤C≤9at a temperature between 100-280 °C at a pressure of 10-2000 PSI on at least one surface of the separator.

In certain embodiments, provided herein is a method for coating a lithium ion conducting separator electrolyte, the method including: a) providing the separator electrolyte; and b) pressing a composition of A·(LiBH₄)·B·(LiX)·C·(LiNH₂), where X may be fluorine, bromine, chlorine, iodine, or a combination thereof, and wherein 3≤A≤6, 2≤B≤5, and 0≤C≤9at a temperature between 100-280 °C at a pressure of 10-2000 PSI on at least one surface of the separator. For example, in one embodiment, the method for coating a lithium ion conducting separator electrolyte includes a) providing the separator electrolyte; and b) pressing a composition of A·(LiBH₄)·B·(LiX)·C·(LiNH₂), where X is fluorine, and wherein 3≤A≤6, 2≤B≤5, and 0≤C≤9at a temperature between 100-280 °C at a pressure of 10-2000 PSI on at least one surface of the separator. By way of further example, in one embodiment, the method for coating a lithium ion conducting separator electrolyte includes a) providing the separator electrolyte; and b) pressing a composition of A· (LiBH₄)·B ·(LiX)·C ·(LiNH₂), where X is bromine, and wherein 3≤A≤6, 2≤B≤5, and 0≤C≤9 at a temperature between 100-280 °C at a pressure of 10-2000 PSI on at least one surface of the separator. By way of further example, in one embodiment, the method for coating a lithium ion conducting separator electrolyte includes a) providing the separator electrolyte; and b) pressing a composition of A·(LiBH₄)·B·(LiX)·C· (LiNH₂), where X is chlorine, and wherein 3≤A≤6, 2≤B≤5, and 0≤C≤9at a temperature between 100-280 °C at a pressure of 10-2000 PSI on at least one surface of the separator. By way of further example, in one embodiment, the method for coating a lithium ion conducting separator electrolyte includes a) providing the separator electrolyte; and b) pressing a composition of A·(LiBH₄)·B ·(LiX)·C ·(LiNH₂), where X is iodine, and wherein 3≤A≤6, 2≤B≤5, and 0≤C≤9at a temperature between 100-280 °C at a pressure of 10-2000 PSI on at least one surface of the separator. By way of further example, in one embodiment, the method for coating a lithium ion conducting separator electrolyte includes a) providing the separator electrolyte; and b) pressing a composition of A·(LiBH₄)·B·(LiX)·C·(LiNH₂), where X is fluorine, bromine, and chlorine, and wherein 3≤A≤6, 2≤B≤5, and 0≤C≤9at a temperature between 100-280 °C at a pressure of 10-2000 PSI on at least one surface of the separator. By way of further example, in one embodiment, the method for coating a lithium ion conducting separator electrolyte includes a) providing the separator electrolyte; and b) pressing a composition of A· (LiBH₄)·B ·(LiX)·C ·(LiNH₂), where X is fluorine, bromine, or iodine, and wherein 3≤A≤6, 2≤B≤5, and 0≤C≤9 at a temperature between 100-280 °C at a pressure of 10-2000 PSI on at least one surface of the separator. By way of further example, in one embodiment, the method for coating a lithium ion conducting separator electrolyte includes a) providing the separator electrolyte; and b) pressing a composition of A·(LiBH₄)·B·(LiX)·C· (LiNH₂), where X is fluorine, chlorine, or iodine, and wherein 3≤A≤6, 2≤B≤5, and 0≤C≤9 at a temperature between 100-280 °C at a pressure of 10-2000 PSI on at least one surface of the separator. By way of further example, in one embodiment, the method for coating a lithium ion conducting separator electrolyte includes a) providing the separator electrolyte; and b) pressing a composition of A·(LiBH₄)·B·(LiX)·C·(LiNH₂), where X is bromine, chlorine, or iodine, and wherein 3≤A≤6, 2≤B≤5, and 0≤C≤9at a temperature between 100-280 °C at a pressure of 10-2000 PSI on at least one surface of the separator.

In certain embodiments, the temperature in the method is below the melting point (Tₘ) of the separator, and is about 0.8 Tₘ, where Tₘ is expressed in Kelvin (K). In certain embodiments, the method further includes c) holding the pressure between the composition and the separator for 1-300 min.

In certain embodiments, the method further includes d) cooling the coated lithium ion conducting separator electrolyte under pressure for 10-1000 min. In certain embodiments, the method further includes d) cooling the coated lithium ion conducting separator electrolyte under pressure for 10-1000 min to room temperature. In certain embodiments, provided is a method for coating a lithium ion conducting separator electrolyte, the method including a) providing a lithium-stable separator electrolyte; b) providing a mixture of a solvent and an A· (LiBH₄)·B ·(LiX)· C· (LiNH₂) precursor; and c) depositing the mixture on the separator by spray coating, spin coating, dip coating, slot die coating, gravure coating, or microgravure coating. For example, in one embodiment, provided is a method for coating a lithium ion conducting separator electrolyte, the method including a) providing a lithium-stable separator electrolyte; b) providing a mixture of a solvent and an A·(LiBH₄)·B·(LiX)· C· (LiNH₂) precursor; and c) depositing the mixture on the separator by spray coating. By way of further example, in one embodiment, provided is a method for coating a lithium ion conducting separator electrolyte, the method including a) providing a lithium-stable separator electrolyte; b) providing a mixture of a solvent and an A·(LiBH₄)·B·(LiX)·C·(LiNH₂) precursor; and c) depositing the mixture on the separator by spin coating. By way of further example, in one embodiment, provided is a method for coating a lithium ion conducting separator electrolyte, the method including a) providing a lithium-stable separator electrolyte; b) providing a mixture of a solvent and an A·(LiBH₄)·B·(LiX)· C· (LiNH₂) precursor; and c) depositing the mixture on the separator by dip coating. By way of further example, in one embodiment, provided is a method for coating a lithium ion conducting separator electrolyte, the method including a) providing a lithium-stable separator electrolyte; b) providing a mixture of a solvent and an A (LiBH₄)·B·(LiX)·C·(LiNH₂) precursor; and c) depositing the mixture on the separator by slot die coating. By way of further example, in one embodiment, provided is a method for coating a lithium ion conducting separator electrolyte, the method including a) providing a lithium-stable separator electrolyte; b) providing a mixture of a solvent and an A·(LiBH₄)·B·(LiX)·C·(LiNH₂) precursor; and c) depositing the mixture on the separator by gravure coating. By way of further example, in one embodiment, provided is a method for coating a lithium ion conducting separator electrolyte, the method including a) providing a lithium-stable separator electrolyte; b) providing a mixture of a solvent and an A·(LiBH₄)·B·(LiX)· C· (LiNH₂) precursor; and c) depositing the mixture on the separator by microgravure coating.

In certain embodiments, the solvent in the method is selected from the group consisting of tetrahydrofuran, diethyl ether, methanol, and ethanol. For example, in one embodiment, the solvent in the method is tetrahydrofuran. By way of further example, in one embodiment, the solvent in the method is diethyl ether. By way of further example, in one embodiment, the solvent in the method is ethanol. By way of further example, in one embodiment, the solvent in the method is methanol.

In certain embodiments, the lithium-stable separator in the method has defects on the surface.

In certain embodiments, provided is a composition including A·(LiBH₄)·B·(LiX)·C·(LiNH₂), where X is fluorine, bromine, chloride, iodine, or a combination thereof, and wherein 3≤A≤6, 2≤B≤5, and 0≤C≤9 having a XRD pattern characterized by peaks at approximately 14.5°, 15.5°, 16.4° 19.3° and 29.6° 2θ. For example, in one embodiment, provided is a composition including A·(LiBH₄)·B·(LiX)·C·(LiNH₂), where X is fluorine, and wherein 3≤A≤6, 2≤B≤5, and 0≤C≤9 having a XRD pattern characterized by peaks at approximately 14.5°, 15.5°, 16.4° 19.3° and 29.6° 2θ. By way of further example, in one embodiment, provided is a composition including A·(LiBH₄)·B·(LiX)·C·(LiNH₂), where X is bromine, and wherein 3≤A≤6, 2≤B≤5, and 0≤C≤9 having a XRD pattern characterized by peaks at approximately 14.5°, 15.5°, 16.4° 19.3° and 29.6° 2 θ. By way of further example, in one embodiment, provided is a composition including A·(LiBH₄)·B·(LiX)·C·(LiNH₂), where X is chloride, and wherein 3≤A≤6, 2≤B≤5, and 0≤C≤9 having a XRD pattern characterized by peaks at approximately 14.5°, 15.5°, 16.4° 19.3° and 29.6° 2 θ. By way of further example, in one embodiment, provided is a composition including A·(LiBH₄)·B·(LiX)·C·(LiNH₂), where X is iodine, and wherein 3≤A≤6, 2≤B≤5, and 0≤C≤9 having a XRD pattern characterized by peaks at approximately 14.5°, 15.5°, 16.4° 19.3° and 29.6° 2 0. By way of further example, in one embodiment, provided is a composition including A·(LiBH₄)·B·(LiX)·C·(LiNH₂), where X is fluorine, bromine, and chloride, and wherein 3≤A≤6, 2≤B≤5, and 0≤C≤9 having a XRD pattern characterized by peaks at approximately 14.5°, 15.5°, 16.4° 19.3° and 29.6° 2 θ. By way of further example, in one embodiment, provided is a composition including A·(LiBH₄)·B·(LiX)·C·(LiNH₂), where X is fluorine, bromine, and iodine, and wherein 3≤A≤6, 2≤B≤5, and 0≤C≤9 having a XRD pattern characterized by peaks at approximately 14.5°, 15.5°, 16.4° 19.3° and 29.6° 2 θ. By way of further example, in one embodiment, provided is a composition including A·(LiBH₄)·B·(LiX)·C·(LiNH₂), where X is fluorine, chloride, and iodine, and wherein 3≤A≤6, 2≤B≤5, and 0≤C≤9 having a XRD pattern characterized by peaks at approximately 14.5°, 15.5°, 16.4° 19.3° and 29.6° 2 θ. By way of further example, in one embodiment, provided is a composition including A·(LiBH₄)·B·(LiX)·C·(LiNH₂), where X is bromine, chlorine, and iodine, and wherein 3≤A≤6, 2≤B≤5, and 0≤C≤9 having a XRD pattern characterized by peaks at approximately 14.5°, 15.5°, 16.4° 19.3° and 29.6° (2θ).

In some examples, including any of the foregoing, the polymeric bonding layer should be as thin as possible, for example, less than 5µm, less than 2µm, or less than 1µm. The bonding layer may be a thin film which is deposited from solution via spray coating, gravure coating, slot die coating, dip coating, spin casting and similar techniques using solutions of DMF, NMP, THF, toluene, acetonitrile, or similar solvents. It may also be deposited from a melt above 50°C. A free standing thin film can also be pressed against the cathode and separator at low temperatures (< 120°C) and pressures (<1000 psi).

In certain embodiments, the molten LBHXN is applied via spin coating. A spin coater with heating capability is used for this embodiment. Powder is first applied on the substrate to be coated. The spin coater is heated to or above the melting point of the LBHXN. After melting, the substrate is rotated at speed of 100-5000 rpm while heat is applied. It is to be understood that the spin speed may correlate strongly with the coating film thickness. After rotation stops, the 2^{nd} layer, which could be a solid-state cathode film, or another lithium ion conducting separator (which is the same or a different Li ion conductor than the first substrate) is laminated at a pressure of 10-2000 pounds per square inch (PST). Heat is optionally applied. After cooling the laminate to room temperature, the substrate, LBHXN and top layer are bonded together very well and cannot be separated without breaking.

In some examples, the substrate may be spin coated at a speed of at least about 100 rpm, 500 rpm, 1000 rpm, 2000 rpm, 3000 rpm, or more.

In some examples, set forth herein is a process of making an electrochemical device, including the following steps: providing a positive electrode includes an electrochemically active material and a solid state catholyte; providing a solid state catholyte includes a sulfide single ion conductor; providing a electrolyte separator includes a lithium-stuffed garnet; providing a bonding layer includes a polymer and a lithium salt; providing a stack wherein the electrolyte separator is between, and contacts, the lithium metal negative electrode and the bonding layer; and the bonding layer is between, and contacts, the electrolyte separator and the positive electrode; and bonding, adhering, or laminating the bonding layer to the positive electrode and the electrolyte separator by pressing against the stack at low temperatures and pressures.

In some examples, the pressure used during formation of a bonding layer, a buffer layer, a positive electrode layer, or any combination thereof, is at least 5000 Pascals, 10 kiloPascals (kPa), 100 kPa, 500 kPa, 1000 kPa, 10,000 kPa, 100,000 kPa, 1 MPa, 10 MPa, or 100 MPa. In some examples, the pressure used during formation of a bonding layer, a buffer layer, a positive electrode layer, or any combination thereof, is at least 1000 kPa, 10,000 kPa, 100,000 kPa, 1 MPa, 10 MPa, or 100 MPa.

In some examples, the pressure used during cycling of an electrochemical cell described herein is performed at more than atmospheric pressure and at a pressure of at least 100 Pascals, 1000 Pascals, 5000 Pascals, 10 kiloPascals (kPa), 100 kPa, 500 kPa, 1000 kPa, 10,000 kPa, 100,000 kPa, 1 MPa, 10 MPa, or 100 MPa.

In some examples, including any of the foregoing, the pressure is less than 1000 PSI. In some examples, including any of the foregoing, the pressure is less than 300 PSI. In some examples, including any of the foregoing, the temperature is less than 180°C. In some examples, including any of the foregoing, the temperature is less than 120°C. In some examples, including any of the foregoing, the process is performed in a clean room. In some examples, including any of the foregoing, the clean room has a Dewpoint less than -20°C, or less than -40°C. In some examples, including any of the foregoing, the clean room is a class 10,000 cleanroom.

In some examples, set forth herein is a process of making an electrochemical device, including, providing a positive electrode includes an electrochemically active material and a solid state catholyte, providing a solid state catholyte includes a sulfide single ion conductor; providing a electrolyte separator includes a lithium-stuffed garnet; providing a bonding layer includes a polymer and a lithium salt; providing a stack wherein the electrolyte separator contacts the bonding layer; and the bonding layer is between, and contacts, the electrolyte separator and the positive electrode; and bonding, adhering, or laminating the bonding layer to the positive electrode and the electrolyte separator by pressing against the stack at low temperatures and pressures.

In some examples, including any of the foregoing, the pressure is less than 1000 PSI. In some examples, including any of the foregoing, the pressure is less than 300 PSI.

In some examples, including any of the foregoing, the temperature is less than 180°C. In some examples, including any of the foregoing, the temperature is less than 120°C.

In some examples, including any of the foregoing, the process is performed in a clean room. In some examples, including any of the foregoing, the clean room has a Dewpoint less than -20°C, or less than -40°C. In some examples, including any of the foregoing, the clean room class 10,000 cleanroom or better.

In some examples, the borohydride bonding layer is heated to a temperature to which it melts or partially melts during processing to form an intimate contact with both the lithium-stuffed garnet layer and the buffer layer in contact with the positive electrode.

In some examples, the borohydride bonding layer melts or partially melts during processing to form an intimate contact with both the lithium-stuffed garnet layer and the positive electrode with a buffer mixed therein.

In some examples, set forth herein are multiple layers of bonding layers. In some examples, set forth herein are multiple layers of "oxide-sulfide interfacial layer," *i.e.,* multiple bonding layers. In some examples, these bonding layers are kinetically stable to both oxide or sulfides. In some examples, these bonding layers promote or maintains oxide-sulfide interfacial contact. In some examples, these bonding layers fill in the gap between oxide and sulfide which improves ionic conductivity therebetween.

In some examples, the borohydride bonding layer is spin coated onto lithium-stuffed garnet layers., *i.e.,* shields, the high voltage positive electrode. In some examples, the borohydride bonding layer is melt casted onto lithium-stuffed garnet layers. In some examples, the borohydride bonding layer is melt casted onto lithium-stuffed garnet layers.

In some examples, set forth herein is a process for producing a solid-state electrochemical stack including: (a) casting a first slurry including a sulfide solid electrolyte powder onto a first substrate to form a first layer; (b) casting a second slurry including a sulfide solid electrolyte powder and a positive electrode active powder onto a second substrate to form a second layer; and (c) calendering the first layer and the second layer, wherein the first layer and second layer are in contact with each other.

In one group of embodiments, prior to step (a), the process includes providing a first substrate. In such instances, prior to step (a), the process includes providing a first slurry including a sulfide solid electrolyte powder. In such instances, prior to step (b), the process includes providing a second substrate. In such instances, prior to step (b), the process includes providing a second slurry including a sulfide solid electrolyte powder and a positive electrode active powder. In some instances the process includes step (f) contacting the second layer and the first layer.

### Additional Embodiments

In an embodiment, set forth herein is a solid-state electrochemical stack comprising: (a) a positive electrode layer comprising a positive electrode active material, and a sulfide catholyte, wherein the positive electrode layer has a porosity less than 15% by volume (v/v); (b) a buffer layer comprising a sulfide electrolyte in contact with the positive electrode layer, wherein the buffer layer has a porosity less than 15% v/v; and (c) a separator layer comprising a member selected from the group consisting of lithium-stuffed garnet and LPSX, wherein the separator layer has a porosity less than 10% v/v; and wherein the buffer layer is between the positive electrode layer and the separator layer.

In some embodiments, including any of the foregoing, the sulfide catholyte and sulfide electrolyte are solids.

In some embodiments, including any of the foregoing, the buffer layer substantially covers the positive electrode layer.

In some embodiments, including any of the foregoing, the buffer layer covers the positive electrode layer.

In some embodiments, including any of the foregoing, the buffer layer is uniformly dense.

In some embodiments, including any of the foregoing, the buffer layer is uniformly thick.

In some embodiments, including any of the foregoing, the buffer layer is in direct contact with the positive electrode layer and the separator layer.

In some embodiments, including any of the foregoing, a bonding layer is between and in direct contact with the buffer layer and the separator layer.

In some embodiments, including any of the foregoing, the sulfide catholyte is a sulfide single ion conductor.

In some embodiments, including any of the foregoing, the sulfide catholyte is an electrolyte comprising lithium (Li), phosphorus (P), and sulfur (S).

In some embodiments, including any of the foregoing, the catholyte comprises iodine (I).

In some embodiments, including any of the foregoing, the catholyte comprises chlorine (Cl), bromine (Br), iodine (I), or a combination thereof.

In some embodiments, including any of the foregoing, the catholyte comprises a member selected from the group consisting of tin (Sn), germanium (Ge), arsenic (As), silicon (Si), and a combination thereof.

In some embodiments, including any of the foregoing, the sulfide catholyte is selected from LPSI, LSTPS, LSPSCl, LBHI and LPS.

In some embodiments, including any of the foregoing, the sulfide catholyte is LSTPS.

In some embodiments, including any of the foregoing, the sulfide catholyte is LPSI.

In some embodiments, including any of the foregoing, the sulfide electrolyte is a sulfide single ion conductor.

In some embodiments, including any of the foregoing, the positive electrode layer comprising a positive electrode active material at a mass loading of about 75 - about 90 % by mass.

In some embodiments, including any of the foregoing, the positive electrode active material comprises a lithium intercalation material, a lithium conversion material, or both a lithium intercalation material and a lithium conversion material.

In some embodiments, including any of the foregoing, the positive electrode active material comprises a lithium intercalation material; and wherein the intercalation material is selected from the group consisting of a nickel manganese cobalt oxide (NMC), a nickel cobalt aluminum oxide (NCA), Li(NiCoAl)O₂, a lithium cobalt oxide (LCO), a lithium manganese cobalt oxide (LMCO), a lithium nickel manganese cobalt oxide (LMNCO), a lithium nickel manganese oxide (LNMO), Li(NiCoMn)O₂, LiMn₂O₄, LiCoO₂, and LiMn₂₋ₐNiₐO₄, wherein a is from 0 to 2, or LiMPO₄, wherein M is Fe, Ni, Co, or Mn.

In some embodiments, including any of the foregoing, the positive electrode active material comprises a lithium conversion material; and wherein the lithium conversion material is selected from the group consisting of FeF₂, NiF₂, FeOₓF₃₋₂ₓ, FeF₃, MnF₃, CoF₃, CuF₂ materials, alloys thereof, and combinations thereof.

In some embodiments, including any of the foregoing, the intercalation material is NCA.

In some embodiments, including any of the foregoing, the intercalation material is NMC.

In some embodiments, including any of the foregoing, the solid-state electrochemical stack further comprises a bonding layer.

In some embodiments, including any of the foregoing, the bonding layer comprises a borohydride composition.

In some embodiments, including any of the foregoing, the buffer layer is between and in direct contact with the positive electrode layer and a borohydride layer, wherein the borohydride layer is between and in direct contact with the buffer layer and the separator layer.

In some embodiments, including any of the foregoing, the borohydride composition is represented by the following formula:

A·(LiBH₄)·B·(LiX)·C·(LiNH₂), wherein X is selected from fluorine (F), bromine (Br), chloride (Cl), iodine (I), and a combination thereof, wherein 3≤A≤6, 2≤B≤5, and 0≤C≤9.

In some embodiments, including any of the foregoing, the borohydride composition is represented by the following formula: A· (LiBH₄)·B·(LiX)·C ·(LiNH₂), wherein X is selected from fluorine (F), bromine (Br), chloride (Cl), iodine (I), and a combination thereof, wherein 3≤A≤6, 2≤B≤5, and 3≤C≤9.

In some embodiments, including any of the foregoing, the borohydride composition is represented by the following formula: A· (LiBH₄)·B ·(LiX)·C ·(LiNH₂), wherein X is selected from fluorine (F), bromine (Br), chloride (Cl), iodine (I), and a combination thereof, wherein 3≤A≤6, 2≤B≤5, and 3≤C≤6.

In some embodiments, including any of the foregoing, the borohydride composition is selected from one of the following formula: 3LiBH₄·2LiI·3LiNH₂ or 3LiBH₄·4LiI·9LiNH₂.

In some embodiments, including any of the foregoing, the bonding layer further comprises LiI, LPS, LXPS, Li₃PO₄, or a combination thereof.

In some embodiments, including any of the foregoing, the solid-state electrochemical stack comprises (d) a negative electrode current collector in direct contact with the separator layer.

In some embodiments, including any of the foregoing, the solid-state electrochemical stack comprises (e) a positive electrode current collector in direct contact with the positive electrode layer.

In some embodiments, including any of the foregoing, the solid-state electrochemical stack comprises (d) a negative electrode current collector and (e) a negative electrode, wherein the (e) negative electrode is between and in direct contact with the separator layer and the negative electrode current collector.

In some embodiments, including any of the foregoing, the negative electrode is a lithium (Li) metal electrode layer.

In some embodiments, including any of the foregoing, at least one current collector comprises a material selected from the group consisting of carbon (C)-coated nickel (Ni), nickel (Ni), copper (Cu), aluminum (Al), stainless steel, alloys thereof, and combinations thereof.

In some embodiments, including any of the foregoing, the negative electrode current collector comprises a material selected from the group consisting of carbon (C)-coated nickel (Ni), nickel (Ni), copper (Cu), alloys thereof, and combinations thereof.

In some embodiments, including any of the foregoing, the positive electrode current collector layer comprises a material selected from the group consisting of carbon (C)-coated aluminum and aluminum.

In some embodiments, including any of the foregoing, negative electrode current collector layer is C-coated Ni.

In some embodiments, including any of the foregoing, the separator layer is rectangular shaped.

In some embodiments, including any of the foregoing, the positive electrode layer is rectangular shaped.

In some embodiments, including any of the foregoing, the separator layer is circular shaped.

In some embodiments, including any of the foregoing, the geometric surface area of the positive electrode layer and the geometric surface area separator layer are substantially the same.

In some embodiments, including any of the foregoing, one edge of the positive electrode layer is 2 cm -30 cm in length.

In some embodiments, including any of the foregoing, one edge of the separator layer is 2 cm -30 cm in length.

In some embodiments, including any of the foregoing, the positive electrode layer has a diameter that is 10 cm in length.

In some embodiments, including any of the foregoing, the separator layer has a diameter that is 10 cm in length.

In some embodiments, including any of the foregoing, the positive electrode layer comprises a percolating network of ion conductors.

In some embodiments, including any of the foregoing, the separator layer comprises a percolating network of ion conductors.

In some embodiments, including any of the foregoing, the separator layer comprises a polymer.

In some embodiments, including any of the foregoing, the positive electrode layer comprises a carbon at a mass loading of about 0 to about 1 %.

In some embodiments, including any of the foregoing, the carbon at a mass loading of about 0 to about 1 % is C65 or vapor-grown carbon fibers (VGCF).

In some embodiments, including any of the foregoing, the positive electrode layer comprises a binder at a mass loading of about 0 to about 2.5 %.

In some embodiments, including any of the foregoing, the binder at a mass loading of about 0 to about 2.5 % comprises a binder selected from the group consisting of polyacrylonitrile (PAN), polypropylene, polyethylene oxide (PEO), polymethyl methacrylate (PMMA), polyvinyl chloride (PVC), polyvinyl pyrrolidone (PVP), polyethylene oxide poly(allyl glycidyl ether) PEO-AGE, polyethylene oxide 2-methoxyethoxy)ethyl glycidyl ether (PEO-MEEGE), polyethylene oxide 2-methoxyethoxy)ethyl glycidyl poly(allyl glycidyl ether) (PEO-MEEGE-AGE), polysiloxane, polyvinylidene fluoride (PVDF), polyvinylidene fluoride hexafluoropropylene (PVDF-HFP), ethylene propylene (EPR), nitrile rubber (NPR), styrene-butadiene-rubber (SBR), polybutadiene polymer, polybutadiene rubber (PB), polyisobutadiene rubber (PIB), polyolefin, alpha-polyolefin, an alpha-olefin, ethylene alpha-polyolefin, polyisoprene rubber (PI), polychloroprene rubber (CR), acrylonitrile-butadiene rubber (NBR), polyethyl acrylate (PEA), polyvinylidene fluoride (PVDF), polyethylene, POB3, a polyolefin, a rubber, or a combination thereof.

In some embodiments, including any of the foregoing, the thickness of the positive electrode layer is from about 10 µm to about 500 µm.

In some embodiments, including any of the foregoing, the thickness of the positive electrode layer is from 100 µm to about 500 µm.

In some embodiments, including any of the foregoing, the thickness of the separator layer is from about 1 µm to about 200 µm.

In some embodiments, including any of the foregoing, the thickness of the positive electrode current collector layer is from about 3 µm to about 100 µm.

In some embodiments, including any of the foregoing, the thickness of the positive electrode current collector layer is about 15 µm.

In some embodiments, including any of the foregoing, the thickness of the negative electrode current collector layer is from about 3 µm to about 100 µm.

In some embodiments, including any of the foregoing, the thickness of the positive electrode current collector layer is about 15 µm.

In some embodiments, including any of the foregoing, the thickness of the tabs on the positive electrode current collector or negative electrode current collector is from about 5 µm to about 100 µm.

In some embodiments, including any of the foregoing, the positive electrode layer has a porosity less than 1 % v/v.

In some embodiments, including any of the foregoing, the buffer layer has a porosity less than 1 % v/v.

In some embodiments, including any of the foregoing, the positive electrode layer has a porosity of at least 0.01 % v/v.

In some embodiments, including any of the foregoing, the buffer layer has a porosity of at least 0.01 % v/v.

In some embodiments, including any of the foregoing, the separator layer comprises lithium-stuffed garnet having the empirical formula Li₇La₃Zr₂O₁₂-xAl₂O₃, wherein x is a rational number and 0≤x≤1.

In some embodiments, including any of the foregoing, the separator layer comprises lithium-stuffed garnet oxide characterized by the formula LiuLavZrxOy·zAl2O3, wherein u is a rational number from 4 to 8; v is a rational number from 2 to 4; x is a rational number from 1 to 3; y is a rational number from 10 to 14; and z is a rational number from 0.05 to 1; wherein u, v, x, y, and z are selected so that the lithium-stuffed garnet oxide is charge neutral.

In some embodiments, including any of the foregoing, the separator layer comprises LiₓLa_{y}Zr_{z}Oₜ·qAl₂O₃, wherein 4<x<10, 1<y<4, 1<z<3, 6<t<14, and 0≤q≤1.

In some embodiments, including any of the foregoing, the separator layer comprises Li₇La₃Zr₂O₁₂·Al₂O₃ or Li₇La₃Zr₂O₁₂·0.35Al₂O₃.

In some embodiments, including any of the foregoing, the lithium-stuffed garnet is doped with Nb, Ga, and/or Ta.

In another embodiment, set forth herein is a solid-state electrochemical cell (SSEC), comprising: (a) a positive electrode layer comprising an active material and a sulfide catholyte; (b) a single ion conducting, solid-state buffer; (c) a borohydride bonding layer; and (d) a lithium-stuffed garnet layer; wherein the buffer is mixed within the positive electrode layer, or is a layer in contact with the positive electrode layer, or both; wherein the borohydride bonding layer is between and in contact with the lithium-stuffed garnet layer and either (i) the positive electrode layer with a buffer mixed therein or (ii) a buffer layer in contact with the positive electrode.

In some embodiments, including any of the foregoing, the single ion conducting, solid-state buffer is mixed within the positive electrode layer.

In some embodiments, including any of the foregoing, the single ion conducting, solid-state buffer is a layer in contact with the positive electrode layer.

In some embodiments, including any of the foregoing, the single ion conducting, solid-state buffer is mixed within the positive electrode layer and is present as a layer in contact with the positive electrode layer.

In some embodiments, including any of the foregoing, the single ion conducting, solid-state buffer layer prevents direct contact between the borohydride bonding layer and the positive electrode layer.

In some embodiments, including any of the foregoing, the thickness of the positive electrode layer is from about 100 µm to about 1000 µm.

In some embodiments, including any of the foregoing, the thickness of the buffer layer is from about 0.5 µm to about 50 µm.

In some embodiments, including any of the foregoing, the single ion conducting, solid-state buffer is mixed within the positive electrode layer to a depth of penetration within the positive electrode layer from about 1 µm to about 50 µm from the edge where the positive electrode layer interfaces with either the buffer layer or the borohydride bonding layer.

In some embodiments, including any of the foregoing, the thickness of the lithium-stuffed garnet layer is from about 1 µm to about 200 µm.

In some embodiments, including any of the foregoing, the thickness of the borohydride bonding layer is from about 0.5 µm to about 50 µm.

In some embodiments, including any of the foregoing, the borohydride bonding layer penetrates into the buffer layer.

In some embodiments, including any of the foregoing, the borohydride bonding layer penetrates into the lithium-stuffed garnet layer.

In some embodiments, including any of the foregoing, the borohydride bonding layer has a density of 90% or above of the raw material density.

In some embodiments, including any of the foregoing, the borohydride bonding layer has less than 10% porosity by volume.

In some embodiments, including any of the foregoing, the borohydride bonding layer has a melting point below 250°C.

In some embodiments, including any of the foregoing, the borohydride bonding layer has a melting point above 250°C.

In some embodiments, including any of the foregoing, the solid-state electrochemical stack comprises a negative electrode.

In some embodiments, including any of the foregoing, the negative electrode is a lithium (Li) metal negative electrode.

In some embodiments, including any of the foregoing, the lithium-stuffed garnet layer contacts the negative electrode.

In some embodiments, including any of the foregoing, the buffer layer comprises a binder at 0.01 to 10 % by weight,

The SSEC of embodiment 120, wherein the binder is a polymer and does not conduct electrons or Li⁺ ions.

In some embodiments, including any of the foregoing, the buffer layer comprises an organic polymer at 10% by volume or less.

In some embodiments, including any of the foregoing, the polymer is selected from the group consisting of polyacrylonitrile (PAN), polypropylene, polyethylene oxide (PEO), polymethyl methacrylate (PMMA), polyvinyl chloride (PVC), polyvinyl pyrrolidone (PVP),
polyethylene oxide poly(allyl glycidyl ether) PEO-AGE,
polyethylene oxide 2-methoxyethoxy)ethyl glycidyl ether (PEO-MEEGE),
polyethylene oxide 2-methoxyethoxy)ethyl glycidyl poly(allyl glycidyl ether) (PEO-MEEGE-AGE), polysiloxane, polyvinylidene fluoride (PVDF), ethylene alpha-olefin copolymer,
polyvinylidene fluoride hexafluoropropylene (PVDF-HFP), ethylene propylene (EPR), nitrile rubber (NPR), styrene-butadiene-rubber (SBR), polybutadiene polymer, polybutadiene rubber (PB), polyisobutadiene rubber (PIB), polyisoprene rubber (PI), polychloroprene rubber (CR), acrylonitrile-butadiene rubber (NBR), polyethyl acrylate (PEA), polyvinylidene fluoride (PVDF), and polyethylene.

In some embodiments, including any of the foregoing, the buffer layer or buffer component does not include an organic polymer.

In some embodiments, including any of the foregoing, the positive electrode potential is shielded from the lithium-stuffed garnet layer potential.

In some embodiments, including any of the foregoing, the active material potential in the positive electrode is shielded from the lithium-stuffed garnet layer potential.

In some embodiments, including any of the foregoing, the active material is coated.

In some embodiments, including any of the foregoing, the active material is coated with a coating selected from the group consisting of lithium niobium oxide, lithium zirconium oxide, lithium aluminum oxide, lithium tantalum oxide, lithium hafnium oxide, niobium oxide, zirconium oxide, aluminum oxide, tantalum oxide, and hafnium oxide.

In some embodiments, including any of the foregoing, the active material is uncoated.

In some embodiments, including any of the foregoing, the positive electrode comprises a lithium intercalation material, a lithium conversion material, or both a lithium intercalation material and a lithium conversion material.

In some embodiments, including any of the foregoing, the intercalation material is selected from the group consisting of a nickel manganese cobalt oxide (NMC), a nickel cobalt aluminum oxide (NCA), Li(NiCoAl)O₂, a lithium cobalt oxide (LCO), a lithium manganese cobalt oxide (LMCO), a lithium nickel manganese cobalt oxide (LMNCO), a lithium nickel manganese oxide (LNMO), Li(NiCoMn)O₂, LiMn₂O₄, LiCoO₂, and LiMn₂₋ₐNiaO₄, wherein a is from 0 to 2, or LiMPO₄, wherein M is Fe, Ni, Co, or Mn.

In some embodiments, including any of the foregoing, the lithium conversion material is selected from the group consisting of FeF₂, NiF₂, FeOxF₃₋₂ₓ, FeF₃, MnF₃, CoF₃, CuF₂ materials, alloys thereof, and combinations thereof.

In some embodiments, including any of the foregoing, the sulfide catholyte and the single ion conducting, solid-state buffer comprise the same type of material.

In some embodiments, including any of the foregoing, sulfide catholyte or the single ion conducting, solid-state buffer, or both, are selected from the group consisting of LSS, SLOPS, LSTPS, LSTPSCl, SLOBS, LATS, and LPS+X, wherein X is selected from the group consisting of Cl, I, Br, and combinations thereof.

In some embodiments, including any of the foregoing, sulfide catholyte or the single ion conducting, solid-state buffer, or both, are selected from the group consisting of LPSI, LXPS, LSTPS, LSPSCl, LPSCl, LSPSBr, and LPSBr.

In some embodiments, including any of the foregoing, sulfide catholyte or the single ion conducting, solid-state buffer, or both, are selected from x·Li₂S:y·SiS₂, wherein x and y are each independently a number from 0 to 1, and wherein x+y= 1.

In some embodiments, including any of the foregoing, the sulfide catholyte or the single ion conducting, solid-state buffer, or both, are selected from the group consisting of LSS, LGPS, LSTPS, and LSPS.

In some embodiments, including any of the foregoing, the sulfide catholyte or the single ion conducting, solid-state buffer, or both, are characterized by one of the following formula: LiₐSi_{b}Sn_{c}P_{d}Sₑ, wherein 2≤a≤8, 0≤b≤1, 0≤c≤1, 0.5≤d≤2.5, and 2≤e≤12; LiₐSi_{b}P_{c}S_{d}Xₑ, wherein 8<a<12, 1<b<3, 1<c<3, 8<d<14, and 0<e<1, wherein X is F, Cl, Br, or I; Li_{g}AsₕSnⱼSₖOₗ, wherein 2≤g≤6, 0≤h≤1, 0≤j≤1, 2≤k≤6, and 0≤l≤10; or LiₘPₙSₚI_{q}, wherein 2≤m≤6, 0≤n≤1, 0≤p≤ 1, 2≤q≤ 6; a mixture of (Li₂S):(P₂S₅) having a molar ratio of Li₂S:P₂S₅ from about 10:1 to about 6:4 and LiI, wherein the ratio of [(Li₂S):(P₂S₅)]:LiI is from 95:5 to 50:50; LPS+X, wherein X is selected from Cl, I, or Br; vLi₂S+wP₂S₅+ yLiX; vLi₂S+wSiS₂+ yLiX; or vLi₂S+wB₂S₃+ yLiX.

In some embodiments, including any of the foregoing, the sulfide catholyte comprises LSTPS.

In some embodiments, including any of the foregoing, the sulfide catholyte is characterized by the following formula: LiₐSi_{b}Sn_{c}P_{d}Sₑ, wherein 2≤a≤8, 0≤b≤1, 0≤c≤1, 0.5≤d≤2.5, and 2≤e≤12.

In some embodiments, including any of the foregoing, the sulfide catholyte is characterized by the following formula: LiₐSi_{b}Sn_{c}P_{d}Sₑ, wherein 2≤a≤5, 0≤b≤0.5, 0≤c≤0.5, 0.5≤d≤2, and 2≤e≤12.

In some embodiments, including any of the foregoing, the single ion conducting, solid-state buffer comprises LSTPS.

In some embodiments, including any of the foregoing, the borohydride bonding layer comprises a lithium borohydride, a sodium borohydride, or a potassium borohydride.

In some embodiments, including any of the foregoing, the lithium borohydride, sodium borohydride, or potassium borohydride is doped with LiNH₂.

In some embodiments, including any of the foregoing, any one or more of the lithium borohydride, sodium borohydride, or potassium borohydride is doped with LiI.

In some embodiments, including any of the foregoing, any one or more of the lithium borohydride, sodium borohydride, or potassium borohydride is doped with LiNH₂ and LiI.

In some embodiments, including any of the foregoing, the borohydride bonding layer comprises a borohydride composition comprising A(LiBH₄)(1-A)(P₂S₅), wherein 0.05≤A≤0.95.

In some embodiments, including any of the foregoing, 0.5<A<0.95.

In some embodiments, including any of the foregoing, A is 0.85, 0.9, or 9.95.

In some embodiments, including any of the foregoing, the borohydride bonding layer comprises 0.9(LiBH₄)0.1(P₂S₅).

In some embodiments, including any of the foregoing, the borohydride bonding layer comprises a borohydride composition comprising: A·(LiBH₄)·B·(LiX)·C·(LiNH₂), wherein X is fluorine, bromine, chlorine, iodine, or a combination thereof, and wherein 3≤A≤6, 2≤B≤5, and 0≤C≤9.

In some embodiments, including any of the foregoing, 3≤A≤6, 2≤B≤5, and 3≤C≤9.

In some embodiments, including any of the foregoing, the X is bromine, chlorine, iodine, or a combination thereof.

In some embodiments, including any of the foregoing, X is chlorine.

In some embodiments, including any of the foregoing, X is bromine.

In some embodiments, including any of the foregoing, X is iodine.

In some embodiments, including any of the foregoing, 3≤A≤6, 3≤B≤5, and 3≤C≤9

In some embodiments, including any of the foregoing, 4≤A≤6, 4≤B≤5, and 4≤C≤6

In some embodiments, including any of the foregoing, the borohydride bonding layer comprises a borohydride composition, wherein the composition is 3LiBH₄·2LiCl·3LiNH₂ or 3LiBH₄·4LiCl·9LiNH₂.

In some embodiments, including any of the foregoing, the borohydride bonding layer comprises a borohydride composition, wherein the composition is 3LiBH₄·2LiBr·3LiNH₂ or 3LiBH₄·4LiBr·9LiNH₂.

In some embodiments, including any of the foregoing, the borohydride bonding layer comprises a borohydride composition, wherein the composition is 3LiBH₄·2LiI·3LiNH₂ or 3LiBH₄·4LiI·9LiNH₂.

In some embodiments, including any of the foregoing, the borohydride bonding layer comprises a borohydride composition selected from LBHIN and LBHN.

In some embodiments, including any of the foregoing, the borohydride bonding layer comprises KBH₄+LiNH₂.

In some embodiments, including any of the foregoing, the borohydride bonding layer is amorphous.

In some embodiments, including any of the foregoing, the borohydride bonding layer is semi-crystalline.

In some embodiments, including any of the foregoing, the borohydride bonding layer is polycrystalline.

In some embodiments, including any of the foregoing, the lithium-stuffed garnet layer comprises a lithium-stuffed garnet selected from LiₓLa_{y}Zr_{z}Oₜ·qAl₂O₃, wherein 4<x<10, 1<y<4, 1<z<3, 6<t<14, and 0≤q≤1.

In some embodiments, including any of the foregoing, the lithium-stuffed garnet layer comprises a lithium-stuffed garnet selected from Li₇La₃Zr₂O₁₂·Al₂O₃ and Li₇La₃Zr₂O₁₂·0.35Al₂O₃.

In some embodiments, including any of the foregoing, the lithium-stuffed garnet is doped with Nb, Ga, and/or Ta.

In some embodiments, including any of the foregoing, the lithium-stuffed garnet layer comprises a lithium-stuffed garnet characterized by the formula LiₐLa_{b}Zr_{c}Al_{d}Me"ₑO_{f}, wherein 5<a<8.5; 2<b<4; 0≤c≤2.5; 0≤d<2; 0≤e<2, and 10<f<13 and Me" is a metal selected from the group consisting of Nb, Ga, Ta, and combinations thereof.

In some embodiments, including any of the foregoing, the lithium-stuffed garnet layer comprises a lithium-stuffed garnet oxide characterized by the formula LiᵤLaᵥZrₓO_{y}·zAl₂O₃, wherein u is a rational number from 4 to 8; v is a rational number from 2 to 4; x is a rational number from 1 to 3; y is a rational number from 10 to 14; and z is a rational number from 0.05 to 1; wherein u, v, x, y, and z are selected so that the lithium-stuffed garnet oxide is charge neutral. In some embodiments, including any of the foregoing, the lithium-stuffed garnet layer comprises a lithium-stuffed garnet oxide characterized by the formula LiᵤLaᵥZrₓO_{y}·zTa₂O₅, wherein u is a rational number from 4 to 10; v is a rational number from 2 to 4; x is a rational number from 1 to 3; y is a rational number from 10 to 14; and z is a rational number from 0 to 1; wherein u, v, x, y, and z are selected so that the lithium-stuffed garnet oxide is charge neutral.

In some embodiments, including any of the foregoing, the lithium-stuffed garnet layer comprises a lithium-stuffed garnet oxide characterized by the formula LiᵤLaᵥZrₓO_{y}·zNb₂O₅, wherein u is a rational number from 4 to 10; v is a rational number from 2 to 4; x is a rational number from 1 to 3; y is a rational number from 10 to 14; and z is a rational number from 0 to 1; wherein u, v, x, y, and z are selected so that the lithium-stuffed garnet oxide is charge neutral.

In some embodiments, including any of the foregoing, the lithium-stuffed garnet layer comprises a lithium-stuffed garnet oxide characterized by the formula LiᵤLaᵥZrₓO_{y}·zGa₂O₃, wherein u is a rational number from 4 to 10; v is a rational number from 2 to 4; x is a rational number from 1 to 3; y is a rational number from 10 to 14; and z is a rational number from 0 to 1; wherein u, v, x, y, and z are selected so that the lithium-stuffed garnet oxide is charge neutral.

In some embodiments, including any of the foregoing, the lithium-stuffed garnet layer comprises a lithium-stuffed garnet oxide characterized by the formula LiᵤLaᵥZrₓO_{y}·zTa₂O₅·bAl₂O₃, wherein u is a rational number from 4 to 10; v is a rational number from 2 to 4; x is a rational number from 1 to 3; y is a rational number from 10 to 14; z is a rational number from 0 to 1; b is a rational number from 0 to 1; wherein z + b ≤ 1; and u, v, x, y, and z are selected so that the lithium-stuffed garnet oxide is charge neutral.

In some embodiments, including any of the foregoing, the lithium-stuffed garnet layer comprises a lithium-stuffed garnet oxide characterized by the formula LiᵤLaᵥZrₓO_{y}·zNb₂O₅·bAl₂O₃, wherein u is a rational number from 4 to 10; v is a rational number from 2 to 4; x is a rational number from 1 to 3; y is a rational number from 10 to 14; z is a rational number from 0 to 1; b is a rational number from 0 to 1; wherein z + b ≤ 1; and u, v, x, y, and z are selected so that the lithium-stuffed garnet oxide is charge neutral.

In some embodiments, including any of the foregoing, the lithium-stuffed garnet layer comprises a lithium-stuffed garnet oxide characterized by the formula LiᵤLaᵥZrₓO_{y}·zGa₂O₃·bAl₂O₃, wherein u is a rational number from 4 to 10; v is a rational number from 2 to 4; x is a rational number from 1 to 3; y is a rational number from 10 to 14; and z is a rational number from 0 to 1; b is a rational number from 0 to 1; wherein z + b ≤ 1; and u, v, x, y, and z are selected so that the lithium-stuffed garnet oxide is charge neutral.

In some embodiments, including any of the foregoing, the lithium-stuffed garnet layer comprises a lithium-stuffed garnet characterized by the formula Li_{6.4}Ga_{0.2}La₃Zf₂O₁₂.

In some embodiments, including any of the foregoing, the SSEC comprises a positive electrode current collector layer.

In some embodiments, including any of the foregoing, the SSEC comprises a negative electrode current collector layer.

In some embodiments, including any of the foregoing, the negative electrode current collector layer is a sintered metal.

In some embodiments, including any of the foregoing, the sintered metal is selected from the group consisting of Al, Cu, Ni, Ag, Au, Pt, Pd, or Sn.

In some embodiments, including any of the foregoing, the metal is Ni.

In some embodiments, including any of the foregoing, the positive electrode layer further comprises a binder, carbon, or both binder and carbon

In some embodiments, including any of the foregoing, the lithium-stuffed garnet layer is between and in contact with the negative current collector layer and the borohydride bonding layer.

**In** some embodiments, including any of the foregoing, the borohydride bonding layer is between and in contact with the lithium-stuffed garnet layer and the buffer layer.

**In** some embodiments, including any of the foregoing, the buffer layer is between and in contact with the borohydride bonding layer and the positive electrode layer.

**In** some embodiments, including any of the foregoing, the positive electrode layer is between and in contact with the buffer layer and the positive electrode current collector layer

**In** some embodiments, including any of the foregoing, the negative electrode layer is between and in contact with the lithium-stuffed garnet layer and the negative electrode current collector layer.

**In** an embodiment, set forth herein is a battery comprising the SSEC of any one of embodiments set forth herein.

**In** an embodiment, set forth herein is an electric vehicle comprising the battery of any one of the embodiments set forth herein.

**In** an embodiment, set forth herein is a method of making an electrochemical cell: providing a slurry comprising an active material, a catholyte, and a solvent; depositing the slurry onto a current collector; drying the slurry; providing a second slurry comprising a single ion conducting, solid-state buffer; depositing the second slurry onto a substrate; drying the second slurry; transferring the dried second slurry onto the first slurry once dried to form a stack; applying pressure and heat to the stack; providing a solid-state separator; depositing a borohydride layer onto the solid-state separator; combining the stack with the solid-state separator having a borohydride layer thereupon to form an electrochemical cell stack; and applying pressure and heat to the cell stack.

**In** some embodiments, including any of the foregoing, the solid loading is at least 60 wt %.

In some embodiments, including any of the foregoing, the buffer is LSTPS.

In some embodiments, including any of the foregoing, pressure is applied uniaxially

In an embodiment, set forth herein is a dual layer stack comprising: (a) a positive electrode layer comprising an active material and a sulfide catholyte; and (b) a single ion conducting, solid-state buffer; wherein the buffer is mixed within the positive electrode layer, or is a layer in contact with the positive electrode layer, or both.

In some embodiments, including any of the foregoing, the single ion conducting, solid-state buffer is mixed within the positive electrode layer.

In some embodiments, including any of the foregoing, the single ion conducting, solid-state buffer is a layer in contact with the positive electrode layer.

In some embodiments, including any of the foregoing, the single ion conducting, solid-state buffer is mixed within the positive electrode layer and is present as a layer in contact with the positive electrode layer.

In some embodiments, including any of the foregoing, the buffer is mixed within the positive electrode layer to a depth of penetration within the positive electrode layer from about 1 µm to about 50 µm from the edge where the positive electrode layer interfaces with either the buffer layer or the borohydride bonding layer.

In some embodiments, including any of the foregoing, the thickness of the lithium-stuffed garnet layer is from about 1 µm to about 200 µm.

In some embodiments, including any of the foregoing, the buffer layer comprises an organic polymer at 10% by volume or less.

In some embodiments, including any of the foregoing, the polymer is selected from the group consisting of polyacrylonitrile (PAN), polypropylene, polyethylene oxide (PEO), polymethyl methacrylate (PMMA), polyvinyl chloride (PVC), polyvinyl pyrrolidone (PVP), polyethylene oxide poly(allyl glycidyl ether) PEO-AGE, polyethylene oxide 2-methoxyethoxy)ethyl glycidyl ether (PEO-MEEGE), polyethylene oxide 2-methoxyethoxy)ethyl glycidyl poly(allyl glycidyl ether) (PEO-MEEGE-AGE), polysiloxane, polyvinylidene fluoride (PVDF), ethylene alpha-olefin copolymer,
polyvinylidene fluoride hexafluoropropylene (PVDF-HFP), ethylene propylene (EPR), nitrile rubber (NPR), styrene-butadiene-rubber (SBR), polybutadiene polymer, polybutadiene rubber (PB), polyisobutadiene rubber (PIB), polyisoprene rubber (PI), polychloroprene rubber (CR), acrylonitrile-butadiene rubber (NBR), polyethyl acrylate (PEA), polyvinylidene fluoride (PVDF), and polyethylene.

In some embodiments, including any of the foregoing, the active material is coated.

In some embodiments, including any of the foregoing, the active material is coated with a coating selected from the group consisting of lithium niobium oxide, lithium zirconium oxide, lithium aluminum oxide, lithium tantalum oxide, lithium hafnium oxide, niobium oxide, zirconium oxide, aluminum oxide, tantalum oxide, and hafnium oxide.

In some embodiments, including any of the foregoing, the active material is uncoated.

In some embodiments, including any of the foregoing, the positive electrode comprises a lithium intercalation material, a lithium conversion material, or both a lithium intercalation material and a lithium conversion material.

In some embodiments, including any of the foregoing, the intercalation material is selected from the group consisting of a nickel manganese cobalt oxide (NMC), a nickel cobalt aluminum oxide (NCA), Li(NiCoAl)O₂, a lithium cobalt oxide (LCO), a lithium manganese cobalt oxide (LMCO), a lithium nickel manganese cobalt oxide (LMNCO), a lithium nickel manganese oxide (LNMO), Li(NiCoMn)O₂, LiMn₂O₄, LiCoO₂, and LiMn₂-aNiaO₄, wherein a is from 0 to 2, or LiMPO₄, wherein M is Fe, Ni, Co, or Mn.

In some embodiments, including any of the foregoing, the lithium conversion material is selected from the group consisting of FeF₂, NiF₂, FeOxF₃₋₂ₓ, FeF₃, MnF₃, CoF₃, CuF₂ materials, alloys thereof, and combinations thereof

In some embodiments, including any of the foregoing, the sulfide catholyte or the single ion conducting, solid-state buffer, or both, are selected from the group consisting of LSS, SLOPS, LSTPS, LSTPSCl, SLOBS, LATS, and LPS+X, wherein X is selected from the group consisting of Cl, I, Br, and combinations thereof.

In some embodiments, including any of the foregoing, the sulfide catholyte or the single ion conducting, solid-state buffer, or both, are selected from the group consisting of LPSI, LXPS, LSTPS, LSPSCl, LPSCl, LSPSBr, and LPSBr.

In some embodiments, including any of the foregoing, the sulfide catholyte or the single ion conducting, solid-state buffer, or both, are selected from x·Li₂S:y·SiS₂, wherein x and y are each independently a number from 0 to 1, and wherein x+y= 1.

In some embodiments, including any of the foregoing, the sulfide catholyte or the single ion conducting, solid-state buffer, or both, are selected from the group consisting of LSS, LGPS, LSTPS, and LSPS.

In some embodiments, including any of the foregoing, the sulfide catholyte or the single ion conducting, solid-state buffer, or both, are characterized by one of the following formula: LiₐSi_{b}Sn_{c}P_{d}Sₑ, wherein 2≤a≤8, 0≤b≤1, 0≤c≤1, 0.5≤d≤2.5, and 2≤e≤12; LiₐSi_{b}P_{c}S_{d}Xₑ, wherein 8<a<12, 1<b<3, 1<c<3, 8<d<14, and 0<e<1, wherein X is F, Cl, Br, or I; Li_{g}AsₕSnⱼSₖOₗ, wherein 2≤g≤6, 0≤h≤1, 0≤j≤1, 2≤k≤6, and 0≤l≤10; or LiₘPₙSₚI_{q}, wherein 2≤m≤6, 0≤n≤1, 0≤p≤ 1, 2≤q≤ 6; a mixture of (Li₂S):(P₂S₅) having a molar ratio of Li₂S:P₂S₅ from about 10:1 to about 6:4 and LiI, wherein the ratio of [(Li₂S):(P₂S₅)]:LiI is from 95:5 to 50:50; LPS+X, wherein X is selected from Cl, I, or Br; vLi₂S+wP₂S₅+ yLiX; vLi₂S+wSiS₂+ yLiX; or vLi₂S+wB₂S₃+ yLiX. In these embodiments, x, w, and y each, individually in each instance, can range from, and including, 0 to, and including, 1.

In some embodiments, including any of the foregoing, the sulfide catholyte comprises LSTPS.

In some embodiments, including any of the foregoing, the sulfide catholyte is characterized by the following formula: LiₐSi_{b}Sn_{c}P_{d}Sₑ, wherein 2≤a≤8, 0≤b≤1, 0≤c≤1, 0.5≤d≤2.5, and 2≤e≤12.

In some embodiments, including any of the foregoing, the sulfide catholyte is characterized by the following formula: LiₐSi_{b}Sn_{c}P_{d}Sₑ, wherein 2≤a≤5, 0≤b≤0.5, 0≤c≤0.5, 0.5≤d≤2, and 2≤e≤12.

In some embodiments, including any of the foregoing, the lithium-stuffed garnet layer comprises a lithium-stuffed garnet selected from LiₓLa_{y}Zr_{z}Oₜ·qAl₂O₃, wherein 4<x<10, 1<y<4, 1<z<3, 6<t<14, and 0≤q≤1.

Although specific advantages have been enumerated above, various embodiments may include some, none, or all of the enumerated advantages. Other technical advantages may become readily apparent to one of ordinary skill in the art after review of the following figures and description.

### • EXAMPLES

Reagents, chemicals, and materials were commercially purchased unless specified otherwise to the contrary. Chemical reagents and solvents were purchased commercially and used without purification, unless otherwise noted. Pouch cell containers were purchased from Showa Denko. The Electrochemical potentiostat used was an Arbin potentiostat. Electrical impedance spectroscopy (EIS) was performed with a Biologic VMP3, VSP, VSP-300, SP-150, or SP-200. Viscosity is measured using Rheometer under the shear rate of 100 s⁻¹. Milling was performed using a Retsch PM 400 Planetary Ball Mill. Mixing was performed using a Fischer Scientific vortex mixer, a Flaktek speed mixer, or a Primix filmix homogenizer. Casting was performed on a TQC drawdown table. Calendering was performed on an IMC calender. Light scattering was performed on a Horiba, model: Partica, model no: LA-950V2, general term: laser scattering particle size distribution analyzer.

Electron microscopy was performed in a FEI Quanta SEM, a Helios 600i, or a Helios 660 FIB-SEM, though equivalent tools may be substituted. XRD was performed in a Bruker D8 Advance ECO or a Rigaku MiniFlex 2 with Cu K-α radiation, 6mm slit width, at a scan time of 76 ms per step or 0.4 seconds per step, and at room temperature. Optical imaging was performed with an optical camera. DC cycling was performed with Arbin BT-2043, or BT-G, though it is understood that equivalent tools may be substituted.

### EXAMPLE 1

**Step One** (1): A solid-state positive electrode layer was prepared. A slurry was prepared with 30-80 weight % solid loading in 20-70 % toluene. The solid loading comprised 70-95 wt % lithiated lithium zirconium oxide (LZO) coated lithiated nickel-cobalt-aluminum oxide active material (NCA), 13 wt % LSTPS and 2 wt % binder. The LSTPS composition was characterized as LiₐSi_{b}Sn_{c}P_{d}Sₑ, wherein 2≤a≤8, 0≤b≤1, 0≤c≤1, 0.5≤d≤2.5, and 4≤e≤12, and further it comprised an oxygen element from greater than 0 to 15 atomic %, and was prepared as described in US Patent No. 9,172,114, which issued October 27, 2015, and is titled SOLID STATE CATHOLYTES AND ELECTROLYTES FOR ENERGY STORAGE DEVICES.

The slurry was cast using a doctor blade on carbon coated Al foil. The resulting cast slurry was dried at room temperature to 120°C for 1-24 hours to form a positive electrode layer film on the carbon coated Al foil. This carbon coated Al foil acted as a current collector when the electrochemical cell was assembled in step seven (7). The positive electrode layer was adhered to this current collector after drying.

**Step Two (2):** A buffer layer in contact with the solid-state positive electrode layer was prepared. A slurry was prepared with 10-70 wt % LSTPS in toluene. The slurry was cast using doctor blade on Ni foil. The resulting cast slurry was dried at room temperature to 120°C for 1-24 hours to form a buffer layer film. In this example, the buffer layer included the same chemical composition LSTPS as was used in the positive electrode layer. Without being bound to theory, it is proposed that this layer does not contain electron conductors. This buffer layer thereby blocks electrons from accessing the borohydride bonding layer. This way, the buffer layer shields the positive electrode layer potential to bonding layer potential. This, in turn, allows the buffer layer to shield the negative electrode (anode) potential from the positive electrode layer.

**Step Three (3):** The buffer layer film was peeled-off, *i.e.,* removed, from the Ni foil after the drying in **step two (2).** The buffer layer was then transferred and placed on top of the positive electrode layer, which was prepared according to **step one (1),** to produce a stack (buffer layer - positive electrode layer - current collector).

**Step Four (4):** Uniaxial pressure of approximately 300 MPa was applied at low temperature (room temperature) to the stack produced in **step three (3).** The stack was left under pressure at high temperature (150-180 °C).

**Step Five (5):** The lithium-stuffed garnet layer was made according to the methods of forming a layer or film of the lithium-stuffed garnet in US Patent Nos. 9,806,372 B2, which issued October 31, 2017, and is titled GARNET MATERIALS FOR LI SECONDARY BATTERIES AND METHODS OF MAKING and USING GARNET MATERIALS, and 9,970,711, which issued May 15, 2018, and is titled LITHIUM STUFFED GARNET SETTER PLATES FOR SOLID ELECTROLYTE FABRICATION.

**Step Six (6):** A borohydride bonding layer was prepared. The borohydride composition used to form the borohydride bonding layer was described according to International PCT Patent Application No. PCT/US2017/057735, filed October 20, 2017, and entitled ELECTROLYTE SEPARATORS INCLUDING LITHIUM BOROHYDRIDE AND COMPOSITE ELECTROLYTE SEPARATORS OF LITHIUM-STUFFED GARNET AND LITHIUM BOROHYDRIDE; also International PCT Patent Application No. PCT/US2017/057739, filed October 20, 2017, and entitled BOROHYDRIDE-SULFIDE INTERFACIAL LAYER IN ALL SOLID-STATE BATTERY. The composition, 3LiBH₄·2LiCl·3LiNH₂, was melted and spin-coated onto the lithium-stuffed garnet film prepared in **step five (5).** The borohydride bonding layer forms an intimate contact with both the lithium-stuffed garnet and the buffer layer in contact with the positive electrode layer.

**Step Seven (7):** The lithium-stuffed garnet film having a LBHIN spin-coated layer thereupon was placed on top of the stack resulting from **step four (4),** and in which the LBHIN borohydride bonding layer was in direct contact with the buffer layer. This stack was then densified by applying pressure of approximately 10,000 pounds per square inch (PSI) at the temperature at which the LBHIN melts (250 °C). The stack was then cooled to room temperature.

**Step Eight (8):** The stack resulting from **step seven (7)** was adhered to a current collector on the side of the lithium-stuffed garnet film not having a LBHIN spin-coated layer thereupon to form an electrochemical cell. Prior to adhering the current collector, lithium metal is evaporated onto the lithium-stuffed garnet to form a lithium metal negative electrode. The electrochemical cell included 30 µm of evaporated lithium.

**Step Nine (9):** The stack resulting from **step eight (8)** was cycled to form a lithium metal anode between the current collector adhered in and the lithium-stuffed garnet film.

### EXAMPLE 2

An electrochemical cell was constructed according to **steps one (1)** through **eight (8)** in Example 1. This cell was electrochemically cycled between 3.0V-4.2V at C/3 rate, 45°C, with an initial formation cycle at C/10. The electrochemical cells were pressurized to 300 pounds per square inch (psi).

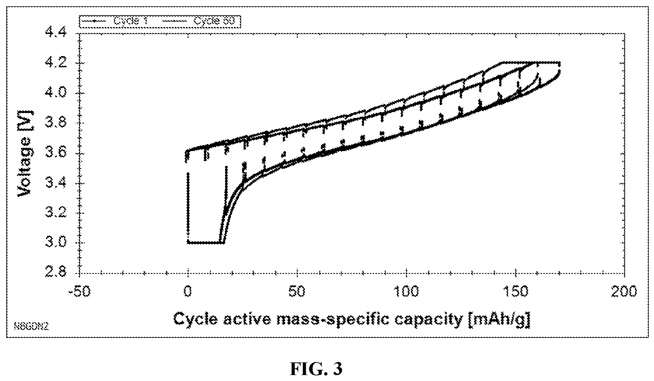

The results are shown in **FIG. 3-5****.**

**FIG. 3** demonstrates that the electrochemical cell completed 50 cycles at C/3 rate at 45 °C without significant capacity loss. The first and 50^{th} cycles are overlaid in **FIG. 3****.**

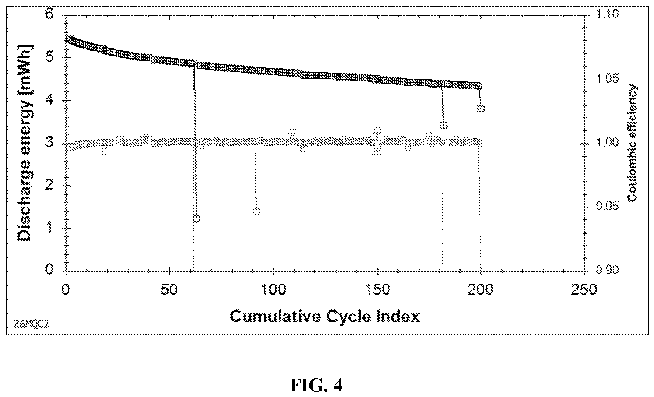

**FIG. 4** demonstrates that the electrochemical cell completed 200 cycles and retained greater than 80% of its energy at the 200^{th} cycle. The columbic efficiency was observed to be close to 1 (>0.999 for most cycles). The first (1^{st}) cycle efficacy is greater than 90%. It is worth comparing these unexpected results with the results in Kato, *et al*., DOI: 10.1038/NENERGY.2016.30, which reports cycling data for an electrochemical cell having LiNbO₃-coated LiCoO₂ positive electrode active materials and a sulfide solid-state electrolyte (Li_{9.6}P₃S₁₂, Li₁₀GeP₂S₁₂, Li_{9.54}Si_{1.74}P_{1.44}S_{11.7}Cl_{0.3}). Kato, *et al*., report a columbic efficiency of 90%, 61% and 39% respectively in Fig 4. In Kato, *et al.,* however, only low voltage (2.5V) electrochemical cells were tested. These low voltage (2.5V) cells would be expected to have a high coulombic efficiency. However, the 2.5 V cell only showed a columbic efficiency of 93% at cycle 1, and 99% at cycle 10 and cycle 100. In contrast to Kato, *et al*., the electrochemical cells prepared in this Example were observed to a coulombic efficiency of about 100% (greater than 99.9%) after the 10 cycles, as shown in **FIG. 4****,** in the instant provisional patent application. With comparison to prior art, the demonstrated Columbic efficiency is higher if tested under same conditions, indicating improved electrochemical stability on sulfide-cathode interface.

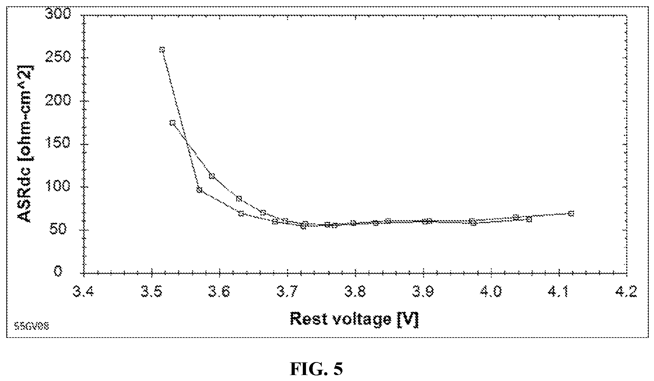

**FIG. 5** demonstrates that the electrochemical cell has a low area-specific resistance (ASR) of approximately 54 Ω-cm² at 45 °C. LSTPS and the lithium-stuffed garnet each individually may have a high (*e.g.,* 1000 Ω-cm² or more) area specific resistance (ASR) at room temperature. It is therefore unexpected that simply by pressing the LSTPS and the lithium-stuffed garnet together, as done in Example 1, to form a heterogeneous interface therebetween, a low ASR resulted in the cell which comprised both LSTPS and lithium-stuffed garnet.

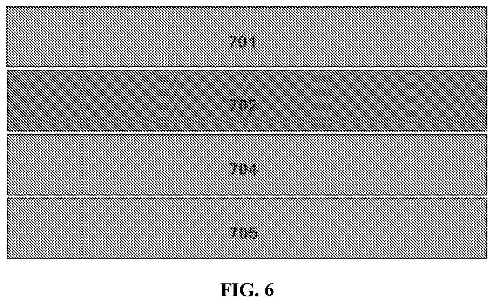

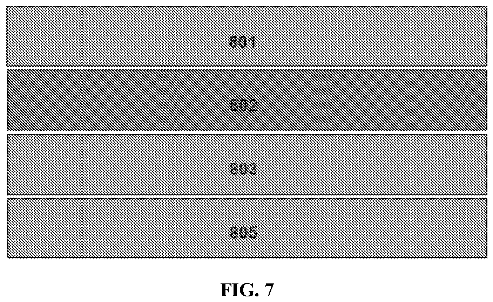

**FIG. 6** and **FIG. 7** show schematics of electrochemical cells tested. The electrochemical cells were prepared according to Example 1 and tested according to Example 2. The electrochemical cell depicted by **FIG. 6** included layer **701,** which represents an evaporated lithium metal anode. Layer **702** represents a lithium-stuffed garnet layer. Layer **704** represents a buffer layer. Layer **705** represents a positive electrode layer.

The electrochemical cell depicted by **FIG. 7** included layer **801,** which represents an evaporated lithium metal anode. Layer **802** represents a lithium-stuffed garnet layer. Layer **803** represents a bonding layer. Layer **805** represents a positive electrode layer.

### EXAMPLE 3 - MAKING AN ELECTROCHEMICAL CELL WITH A BUFFER LAYER

**Step One (1):** A solid-state positive electrode layer (cathode layer, SSC) was prepared. A slurry was prepared with 30-80 weight % solid loading in 20-70 % toluene. The solid loading comprised 70-95 wt % lithium-zirconium-oxide (LZO)-coated lithiated nickel-cobalt-aluminum oxide active material (NCA), 13 wt % LSTPS and 2 wt % binder. The LSTPS composition was characterized as LiₐSi_{b}Sn_{c}P_{d}Sₑ, wherein a is 4, b is 0.5, c is 0.5, d is 1, and e is 8, and further it comprised an oxygen element from greater than 0 to 15 atomic %, and was prepared as described in US Patent No. 9,172,114, which issued October 27, 2015, and is titled SOLID STATE CATHOLYTES AND ELECTROLYTES FOR ENERGY STORAGE DEVICES.

The slurry was cast using a doctor blade on carbon-coated aluminum foil. The resulting cast slurry was dried at room temperature to 120°C for 1-24 hours to form a positive electrode layer film on the carbon coated Al foil.

**Step Two (2):** A sulfide layer which was later placed in contact with the solid-state positive electrode layer was prepared. A slurry was prepared with 10-70 wt % LSTPS in toluene. The slurry was cast using a doctor blade casting method on Ni foil. The resulting cast slurry was dried at room temperature to 120°C for 1-24 hours to form a buffer layer film. In this example, the buffer layer included the same chemical composition LSTPS as was used in the positive electrode layer. Without being bound to theory, it was proposed that this layer was not conductive to electrons (has an electron conductivity less than 1E-6 S/cm). This buffer layer thereby shields the negative electrode (anode) potential from the positive electrode layer.

**Step Three (3):** The two layers of **step (1)** and **step (2)** were put on top of each other such that the sulfide layer and the cathode layer were in direct contact with each other to produce a stack (Nickel film-buffer layer - positive electrode layer - aluminum film).

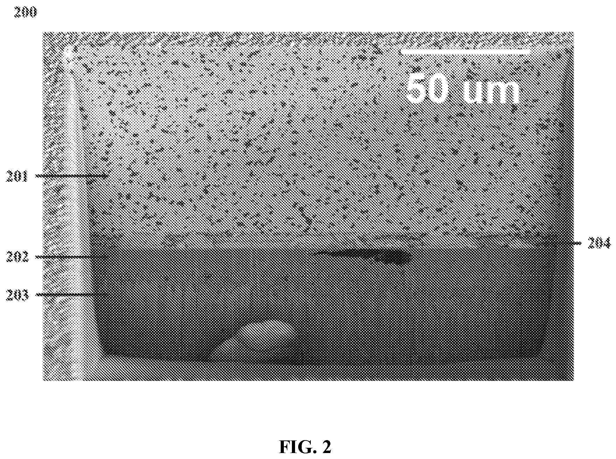

**Step Four (4):** The stack of **step (3)** is placed on an aluminum guide foil. The film is passed through a calender at 1.0 meters/min, 140°C, and ~100-110bar (10-11 MPa) hydraulic pressure (to apply 1100-1200N/mm). Saueressig GK 300 L or Ono Roll Type 12 calenders were used. Once calendered, the sulfide layer was transferred onto the cathode layer and both layers were densified together in one step. The result is shown in the image in **FIG. 2****.** The carbon-coated aluminum foil also bonded to the aluminum guide foil during calendering and formed a first current collector on the side of the SSC.

The stack from **step (4)** was incorporated into an electrochemical cell comprising a lithium-stuffed garnet separator for testing.

The lithium-stuffed garnet layer was made according to the methods of forming a layer or film of the lithium-stuffed garnet in US Patent Nos. 9,806,372 B2, which issued October 31, 2017, and is titled GARNET materials FOR LI SECONDARY BATTERIES AND METHODS OF MAKING and USING GARNET MATERIALS, and 9,970,711, which issued May 15, 2018, and is titled LITHIUM STUFFED GARNET SETTER PLATES FOR SOLID ELECTROLYTE FABRICATION.

**Step Six (6):** The lithium-stuffed garnet film was placed on top of the stack resulting from **step four (4),** so that the lithium-stuffed garnet film was in direct contact with the buffer layer. This stack was then densified by applying pressure of approximately 500 pounds per square inch (PSI) and at a temperature of 140 °C. The stack was then cooled to room temperature..

**Step seven (7):** Lithium metal was evaporated onto the lithium-stuffed garnet (30 µm of evaporated lithium) to form a lithium metal negative electrode in the stack resulting from **step six (6),** and the stack was adhered to a negative electrode current collector, to form an electrochemical cell. In some cells, a negative electrode current was adhered directly onto the lithium-stuffed garnet film and lithium, from the positive electrode, was plated out between the lithium-stuffed garnet film and the negative electrode current collector.

### EXAMPLE 4 - MAKING AN ELECTROCHEMICAL CELL WITH A BUFFER LAYER AND A BOROHYDRIDE LAYER

**Step One (1):** A solid-state positive electrode layer (cathode layer, SSC) was prepared. A slurry was prepared with 30-80 weight % solid loading in 20-70 % toluene. The solid loading comprised 70-95 wt % lithium-zirconium-oxide (LZO)-coated lithiated nickel-cobalt-aluminum oxide active material (NCA), 13 wt % LSTPS and 2 wt % binder. The LSTPS composition was characterized as LiₐSi_{b}Sn_{c}P_{d}Sₑ, wherein a is 5, b is 0.75, c is 0.25, d is 1, and e is 6, and further it comprised an oxygen element from greater than 0 to 15 atomic %, and was prepared as described in US Patent No. 9,172,114, which issued October 27, 2015, and is titled SOLID STATE CATHOLYTES AND ELECTROLYTES FOR ENERGY STORAGE DEVICES.

The slurry was cast using a doctor blade on carbon-coated aluminum foil. The resulting cast slurry was dried at room temperature to 120°C for 1-24 hours to form a positive electrode layer film on the carbon coated Al foil.

**Step Two (2):** A sulfide layer which was later placed in contact with the solid-state positive electrode layer was prepared. A slurry was prepared with 10-70 wt % LSTPS in toluene. The slurry was cast using a doctor blade casting method on Ni foil. The resulting cast slurry was dried at room temperature to 120°C for 1-24 hours to form a buffer layer film. In this example, the buffer layer included the same chemical composition LSTPS as was used in the positive electrode layer. Without being bound to theory, it was proposed that this layer was not conductive to electrons (had an electron conductivity less than 1E-6 S/cm). This buffer layer thereby shielded the negative electrode (anode) potential from the positive electrode layer.

**Step Three (3):** The two layers of **step (1)** and **step (2)** were put on top of each other such that the sulfide layer and the cathode layer are in direct contact with each other to produce a stack (Nickel film-buffer layer - positive electrode layer - aluminum film).

**Step Four (4):** The stack of **step (3)** is placed on an aluminum guide foil. The film is passed through a calender at 1.0 meters/min, 140°C, and ~100-110bar (10-11 MPa) hydraulic pressure (to apply 1100-1200N/mm). Saueressig GK 300 L or Ono Roll Type 12 calenders were used. Once calendered, the sulfide layer was transferred onto the cathode layer and both layers were densified together in one step. The carbon-coated aluminum foil also bonded to the aluminum guide foil during calendering and formed a first current collector on the side of the SSC.

The stack from **step (4)** was incorporated into an electrochemical cell comprising a garnet separator and a borohydride bonding layer for testing.

**Step Five (5):** The lithium-stuffed garnet layer was made according to the methods of forming a layer or film of the lithium-stuffed garnet in US Patent Nos. 9,806,372 B2, which issued October 31, 2017, and is titled GARNET materials FOR LI SECONDARY BATTERIES AND METHODS OF MAKING and USING GARNET MATERIALS, and 9,970,711, which issued May 15, 2018, and is titled LITHIUM STUFFED GARNET SETTER PLATES FOR SOLID ELECTROLYTE FABRICATION.

**Step Six (6):** An borohydride bonding layer was prepared. The borohydride composition used to form the borohydride bonding layer was described according to International PCT Patent Application No. PCT/US2017/057735, filed October 20, 2017, and entitled ELECTROLYTE SEPARATORS INCLUDING LITHIUM BOROHYDRIDE AND COMPOSITE ELECTROLYTE SEPARATORS OF LITHIUM-STUFFED GARNET AND LITHIUM BOROHYDRIDE; also International PCT Patent Application No. PCT/US2017/057739, filed October 20, 2017, and entitled BOROHYDRIDE-SULFIDE INTERFACIAL LAYER IN ALL SOLID-STATE BATTERY. The composition, 3LiBH₄·2LiCl·3LiNH₂, was melted and spin-coated onto the lithium-stuffed garnet film prepared in **step five (5).**

**Step Seven (7):** The lithium-stuffed garnet film having a LBHIN spin-coated layer thereupon, was placed on top of the stack resulting from **step four (4),** so that the LBHIN borohydride bonding layer was in direct contact with the buffer layer. This stack was then densified by applying pressure of approximately 1000 pounds per square inch (PSI) and at a temperature of 140 °C. The stack was then cooled to room temperature. **FIG. 3** shows an SEM FIB image of the resulting stack

**Step Eight (8):** Lithium metal was evaporated onto the lithium-stuffed garnet (30 µm of evaporated lithium) to form a lithium metal negative electrode in the stack resulting from **step seven (7),** and the stack was adhered to a negative electrode current collector, to form an electrochemical cell. In some cells, a negative electrode current was adhered directly onto the lithium-stuffed garnet film and lithium, from the positive electrode, was plated out between the lithium-stuffed garnet film and the negative electrode current collector.

### EXAMPLE 5

A LBHI powder was prepared by mixing three (3) molar parts LiBH₄ with one (1) molar part LiI. The mixture was then subjected to two (2) millings in zirconia vessels at 300 rpm for 8 h, followed by annealing at 300 °C in a sealed vessel and cooled to room temperature to form a mixed and annealed LBHI powder.

A thin garnet film (Li-stuffed garnet characterized as approximately Li₇₋ₓLa₃Zr₂O₁₂Al₂O₃) was prepared as follows. Garnet precursors were mixed in a molar ratio of 6-7: 1.5 : 2 : 0.1-1.5 of LiOH, ZrO₂, La₂O₃, and boehmite. The mixed precursors were milled in a ball mill and calcined at 700-1000 °C for 1-10 hours to form the cubic garnet phase with second phases. The powder was milled in a wet mill with solvent, surfactant, and dispersant. A binder solution was prepared by dissolving binder in the same solvent. The binder solution and powder slurry were mixed and tape cast on a Mylar substrate with a doctor blade of gap height 10-300um to form a cast green tape. The green tape was released from the substrate, cut to the desired size, sintered between setters at 800-1200°C for 1-10 hours and cooled to form a sintered garnet thin film.

Mixed and annealed LBHI powder (1-4 g) was heated to 300-350 °C under an argon atmosphere in a boron nitride or alumina crucible placed in a stainless steel heating block equipped with a band heater for about 2 h until the LBHI powder melted. The thin garnet film was dip-coated once into molten LBHI, at 300-350 °C, under argon with a dwell time of 600 s. The thin garnet film was then withdrawn from the molten LBHI at a rate of 0.05-300 mm min⁻¹ and allowed to cool under argon for 5 s to 5 min to provide a dip-coated LBHI garnet.

### EXAMPLE 6

LBHI was prepared and heated to 300-350 °C, as in Example 5. A thin copper current collector foil was then dip-coated once into the molten LBHI at 300-350 °C under argon with a dwell time of 600 s. The copper was then withdrawn from the molten LBHI at a rate of 0.05-300 mm min⁻¹ and allowed to cool under argon for 5 s to 5 min to provide a dip-coated LBHI copper.

### EXAMPLE 7

Dip-coated LBHI-garnet was prepared as in Example 5. ASR and calendar life were tested as follows. Uncoated garnet and dip-coated LBHI garnet were contacted on both sides with Li electrodes (8 mm contact area) and were subjected to 0.5 mA cm² current density with 30 s pulses twice daily (forward and reverse) at 80 °C and 300 PSI.

### EXAMPLE 8

Separators (uncoated garnet films or LBHI-coated garnet films prepared according to Example 6) were placed in a symmetric electrochemical cell with Li-metal electrodes on both sides of the samples. 5000 PSI of hydrostatic pressure was uniaxially applied to both sides of the cells under controlled temperature and under argon. Then, 5 cycles of 20 planar microns of lithium (approximately 4 mAh/cm²) at 2 mA/cm² at 80 °C were passed over an 8 mm electrode contact area. For surviving (non-shorted samples), the current was increased to 3 mAh/cm² at 80 °C. For surviving samples, the current was then increased to 4 mAh/cm² at 80 °C followed by increasing to 5 mAh/cm² at 80 °C for surviving samples.

### EXAMPLE 9

LBHClN was prepared by mixing three (3) molar parts LiBH₄ , three (3) molar parts of LiNH₂, with one (1) molar part LiCl. The mixture was then subjected to two (2) millings in zirconia vessels at 300 rpm for 8 h, followed by annealing in a sealed vessel at 180 °C for 2 hours and cooling to form a LBHClN powder.

Lithium-stuffed garnet film was prepared as in Example 5 and lithium metal was applied on one side. Then the LBHClN powder was dropped on the other side of the lithium-stuffed garnet film. The lithium-stuffed garnet with LBHClN powder on it was then heated to 80-140°C at which point the LBHClN powder melted.

A Sulfide containing solid-state cathode film (SSC) was prepared. The SSC included a sulfide catholyte, LSTPS, and cathode active materials (NCA) with a LSTPS:NCA volumetric ratio of approximately 1/3 and 2/3. A small amount of carbon and binder, about 0-5 wt%, was added to the LSTPS and NCA. These resulting combination of LSTPS/NCA/carbon/binder was suspended in toluene at a mass loading of 20% powder in toluene. Then the suspension was mixed using a Flacktek and Filmix for 15 mins and 6 mins, respectively. The mixture then was casted on to carbon-coated aluminum foil and allowed to dry in an argon atmosphere until toluene evaporated. The film was punched to the desired size. The SSC film was densified at 180 °C under pressure of 300,000 PSI.

Then the SSC film was placed on top of the melted LBHClN powder. The SSC film was then pressed at 10-2000 pounds per square inch (PSI) while being cooled to room temperature. The cell was cycled at C/10 rate, at 45°C.

### EXAMPLE 10

An LBHXN powder was fabricated as above, where X was be Cl, Br, or I, or a mixture thereof. Spin casting was used to deposit the bonding layer of LBHXN thin film on to a lithium-stuffed garnet. In this procedure, a small amount of LBHXN powder was applied to the center of the lithium-stuffed garnet, which was on a chuck of a spin coater heated to the LBHXN melting temperature (~100-280 °C). LBHXN melted once the melting temperature was reached. A flat spatula was used to cast the melted LBHXN on the substrate to cover the area. The spin coater was turned on to the speed of 100 rpm to 5000 rpm while the chuck was still at the temperature needed to melt LBHXN. The spin coater was turned off after 1-10 min. After cooling to room temperature, a uniform coating of LBHXN was achieved on the substrate.

### EXAMPLE 11

To a mixture of LSTPS powder is added an organic, non-aqueous, aprotic solvent to form a slurry with a solid loading of at least about 35%. The slurry is then casted with a coater and coated onto a metal foil. The buffer layer is then placed in contact with a layer of cathode material. The layers are densified with a force of at least about 1000 psi, or more.

### EXAMPLE 12

The composition LiNH₂:LiBH₄:LiI (3:3:2) was coated on a solid-state cathode film by the drop casting method. Specifically, LBHIN powder was prepared and cast on a densified solid-state cathode. An uncoated lithium-stuffed film (made according to Example 5) was pressed on the LBHIN layer at 20-2000 PSI and 20-350°C.

### EXAMPLE 13

A solid-state positive electrode layer (cathode layer, SSC) was prepared. A slurry was prepared with 30-80 weight % solid loading in 20-70 % toluene. The solid loading comprised 70-95 wt % lithium-zirconium-oxide (LZO)-coated lithiated nickel-cobalt-aluminum oxide active material (NCA), 13 wt % LSTPS and 2 wt % binder. The LSTPS composition was characterized as LiₐSi_{b}Sn_{c}P_{d}Sₑ, wherein a is 5, b is 0.75, c is 0.25, d is 1, and e is 6, and further it comprised an oxygen element from greater than 0 to 15 atomic %, and was prepared as described in US Patent No. 9,172,114, which issued October 27, 2015, and is titled SOLID STATE CATHOLYTES AND ELECTROLYTES FOR ENERGY STORAGE DEVICES.

Lithium-stuffed garnet film was prepared as in Example 5 and lithium metal was applied on one side.

LPSI was cast onto the side of the lithium-stuffed garnet film which was opposite the side having lithium metal.

The thickness of the lithium-stuffed garnet film was about 100 µm. The thickness of the cathode was about 150 µm. The thickness of the LPSI was about 10 µm.

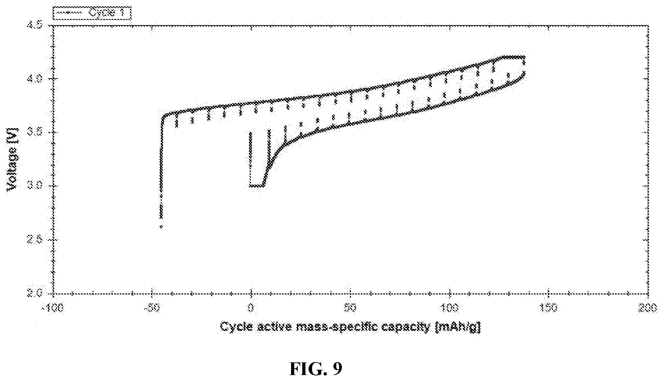

The resulting electrochemical cell was cycled at rate of C/10 at 45°C under 300 psi. The results are shown in **FIG. 9****.**

The embodiments and examples described above are intended to be merely illustrative and non-limiting.

## Claims

1. A solid-state electrochemical cell (SSEC), comprising:
(a) a positive electrode layer comprising an active material and a sulfide catholyte;
(b) a single ion conducting, solid-state buffer;
(c) a borohydride bonding layer; and
(d) a lithium-stuffed garnet layer;
wherein:
the buffer is a layer in contact with the positive electrode layer, or
the buffer is mixed within the positive electrode layer and the buffer is a layer in contact with the positive electrode layer;
wherein the borohydride bonding layer is between and in contact with the lithium-stuffed garnet layer and the buffer layer in contact with the positive electrode; wherein the buffer layer does not conduct electrons and thereby shields the positive electrode potential from the potential experienced by the borohydride bonding layer.

2. The SSEC of claim 1, wherein the single ion conducting, solid-state buffer is mixed within the positive electrode layer; or wherein the single ion conducting, solid-state buffer is a layer in contact with the positive electrode layer; or wherein the single ion conducting, solid-state buffer layer prevents direct contact between the borohydride bonding layer and the positive electrode layer.

3. The SSEC of any one of claims 1-2, wherein the buffer is mixed within the positive electrode layer and the buffer is a layer in contact with the positive electrode layer.

4. The SSEC of any one of claims 1-3, further comprising a negative electrode; optionally wherein the negative electrode is a lithium (Li) metal negative electrode.

5. The SSEC of claim 4, wherein the lithium-stuffed garnet layer contacts the negative electrode.

6. The SSEC of any one of claims 1-5, wherein the buffer layer comprises an organic polymer at 10% by volume or less.

7. The SSEC of any one of claims 1-6, wherein the active material is coated; or wherein the positive electrode comprises a lithium intercalation material, a lithium conversion material, or both a lithium intercalation material and a lithium conversion material.

8. The SSEC of any one of claims 1-7, wherein the sulfide catholyte or the single ion conducting, solid-state buffer, or both, are selected from the group consisting of LSS, SLOPS, LSTPS, LSTPSCl, SLOBS, LATS, and LPS+X, wherein X is selected from the group consisting of Cl, I, Br, and combinations thereof; wherein the sulfide catholyte comprises LSTPS; or wherein the sulfide catholyte is **characterized by** the following formula: LiₐSi_{b}Sn_{c}P_{d}Sₑ, wherein 2≤a≤8, 0≤b≤1, 0≤c≤1, 0.5≤d≤2.5, and 2≤e≤12; wherein:
LSS refers to lithium silicon sulfide which can be described as Li₂S-SiS₂, Li-SiS₂, Li-S-Si, and/or a catholyte consisting essentially of Li, S, and Si; LSS refers to an electrolyte material **characterized by** the formula LiₓSiy S_{z} where 0.33≤x<0.5, 0.1 ≤y<0.2, 0.4≤z<0.55, and it may include up to 10 atomic % oxygen;
SLOPS refers to a 60:40 molar ratio of Li₂S: SiS₂ with 0.1-10 mol. % Li₃PO₄;
LSTPS refers to an electrolyte material having Li, Si, P, Sn, and S chemical constituents;
LSTPSCl refers to LSTPS, defined above, and further including Cl;
SLOBS refers to a 60:40 molar ratio of Li₂S:SiS₂ with 0.1-10 mol. % LiBH₄;
LATS refers to a lithium tin sulfide compound which can be described as Li₂S: SnS₂:As₂Ss, Li₂S-SnS₂, Li₂S-SnS, Li-S-Sn, and/or a catholyte consisting essentially of Li, S, and Sn, and further including Arsenic (As); and
LPS+X refers to a lithium conducting electrolyte comprising Li, P, S, and X, defined above.

9. The SSEC of any one of claims 1-8, wherein the sulfide catholyte or the single ion conducting, solid-state buffer, or both, are **characterized by** one of the following formula:
LiₐSi_{b}Sn_{c}P_{d}Sₑ, wherein 2≤a≤8, 0≤b≤1, 0≤c≤1, 0.5≤d≤2.5, and 2≤e≤12; LiₐSi_{b}P_{c}S_{d}Xₑ, wherein 8<a<12, 1 <b<3, 1<c<3, 8<d<14, and 0<e<1, wherein X is F, Cl, Br, or I;
Li_{g}AsₕSnⱼSₖOₗ, wherein 2≤g≤6, 0≤h≤1, 0≤j≤1, 2≤k≤6, and 0≤l≤10; or
LiₘPₙSₚI_{q}, wherein 2≤m≤6, 0≤n≤1, 0≤p≤ 1, 2≤q≤ 6;
a mixture of (Li₂S):(P₂S₅) having a molar ratio of Li₂S:P₂S₅ from about 10:1 to about 6:4 and Lil, wherein the ratio of [(Li₂S):(P₂S₅)]:LiI is from 95:5 to 50:50;
LPS+X, wherein X is selected from Cl, I, or Br;
vLi₂S+wP₂S₅+ yLiX;
vLi₂S+wSiS₂+ yLiX; or
vLi₂S+wB₂S₃+ yLiX, wherein X is selected from Cl, I, or Br, wherein 0≤v≤1; 0≤w≤1; and 0≤y≤1.

10. The SSEC of any one of claims 1-9, wherein the borohydride bonding layer comprises a borohydride composition comprising:
A·(LiBH₄)·B·(LiX)·C·(LiNH₂),
wherein X is fluorine, bromine, chlorine, iodine, or a combination thereof, and
wherein 3≤A≤6, 2≤B≤5, and 0≤C≤9.

11. The SSEC of any one of claims 1-10, wherein the lithium-stuffed garnet layer comprises a lithium-stuffed garnet selected from LiₓLa_{y}Zr_{z}Oₜ·qAl₂O₃, wherein 4<x<10, 1<y<4, 1<z<3, 6<t<14, and 0≤q≤1.

12. The SSEC of any one of claims 1-11, further comprising a positive electrode current collector layer; further comprising a negative electrode current collector layer; or further comprising a positive electrode current collector layer and a negative electrode current collector layer.

13. A battery comprising the SSEC of any one of claims 1-12.

14. A method of making an electrochemical cell according to any one of claims 1-12, comprising the steps of :
providing a slurry comprising an active material, a catholyte, and a solvent;
depositing the slurry onto a current collector;
drying the slurry;
providing a second slurry comprising a single ion conducting, solid-state buffer;
depositing the second slurry onto a substrate;
drying the second slurry;
transferring the dried second slurry onto the first slurry once dried to form a stack;
applying pressure and heat to the stack;
providing a solid-state separator;
depositing a borohydride layer onto the solid-state separator;
combining the stack with the solid-state separator having a borohydride layer thereupon to form an electrochemical cell stack; and applying pressure and heat to the cell stack.

## Patentansprüche

1. Elektrochemische Festkörperzelle (SSEC), umfassend:
(a) eine positive Elektrodenschicht, die ein aktives Material und einen Sulfidkatholyten umfasst;
(b) einen einzelionenleitenden Festkörperpuffer;
(c) eine Borhydrid-Bindungsschicht; und
(d) eine mit Lithium gefüllte Granatschicht;
wobei:
der Puffer eine Schicht in Kontakt mit der positiven Elektrodenschicht ist oder
der Puffer innerhalb der positiven Elektrodenschicht gemischt ist und der Puffer eine Schicht in Kontakt mit der positiven Elektrodenschicht ist;
wobei die Borhydrid-Bindungsschicht zwischen und in Kontakt mit der mit Lithium gefüllten Granatschicht und der Pufferschicht in Kontakt mit der positiven Elektrode ist; wobei die Pufferschicht keine Elektronen leitet und dadurch das positive Elektrodenpotential von dem Potential abschirmt, das von der Borhydrid-Bindungsschicht erfahren wird.

2. SSEC nach Anspruch 1, wobei der einzelionenleitende Festkörperpuffer innerhalb der positiven Elektrodenschicht gemischt ist; oder wobei der einzelionenleitende Festkörperpuffer eine Schicht in Kontakt mit der positiven Elektrodenschicht ist; oder wobei die einzelionenleitende Festkörperpufferschicht direkten Kontakt zwischen der Borhydrid-Bindungsschicht und der positiven Elektrodenschicht verhindert.

3. SSEC nach einem der Ansprüche 1-2, wobei der Puffer innerhalb der positiven Elektrodenschicht gemischt ist und der Puffer eine Schicht in Kontakt mit der positiven Elektrodenschicht ist.

4. SSEC nach einem der Ansprüche 1-3, ferner umfassend eine negative Elektrode; wobei optional die negative Elektrode eine negative Lithium-(Li-)Metall-Elektrode ist.

5. SSEC nach Anspruch 4, wobei die mit Lithium gefüllte Granatschicht die negative Elektrode berührt.

6. SSEC nach einem der Ansprüche 1-5, wobei die Pufferschicht ein organisches Polymer mit 10 Vol.-% oder weniger umfasst.

7. SSEC nach einem der Ansprüche 1-6, wobei das aktive Material beschichtet ist; oder wobei die positive Elektrode ein Lithiumeinlagerungsmaterial, ein Lithiumumwandlungsmaterial oder sowohl ein Lithiumeinlagerungsmaterial als auch ein Lithiumumwandlungsmaterial umfasst.

8. SSEC nach einem der Ansprüche 1-7, wobei der Sulfidkatholyt oder der einzelionenleitende Festkörperpuffer oder beide aus der Gruppe bestehend aus LSS, SLOPS, LSTPS, LSTPSCl, SLOBS, LATS und LPS+X ausgewählt sind, wobei X aus der Gruppe bestehend aus Cl, I, Br und Kombinationen davon ausgewählt ist; wobei der Sulfidkatholyt LSTPS umfasst; oder wobei der Sulfidkatholyt durch die folgende Formel gekennzeichnet ist: LiₐSi_{b}Sn_{c}P_{d}Sₑ, wobei 2 ≤ a ≤ 8, 0 ≤ b ≤ 1, 0 ≤ c ≤ 1, 0,5 ≤ d ≤ 2,5 und 2 ≤ e ≤ 12; wobei:
sich LSS auf Lithiumsiliziumsulfid bezieht, das als Li₂S-SiS₂, Li-SiS₂, Li-S-Si und/oder ein Katholyt, der im Wesentlichen aus Li, S und Si besteht, beschrieben werden kann; sich LSS auf ein Elektrolytmaterial bezieht, das durch die Formel LiₓSiy S_{z} gekennzeichnet ist, wobei 0,33 ≤ x < 0,5, 0,1 ≤ y < 0,2, 0,4 ≤ z < 0,55, und es bis zu 10 Atom-% Sauerstoff enthalten kann;
sich SLOPS sich auf ein 60:40-Molverhältnis von Li₂S:SiS₂ mit 0,1-10 Mol-% Li₃PO₄ bezieht;
sich LSTPS auf ein Elektrolytmaterial mit chemischen Bestandteilen von Li, Si, P, Sn und S bezieht;
sich LSTPSCl auf LSTPS bezieht, wie oben definiert, und ferner Cl beinhaltet;
sich SLOBS auf ein 60:40-Molverhältnis von Li₂S:SiS₂ mit 0,1-10 Mol.-% LiBH₄ bezieht;
sich LATS auf eine Lithiumzinnsulfidverbindung, die als Li₂S:SnS₂:As₂Ss, Li₂S-SnS₂, Li₂S-SnS, Li-S-Sn beschrieben werden kann, und/oder ein Katholyt, der im Wesentlichen aus Li, S und Sn besteht und ferner Arsen (As) enthält, bezieht; und
sich LPS+X auf einen lithiumleitenden Elektrolyten bezieht, der Li, P, S und X, wie vorstehend definiert, umfasst.

9. SSEC nach einem der Ansprüche 1-8, wobei der Sulfidkatholyt oder der einzelionenleitende Festkörperpuffer oder beide durch eine der folgenden Formeln gekennzeichnet sind:
LiₐSi_{b}Sn_{c}P_{d}Sₑ, wobei 2 ≤ a ≤ 8, 0 ≤ b ≤ 1, 0 ≤ c ≤ 1, 0,5 ≤ d ≤ 2,5 und 2 ≤ e ≤ 12;
LiₐSi_{b}P_{c}S_{d}Xₑ, wobei 8 < a < 12, 1 < b < 3, 1 < c < 3, 8 < d < 14 und 0 < e < 1, wobei X F, Cl, Br oder I ist;
Li_{g}AsₕSnⱼSₖOₗ, wobei 2 ≤ g ≤ 6, 0 ≤ h ≤ 1, 0 ≤ j ≤ 1, 2 ≤ k ≤ 6 und 0 ≤ 1 ≤ 10; oder
LiₘPₙSₚI_{q}, wobei 2 ≤ m ≤ 6, 0 ≤ n ≤ 1, 0 ≤ p ≤ 1, 2 ≤ q ≤ 6;
ein Gemisch aus (Li₂S):(P₂S₅) mit einem Molverhältnis von Li₂S:P₂S₅ von etwa 10:1 bis etwa 6:4 und LiI, wobei das Verhältnis von [(Li₂S):(P₂S₅)]:LiI 95:5 bis 50:50 beträgt;
LPS+X, wobei X aus Cl, I oder Br ausgewählt ist;
vLi₂S+wP₂S₅+ yLiX;
vLi₂S+wSiS₂+ yLiX; oder
vLi₂S+wB₂S₃+ yLiX, wobei X aus Cl, I oder Br ausgewählt ist, wobei 0 ≤ v ≤ 1; 0 ≤ w ≤ 1; und 0 ≤ y ≤ 1.

10. SSEC nach einem der Ansprüche 1-9, wobei die Borhydrid-Bindeschicht eine Borhydrid-Zusammensetzung umfasst, umfassend:
A·(LiBH₄)·B·(LiX)·C·(LiNH₂),
wobei X Fluor, Brom, Chlor, Iod oder eine Kombination davon ist und wobei 3 ≤ A ≤ 6, 2 ≤ B ≤ 5 und 0 ≤ C ≤ 9.

11. SSEC nach einem der Ansprüche 1-10, wobei die mit Lithium gefüllte Granatschicht einen mit Lithium gefüllten Granat umfasst, ausgewählt aus LiₓLa_{y}Zr_{z}Oₜ·qAl₂O₃, wobei 4 < x < 10, 1 < y < 4, 1 < z < 3, 6 < t < 14 und 0 ≤ q ≤ 1.

12. SSEC nach einem der Ansprüche 1-11, ferner umfassend eine positive Elektrodenstromsammlerschicht; ferner umfassend eine negative Elektrodenstromsammlerschicht; oder ferner umfassend eine positive Elektrodenstromsammlerschicht und eine negative Elektrodenstromsammlerschicht.

13. Batterie, umfassend die SSEC nach einem der Ansprüche 1-12.

14. Verfahren zum Herstellen einer elektrochemischen Zelle gemäß einem der Ansprüche 1-12, umfassend die folgenden Schritte:
Bereitstellen einer Aufschlämmung, die ein aktives Material, einen Katholyten und ein Lösungsmittel umfasst;
Auftragen der Aufschlämmung auf einen Stromkollektor;
Trocknen der Aufschlämmung;
Bereitstellen einer zweiten Aufschlämmung, die einen einzelionenleitenden Festkörperpuffer umfasst;
Auftragen der zweiten Aufschlämmung auf ein Substrat;
Trocknen der zweiten Aufschlämmung;
Übertragen der getrockneten zweiten Aufschlämmung auf die erste Aufschlämmung, sobald sie getrocknet ist, um einen Stapel zu bilden;
Aufbringen von Druck und Wärme auf den Stapel;
Bereitstellen eines Festkörperseparators;
Auftragen einer Borhydridschicht auf den Festkörperseparator;
Kombinieren des Stapels mit dem Festkörperseparator, der eine Borhydridschicht darauf aufweist, um einen elektrochemischen Zellenstapel zu bilden; und Aufbringen von Druck und Wärme auf den Zellenstapel.

## Revendications

1. Cellule électrochimique à l'état solide (SSEC), comprenant :
(a) une couche d'électrode positive comprenant un matériau actif et un catholyte sulfuré ;
(b) un tampon à l'état solide conducteur d'un seul ion ;
(c) une couche de liaison de borohydrure ; et
(d) une couche de grenat chargé en lithium ;
dans laquelle :
le tampon est une couche en contact avec la couche d'électrode positive, ou
le tampon est mélangé dans la couche d'électrode positive et le tampon est une couche en contact avec la couche d'électrode positive ;
dans laquelle la couche de liaison de borohydrure est située entre la couche de grenat chargé en lithium et la couche tampon en contact avec l'électrode positive et en contact avec celles-ci ; dans laquelle la couche tampon ne conduit pas les électrons et protège ainsi le potentiel d'électrode positive du potentiel subi par la couche de liaison de borohydrure.

2. SSEC de la revendication 1, dans laquelle le tampon à l'état solide conducteur d'un seul ion est mélangé dans la couche d'électrode positive ; ou dans laquelle le tampon à l'état solide conducteur d'un seul ion est une couche en contact avec la couche d'électrode positive ; ou dans laquelle la couche tampon à l'état solide conductrice d'un seul ion empêche un contact direct entre la couche de liaison de borohydrure et la couche d'électrode positive.

3. SSEC de l'une quelconque des revendications 1 à 2, dans laquelle le tampon est mélangé dans la couche d'électrode positive et le tampon est une couche en contact avec la couche d'électrode positive.

4. SSEC de l'une quelconque des revendications 1 à 3, comprenant en outre une électrode négative ; éventuellement, dans laquelle l'électrode négative est une électrode négative en métal lithium (Li).

5. SSEC de la revendication 4, dans laquelle la couche de grenat chargé en lithium est en contact avec l'électrode négative.

6. SSEC de l'une quelconque des revendications 1 à 5, dans laquelle la couche tampon comprend un polymère organique à raison de 10 % en volume ou moins.

7. SSEC de l'une quelconque des revendications 1 à 6, dans laquelle le matériau actif est revêtu ; ou dans laquelle l'électrode positive comprend un matériau d'intercalation de lithium, un matériau de conversion de lithium, ou à la fois un matériau d'intercalation de lithium et un matériau de conversion de lithium.

8. SSEC de l'une quelconque des revendications 1 à 7, dans laquelle le catholyte sulfuré ou le tampon à l'état solide conducteur d'un seul ion, ou les deux, sont choisis dans le groupe constitué de LSS, SLOPS, LSTPS, LSTPSCl, SLOBS, LATS et LPS+X, où X est choisi dans le groupe constitué de Cl, I, Br et de combinaisons de ceux-ci ; dans laquelle le catholyte sulfuré comprend LSTPS ; ou dans laquelle le catholyte sulfuré est **caractérisé par** la formule suivante : LiₐSi_{b}Sn_{c}P_{d}Sₑ, où 2≤a≤8, 0≤b≤1, 0≤c≤1, 0,5≤d≤2,5 et 2≤e≤12 ; où :
LSS désigne un sulfure de lithium et de silicium qui peut être décrit comme Li₂S-SiS₂, Li-SiS₂, Li-S-Si, et/ou un catholyte constitué essentiellement de Li, S et Si ; LSS désigne un matériau électrolytique **caractérisé par** la formule LiₓSiy S_{z} où 0,33≤x<0,5, 0,1≤y<0,2, 0,4≤z<0,55, et il peut comprendre jusqu'à 10 % atomique d'oxygène ;
SLOPS désigne un rapport molaire de 60:40 de Li₂S:SiS₂ avec 0,1 à 10 % en moles de Li₃PO₄ ;
LSTPS désigne un matériau électrolytique comportant des constituants chimiques Li, Si, P, Sn et S ;
LSTPSCl désigne LSTPS, défini ci-dessus, et comprenant en outre Cl ;
SLOBS désigne un rapport molaire de 60:40 de Li₂S:SiS₂ avec 0,1 à 10 % en moles de LiBH₄ ;
LATS désigne un composé de sulfure de lithium et d'étain qui peut être décrit comme Li₂S:SnS₂:As₂Ss, Li₂S-SnS₂, Li₂S-SnS, Li-S-Sn, et/ou un catholyte constitué essentiellement de Li, S et Sn, et comprenant en outre de l'arsenic (As) ; et
LPS+X désigne un électrolyte conducteur de lithium comprenant Li, P, S et X, défini ci-dessus.

9. SSEC de l'une quelconque des revendications 1 à 8, dans laquelle le catholyte sulfuré ou le tampon à l'état solide conducteur d'un seul ion, ou les deux, sont **caractérisés par** l'une des formules suivantes :
LiₐSi_{b}Sn_{c}P_{d}Sₑ, où 2≤a≤8, 0≤b≤1, 0≤c≤1, 0,5≤d≤2,5 et 2≤e≤12 ; LiₐSi_{b}P_{c}S_{d}Xₑ,
où 8<a<12, 1<b<3, 1<c<3, 8<d<14 et 0<e<1, où X est F, Cl, Br ou I ;
Li_{g}AsₕSnⱼSₖOₗ, où 2≤g≤6, 0≤h≤1, 0≤j≤1, 2≤k≤6, et 0≤l≤10 ; ou
LiₘPₙSₚI_{q}, où 2≤m≤6, 0≤n≤1, 0≤p≤1, 2≤q≤6 ;
un mélange de (Li₂S):(P₂S₅) ayant un rapport molaire de Li₂S:P₂S₅ d'environ 10:1 à environ 6:4 et de LiI, où le rapport de [(Li₂S):(P₂S₅)]:LiI est de 95:5 à 50:50 ;
LPS+X, où X est choisi parmi Cl, I ou Br ;
vLi₂S+wP₂S₅+yLiX ;
vLi₂S+wSiS₂+yLiX ; ou
vLi₂S+wB₂S₃+yLiX, où X est choisi parmi Cl, I ou Br, où 0≤v≤1 0≤w≤1 ; et 0≤y≤1.

10. SSEC de l'une quelconque des revendications 1 à 9, dans laquelle la couche de liaison de borohydrure comprend une composition de borohydrure comprenant :
A·(LiBH₄)·B·(LiX)·C·(LiNH₂),
où X est un fluor, un brome, un chlore, un iode ou une combinaison de ceux-ci, et
où 3≤A≤6, 2≤B≤5 et 0≤C≤9.

11. SSEC de l'une quelconque des revendications 1 à 10, dans laquelle la couche de grenat chargé en lithium comprend un grenat chargé en lithium choisi parmi LiₓLa_{y}Zr_{z}Oₜ·qAl₂O₃, où 4<x<10, 1<y<4, 1<z<3, 6<t<14, et 0≤q≤1.

12. SSEC de l'une quelconque des revendications 1 à 11, comprenant en outre une couche de collecteur de courant d'électrode positive ; comprenant en outre une couche de collecteur de courant d'électrode négative ; ou comprenant en outre une couche de collecteur de courant d'électrode positive et une couche de collecteur de courant d'électrode négative.

13. Batterie comprenant la SSEC de l'une quelconque des revendications 1 à 12.

14. Procédé de fabrication d'une cellule électrochimique selon l'une quelconque des revendications 1 à 12, comprenant les étapes de :
fourniture d'une suspension comprenant un matériau actif, un catholyte et un solvant ;
dépôt de la suspension sur un collecteur de courant ;
séchage de la suspension ;
fourniture d'une seconde suspension comprenant un tampon à l'état solide conducteur d'un seul ion ;
dépôt de la seconde suspension sur un substrat ;
séchage de la seconde suspension ;
transfert de la seconde suspension séchée sur la première suspension une fois celle-ci séchée pour former un empilement ;
application de pression et de chaleur à l'empilement ;
fourniture d'un séparateur à l'état solide ;
dépôt d'une couche de borohydrure sur le séparateur à l'état solide ;
combinaison de l'empilement avec le séparateur à l'état solide portant une couche de borohydrure sur celui-ci pour former un empilement de cellules électrochimiques ; et
application de pression et de chaleur à l'empilement de cellules.
